(19) Europäisches Patentamt / European Patent Office / Office européen des brevets

(11) **EP 4 607 948 A1**

(12) **EUROPEAN PATENT APPLICATION**
published in accordance with Art. 153(4) EPC

(43) Date of publication:
**27.08.2025  Bulletin 2025/35**

(21) Application number: **23893331.1**

(22) Date of filing: **31.08.2023**

(51) International Patent Classification (IPC):
**H04Q 11/00** $^{(2006.01)}$

(52) Cooperative Patent Classification (CPC):
**H04B 10/556; H04B 10/61; H04L 1/00; H04Q 11/00**

(86) International application number:
**PCT/CN2023/116034**

(87) International publication number:
**WO 2024/109238 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2022  CN 202211495134
06.06.2023  CN 202310668432**

(71) Applicant: **Huawei Technologies Co., Ltd.
Shenzhen, Guangdong 518129 (CN)**

(72) Inventors:
• **HUANG, Kechao
  Shenzhen, Guangdong 518129 (CN)**
• **MA, Huixiao
  Shenzhen, Guangdong 518129 (CN)**

(74) Representative: **Huawei European IPR
Huawei Technologies Duesseldorf GmbH
Riesstraße 25
80992 München (DE)**

(54) **DATA TRANSMISSION METHOD AND DATA TRANSMISSION APPARATUS**

(57)    Embodiments of this application disclose a data transmission method and a data transmission apparatus. A simple target polynomial is designed to generate pilot symbols. Correspondingly, a simple hardware structure may be used for implementation. In addition, the generated pilot symbols have good autocorrelation and cross-correlation characteristics, and are direct current balanced, which helps a receiving end restore signal quality. Specifically, a generated data frame includes N symbols in a polarization direction, every M consecutive symbols in the N symbols include one pilot symbol at a fixed location and M-1 payload symbols, N=M×Q, Q is an even number, and M is an integer greater than or equal to 1. Q pilot symbols are generated by using the target polynomial and a seed, each pilot symbol is one of -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8.

FIG. 5

EP 4 607 948 A1

## Description

This application claims priorities to Chinese Patent Application No. 202211495134.6, filed with the China National Intellectual Property Administration on November 26, 2022 and entitled "DATA TRANSMISSION METHOD AND DATA TRANSMISSION APPARATUS", and to Chinese Patent Application No. 202310668432.9, filed with the China National Intellectual Property Administration on June 6, 2023 and entitled "DATA TRANSMISSION METHOD AND DATA TRANSMISSION APPARATUS", both of which are incorporated herein by reference in their entireties.

## TECHNICAL FIELD

This application relates to the communication field, and in particular, to a data transmission method and a data transmission apparatus.

## BACKGROUND

With continuous promotion of 5G, cloud computing, big data, and artificial intelligence, high-speed optical transport networks are developing toward high capacity, packetization, and intelligence. A coherent optical communication system uses amplitudes, phases, polarization, and frequencies of optical waves to carry information. To resist optical signal distortion caused by dispersion, polarization-dependent impairment, noise, non-linear effects, and other factors in a transmission process and maintain long-distance transmission, the coherent optical communication system usually adds some designed fixed symbol sequences to a transmission symbol sequence, so that a receiving end can restore a sent symbol.

An existing transmission symbol sequence is mainly used in a scenario of 400 Gbps, and cannot adapt to future scenarios over 400 Gbps (including 600 Gbps, 800 Gbps, and the like). In addition, solutions in the conventional technology have a problem that hardware implementation complexity is high, which needs to be resolved urgently in the future.

## SUMMARY

Embodiments of this application provide a data transmission method and a data transmission apparatus. A simple target polynomial is designed to generate pilot symbols. Correspondingly, a simple hardware structure may be used for implementation. In addition, the generated pilot symbols have good autocorrelation and cross-correlation characteristics, and are direct current balanced, which helps a receiving end restore signal quality.

According to a first aspect, an embodiment of this application provides a data transmission method. The method applied to a transmitting end includes the following steps. First, data frames are generated. In a polarization direction, the data frame includes N symbols, every M consecutive symbols in the N symbols include one pilot symbol at a fixed location and M-1 payload symbols, N=M×Q, Q is an even number, and M is an integer greater than or equal to 1. Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8. Then, the data frames are sent.

In the implementation, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that a simple target polynomial is designed in this application to generate the pilot symbols. Correspondingly, a simple hardware structure may be used for implementation. In addition, the pilot symbols generated in the foregoing manner have good autocorrelation and cross-correlation characteristics, and are direct current balanced. This helps a receiving end restore signal quality.

In some possible implementations, the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^{10}+x^8+x^7+x^6+x^2+x+1;$$

$$x^{10}+x^9+x^7+x^5+x^4+x^2+1;$$

$$x^{10}+x^9+x^8+x^4+x^3+x^2+1;$$

or

$$x^{10}+x^9+x^8+x^7+x^3+x^2+1.$$

In some possible implementations, the target polynomial is one of the following:

$$x^{10}+x^9+x^8+x^7+x^4+x+1;$$

or

$$x^{10}+x^9+x^6+x^3+x^2+x+1.$$

It should be understood that the foregoing polynomials have good differential autocorrelation and differential cross-correlation characteristics, and good correlation effects can still be achieved when there is a frequency difference between a laser at the transmitting end and a laser at the receiving end.

In some possible implementations, each pilot symbol is at a start location of M consecutive symbols in which the pilot symbol is located.

In some possible implementations, a sequence including Q pilot symbols in a first polarization direction is different from a sequence including Q pilot symbols in a second polarization direction, and the first polarization direction and the second polarization direction are orthogonal to each other. This avoids a problem that the receiving end cannot distinguish between two polarization directions in actual transmission.

In some possible implementations, N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;

the target polynomial: $x^9+x^4+x^3+x+1$, the seed in the first polarization direction: 0x002, and the seed in the second polarization direction: 0x02B;

the target polynomial: $x^9+x^4+x^3+x+1$, the seed in the first polarization direction: 0x049, and the seed in the second polarization direction: 0x115;

the target polynomial: $x^9+x^4+x^3+x+1$, the seed in the first polarization direction: 0x049, and the seed in the second polarization direction: 0x02B;

the target polynomial: $x^9+x^4+x^3+x+1$, the seed in the first polarization direction: 0x115, and the seed in the second polarization direction: 0x08D;

the target polynomial: $x^9+x^4+x^3+x+1$, the seed in the first polarization direction: 0x08D, and the seed in the second polarization direction: 0x02B;

the target polynomial: $x^9+x^5+x^4+x+1$, the seed in the first polarization direction: 0x098, and the seed in the second polarization direction: 0x0FE;

the target polynomial: $x^9+x^5+x^4+x+1$, the seed in the first polarization direction: 0x098, and the seed in the second polarization direction: 0x0BF;

the target polynomial: $x^9+x^5+x^4+x+1$, the seed in the first polarization direction: 0x098, and the seed in the second polarization direction: 0x17F;

the target polynomial: $x^9+x^5+x^4+x+1$, the seed in the first polarization direction: 0x14C, and the seed in the second polarization direction: 0x0FE;

the target polynomial: $x^9+x^5+x^4+x+1$, the seed in the first polarization direction: 0x14C, and the seed in the second polarization direction: 0x0BF;

the target polynomial: $x^9+x^5+x^4+x+1$, the seed in the first polarization direction: 0x14C, and the seed in the second polarization direction: 0x17F;

the target polynomial: $x^9+x^5+x^4+x+1$, the seed in the first polarization direction: 0x0A6, and the seed in the second polarization direction: 0x0FE;

the target polynomial: $x^9+x^5+x^4+x+1$, the seed in the first polarization direction: 0x0A6, and the seed in the second polarization direction: 0x0BF;

the target polynomial: $x^9+x^5+x^4+x+1$, the seed in the first polarization direction: 0x0A6, and the seed in the second polarization direction: 0x17F;

the target polynomial: $x^9+x^8+x^5+x^4+1$, the seed in the first polarization direction: 0x1D4, and the seed in the second polarization direction: 0x11E;

the target polynomial: $x^9+x^8+x^5+x^4+1$, the seed in the first polarization direction: 0x1D4, and the seed in the second polarization direction: 0x03D;

the target polynomial: $x^9+x^8+x^5+x^4+1$, the seed in the first polarization direction: 0x1D4, and the seed in the second polarization direction: 0x08F;

the target polynomial: $x^9+x^8+x^5+x^4+1$, the seed in the first polarization direction: 0x0EA, and the seed in the second polarization direction: 0x11E;

the target polynomial: $x^9+x^8+x^5+x^4+1$, the seed in the first polarization direction: 0x0EA, and the seed in the second polarization direction: 0x03D;

the target polynomial: $x^9+x^8+x^5+x^4+1$, the seed in the first polarization direction: 0x0EA, and the seed in the second polarization direction: 0x08F;

the target polynomial: $x^9+x^8+x^5+x^4+1$, the seed in the first polarization direction: 0x11E, and the seed in the second polarization direction: 0x175;

the target polynomial: $x^9+x^8+x^5+x^4+1$, the seed in the first polarization direction: 0x175, and the seed in the second polarization direction: 0x03D;

the target polynomial: $x^9+x^8+x^5+x^4+1$, the seed in the first polarization direction: 0x175, and the seed in the second polarization direction: 0x08F;

the target polynomial: $x^9+x^8+x^6+x^5+1$, the seed in the first polarization direction: 0x16A, and the seed in the second polarization direction: 0x1E1;

the target polynomial: $x^9+x^8+x^6+x^5+1$, the seed in the first polarization direction: 0x16A, and the seed in the second polarization direction: 0x1C3;

the target polynomial: $x^9+x^8+x^6+x^5+1$, the seed in the first polarization direction: 0x1E1, and the seed in the second polarization direction: 0x069;

the target polynomial: $x^9+x^8+x^6+x^5+1$, the seed in the first polarization direction: 0x1E1, and the seed in the second polarization direction: 0x113;

the target polynomial: $x^9+x^8+x^6+x^5+1$, the seed in the first polarization direction: 0x069, and the seed in the second polarization direction: 0x1C3;

the target polynomial: $x^9+x^8+x^6+x^5+1$, the seed in the first polarization direction: 0x1C3, and the seed in the second polarization direction: 0x113;

the target polynomial: $x^{10}+x^4+x^3+x+1$, the seed in the first polarization direction: 0x0E6, and the seed in the second polarization direction: 0x36E;

the target polynomial: $x^{10}+x^5+x^2+x+1$, the seed in the first polarization direction: 0x3DC, and the seed in the second polarization direction: 0x36A;

the target polynomial: $x^{10}+x^5+x^2+x+1$, the seed in the first polarization direction: 0x36A, and the seed in the second polarization direction: 0x35E;

the target polynomial: $x^{10}+x^5+x^2+x+1$, the seed in the first polarization direction: 0x36A, and the seed in the second polarization direction: 0x1AF;

the target polynomial: $x^{10}+x^8+x^5+x+1$, the seed in the first polarization direction: 0x1FD, and the seed in the second polarization direction: 0x3A7;

the target polynomial: $x^{10}+x^9+x^4+x+1$, the seed in the first polarization direction: 0x12A, and the seed in the second polarization direction: 0x039;

the target polynomial: $x^{10}+x^9+x^4+x+1$, the seed in the first polarization direction: 0x12A, and the seed in the second polarization direction: 0x107;

the target polynomial: $x^{10}+x^9+x^4+x+1$, the seed in the first polarization direction: 0x039, and the seed in the second polarization direction: 0x295;

the target polynomial: $x^{10}+x^9+x^4+x+1$, the seed in the first polarization direction: 0x295, and the seed in the second polarization direction: 0x107;

the target polynomial: $x^{10}+x^9+x^5+x^2+1$, the seed in the first polarization direction: 0x26A, and the seed in the second polarization direction: 0x03A;

the target polynomial: $x^{10}+x^9+x^6+x+1$, the seed in the first polarization direction: 0x1A2, and the seed in the second polarization direction: 0x379;

the target polynomial: $x^{10}+x^9+x^6+x+1$, the seed in the first polarization direction: 0x1A2, and the seed in the second polarization direction: 0x3EF;

the target polynomial: $x^{10}+x^9+x^6+x+1$, the seed in the first polarization direction: 0x2D1, and the seed in the second polarization direction: 0x379;

the target polynomial: $x^{10}+x^9+x^6+x+1$, the seed in the first polarization direction: 0x2D1, and the seed in the second polarization direction: 0x3EF;

the target polynomial: $x^{10}+x^9+x^7+x^6+1$, the seed in the first polarization direction: 0x3CC, and the seed in the second polarization direction: 0x1E2;

the target polynomial: $x^{10}+x^9+x^8+x^5+1$, the seed in the first polarization direction: 0x170, and the seed in the second polarization direction: 0x14D;

the target polynomial: $x^{10}+x^9+x^8+x^5+1$, the seed in the first polarization direction: 0x0B8, and the seed in the second polarization direction: 0x14D;

the target polynomial: $x^{10}+x^9+x^8+x^5+1$, the seed in the first polarization direction: 0x299, and the seed in the second polarization direction: 0x14D;

the target polynomial: $x^{10}+x^8+x^6+x^5+x^3+x+1$, the seed in the first polarization direction: 0x354, and the seed in the second polarization direction: 0x2AD;

the target polynomial: $x^{10}+x^8+x^6+x^5+x^3+x+1$, the seed in the first polarization direction: 0x17C, and the seed in the second polarization direction: 0x2AD;

the target polynomial: $x^{10}+x^8+x^6+x^5+x^3+x+1$, the seed in the first polarization direction: 0x1AA, and the seed in the second polarization direction: 0x2AD;

the target polynomial: $x^{10}+x^8+x^6+x^5+x^3+x+1$, the seed in the first polarization direction: 0x06A, and the seed in the second polarization direction: 0x2AD;

the target polynomial: $x^{10}+x^8+x^6+x^5+x^3+x+1$, the seed in the first polarization direction: 0x3E6, and the seed in the second polarization direction: 0x2AD;

the target polynomial: $x^{10}+x^8+x^6+x^5+x^3+x+1$, the seed in the first polarization direction: 0x2A9, and the seed in the second polarization direction: 0x2AD;

the target polynomial: $x^{10}+x^8+x^6+x^5+x^3+x+1$, the seed in the first polarization direction: 0x2F9, and the seed in the second polarization direction: 0x2AD;

the target polynomial: $x^{10}+x^8+x^6+x^5+x^3+x+1$, the seed in the first polarization direction: 0x0D5, and the seed in the second polarization direction: 0x2AD;

the target polynomial: $x^{10}+x^8+x^6+x^5+x^3+x+1$, the seed in the first polarization direction: 0x2AD, and the seed in the second polarization direction: 0x1F3;

the target polynomial: $x^{10}+x^8+x^6+x^5+x^3+x+1$, the seed in the first polarization direction: 0x2AD, and the seed in the second polarization direction: 0x14B;

the target polynomial: x^10+x^8+x^6+x^5+x^3+x+1, the seed in the first polarization direction: 0x2AD, and the seed in the second polarization direction: 0x297;

the target polynomial: x^10+x^8+x^6+x^5+x^3+x+1, the seed in the first polarization direction: 0x2AD, and the seed in the second polarization direction: 0x12F;

the target polynomial: x^10+x^8+x^7+x^3+x^2+x+1, the seed in the first polarization direction: 0x320, and the seed in the second polarization direction: 0x3AC;

the target polynomial: x^10+x^8+x^7+x^3+x^2+x+1, the seed in the first polarization direction: 0x320, and the seed in the second polarization direction: 0x1D6;

the target polynomial: x^10+x^8+x^7+x^3+x^2+x+1, the seed in the first polarization direction: 0x320, and the seed in the second polarization direction: 0x075;

the target polynomial: x^10+x^8+x^7+x^3+x^2+x+1, the seed in the first polarization direction: 0x320, and the seed in the second polarization direction: 0x0ED;

the target polynomial: x^10+x^8+x^7+x^3+x^2+x+1, the seed in the first polarization direction: 0x320, and the seed in the second polarization direction: 0x0EB;

the target polynomial: x^10+x^8+x^7+x^3+x^2+x+1, the seed in the first polarization direction: 0x0D4, and the seed in the second polarization direction: 0x3AC;

the target polynomial: x^10+x^8+x^7+x^3+x^2+x+1, the seed in the first polarization direction: 0x0D4, and the seed in the second polarization direction: 0x1D6;

the target polynomial: x^10+x^8+x^7+x^3+x^2+x+1, the seed in the first polarization direction: 0x0D4, and the seed in the second polarization direction: 0x075;

the target polynomial: x^10+x^8+x^7+x^3+x^2+x+1, the seed in the first polarization direction: 0x0D4, and the seed in the second polarization direction: 0x0EB;

the target polynomial: x^10+x^8+x^7+x^3+x^2+x+1, the seed in the first polarization direction: 0x3AC, and the seed in the second polarization direction: 0x01A;

the target polynomial: x^10+x^8+x^7+x^3+x^2+x+1, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA;

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA; and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

In some possible implementations, N=6144, M=64, Q=96, and a correspondence between the target polynomial, a seed in the first polarization direction, and a seed in the second polarization direction is one of the following:

the target polynomial: x^9+x^8+x^6+x^5+1, the seed in the first polarization direction: 0x1D4, and the seed in the second polarization direction: 0x1E1;

the target polynomial: x^9+x^4+x^3+x+1, the seed in the first polarization direction: 0x094, and the seed in the second polarization direction: 0x02B;

the target polynomial: x^10+x^9+x^7+x^6+1, the seed in the first polarization direction: 0x058, and the seed in the second polarization direction: 0x3CC;

the target polynomial: x^10+x^9+x^7+x^6+1, the seed in the first polarization direction: 0x3CC, and the seed in the second polarization direction: 0x316;

the target polynomial: x^10+x^9+x^7+x^6+1, the seed in the first polarization direction: 0x3CC, and the seed in the second polarization direction: 0x18E;

the target polynomial: x^10+x^9+x^7+x^6+1, the seed in the first polarization direction: 0x3CC, and the seed in the second polarization direction: 0x163;

the target polynomial: x^10+x^9+x^8+x^5+1, the seed in the first polarization direction: 0x152, and the seed in the second polarization direction: 0x14D;

the target polynomial: x^10+x^9+x^8+x^5+1, the seed in the first polarization direction: 0x2A4, and the seed in the second polarization direction: 0x316;

the target polynomial: x^10+x^9+x^6+x+1, the seed in the first polarization direction: 0x0B4, and the seed in the second polarization direction: 0x2D1;

the target polynomial: x^10+x^9+x^6+x+1, the seed in the first polarization direction: 0x1A2, and the seed in the second polarization direction: 0x05A;

the target polynomial: x^10+x^9+x^6+x+1, the seed in the first polarization direction: 0x05A, and the seed in the second polarization direction: 0x2D1;

the target polynomial: x^10+x^9+x^4+x+1, the seed in the first polarization direction: 0x128, and the seed in the second polarization direction: 0x12A;

the target polynomial: x^10+x^9+x^4+x+1, the seed in the first polarization direction: 0x250, and the seed in the second polarization direction: 0x12A;

the target polynomial: x^10+x^9+x^4+x+1, the seed in the first polarization direction: 0x250, and the seed in the second polarization direction: 0x295;

the target polynomial: x^10+x^4+x^3+x+1, the seed in the first polarization direction: 0x39C, and the seed in the second polarization direction: 0x36E;

the target polynomial: x^10+x^4+x^3+x+1, the seed in the first polarization direction: 0x18E, and the seed in the second polarization direction: 0x36E;

the target polynomial: x^10+x^4+x^3+x+1, the seed in the first polarization direction: 0x36E, and the seed in the second polarization direction: 0x239;

the target polynomial: x^10+x^4+x^3+x+1, the seed in the first polarization direction: 0x36E, and the seed in the second polarization direction: 0x0E7;

the target polynomial: x^10+x^5+x^2+x+1, the seed in the first polarization direction: 0x232, and the seed in the second polarization direction: 0x36A;

the target polynomial: x^10+x^5+x^2+x+1, the seed in the first polarization direction: 0x36A, and the seed in the second polarization direction: 0x119;

the target polynomial: x^10+x^9+x^8+x^7+x^3+x^2+1, the seed in the first polarization direction: 0x282, and the seed in the second polarization direction: 0x01F;

the target polynomial: x^10+x^9+x^8+x^7+x^3+x^2+1, the seed in the first polarization direction: 0x014, and the seed in the second polarization direction: 0x01F;

the target polynomial: x^10+x^9+x^8+x^7+x^4+x+1, the seed in the first polarization direction: 0x1BA, and the seed in the second polarization direction: 0x2CE;

the target polynomial: x^10+x^9+x^8+x^7+x^4+x+1, the seed in the first polarization direction: 0x2A6, and the seed in the second polarization direction: 0x2CE;

the target polynomial: x^10+x^9+x^8+x^7+x^4+x+1, the seed in the first polarization direction: 0x196, and the seed in the second polarization direction: 0x2CE;

the target polynomial: x^10+x^9+x^8+x^7+x^4+x+1, the seed in the first polarization direction: 0x2CE, and the seed in the second polarization direction: 0x259;

the target polynomial: x^10+x^9+x^8+x^7+x^4+x+1, the seed in the first polarization direction: 0x380, and the seed in the second polarization direction: 0x2CE;

the target polynomial: x^10+x^9+x^8+x^7+x^4+x+1, the seed in the first polarization direction: 0x380, and the seed in the second polarization direction: 0x081;

the target polynomial: x^10+x^9+x^8+x^7+x^4+x+1, the seed in the first polarization direction: 0x2CE, and the seed in the second polarization direction: 0x375;

the target polynomial: x^10+x^9+x^8+x^7+x^4+x+1, the seed in the first polarization direction: 0x2CE, and the seed in the second polarization direction: 0x353;

the target polynomial: x^10+x^9+x^8+x^7+x^4+x+1, the seed in the first polarization direction: 0x2CE, and the seed in the second polarization direction: 0x2FF;

the target polynomial: x^10+x^9+x^8+x^7+x^4+x+1, the seed in the first polarization direction: 0x2CE, and the seed in the second polarization direction: 0x3FF;

the target polynomial: x^10+x^9+x^8+x^7+x^4+x+1, the seed in the first polarization direction: 0x301, and the seed in the second polarization direction: 0x2D9;

the target polynomial: x^10+x^9+x^8+x^7+x^4+x+1, the seed in the first polarization direction: 0x301, and the seed in the second polarization direction: 0x3D9;

the target polynomial: x^10+x^9+x^8+x^7+x^4+x+1, the seed in the first polarization direction: 0x1BA, and the seed in the second polarization direction: 0x3D9;

the target polynomial: x^10+x^9+x^8+x^7+x^4+x+1, the seed in the first polarization direction: 0x1BA, and the seed in the second polarization direction: 0x0AD;

the target polynomial: x^10+x^9+x^8+x^7+x^4+x+1, the seed in the first polarization direction: 0x19C, and the seed in the second polarization direction: 0x301;

the target polynomial: x^10+x^8+x^7+x^3+x^2+x+1, the seed in the first polarization direction: 0x0D4, and the seed in the second polarization direction: 0x0ED;

the target polynomial: x^10+x^8+x^7+x^3+x^2+x+1, the seed in the first polarization direction: 0x01A, and the seed in the second polarization direction: 0x0ED;

the target polynomial: x^10+x^9+x^6+x^3+x^2+x+1, the seed in the first polarization direction: 0x3C4, and the seed in the second polarization direction: 0x186;

the target polynomial: x^10+x^9+x^6+x^3+x^2+x+1, the seed in the first polarization direction: 0x3C4, and the seed in the second polarization direction: 0x261;

the target polynomial: x^10+x^9+x^6+x^3+x^2+x+1, the seed in the first polarization direction: 0x3C4, and the seed in the second polarization direction: 0x1A3;

the target polynomial: x^10+x^9+x^6+x^3+x^2+x+1, the seed in the first polarization direction: 0x3C4, and the seed in the second polarization direction: 0x0C7;

the target polynomial: x^10+x^9+x^6+x^3+x^2+x+1, the seed in the first polarization direction: 0x3C4, and the seed in the second polarization direction: 0x346;

the target polynomial: x^10+x^9+x^6+x^3+x^2+x+1, the seed in the first polarization direction: 0x3C4, and the seed in the second polarization direction: 0x1CS5;

the target polynomial: x^10+x^9+x^6+x^3+x^2+x+1, the seed in the first polarization direction: 0x3C4, and the seed in the second polarization direction: 0x063;

the target polynomial: x^10+x^9+x^6+x^3+x^2+x+1, the seed in the first polarization direction: 0x1C5, and the seed in the second polarization direction: 0x327;

the target polynomial: x^10+x^9+x^6+x^3+x^2+x+1, the seed in the first polarization direction: 0x240, and the seed in the second polarization direction: 0x3C4;

the target polynomial: x^10+x^9+x^6+x^3+x^2+x+1, the seed in the first polarization direction: 0x3C4, and the seed in the second polarization direction: 0x103;

the target polynomial: x^10+x^9+x^6+x^3+x^2+x+1, the seed in the first polarization direction: 0x2E2, and the seed in the second polarization direction: 0x226;

the target polynomial: x^10+x^9+x^6+x^3+x^2+x+1, the seed in the first polarization direction: 0x2E2, and the seed in the second polarization direction: 0x165;

the target polynomial: x^10+x^9+x^6+x^3+x^2+x+1, the seed in the first polarization direction: 0x165, and the seed in the second polarization direction: 0x0C7;

the target polynomial: x^10+x^9+x^6+x^3+x^2+x+1, the seed in the first polarization direction: 0x266, and the seed in the second polarization direction: 0x0C7;

the target polynomial: x^10+x^9+x^6+x^3+x^2+x+1, the seed in the first polarization direction: 0x2E2, and the seed in the second polarization direction: 0x3E2;

the target polynomial: x^10+x^9+x^6+x^3+x^2+x+1, the seed in the first polarization direction: 0x0C4, and the seed in the second polarization direction: 0x226; or

the target polynomial: x^10+x^9+x^8+x^7+x^4+x+1, the seed in the first polarization direction: 0x1D8, and the seed in the second polarization direction: 0x2D9.

It should be understood that the foregoing polynomials and seeds have good differential autocorrelation and differential cross-correlation characteristics, and the good correlation effects can still be achieved when there is the frequency difference between the laser at the transmitting end and the laser at the receiving end.

In some possible implementations, N=6144, M=64, Q=96, the target polynomial is x^9+x^4+x^3+x+1, the seed in the first polarization direction is 0x049, the seed in the second polarization direction is 0x115, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, the target polynomial is x^10+x^9+x^4+x+1, the seed in the first polarization direction is 0x12A, the seed in the second polarization direction is 0x039, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to a second aspect, an embodiment of this application provides a data transmission method. The method includes the following steps. First, data frames are generated. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2. Then, the data frames are sent.

In the implementation, the difference between the every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help a receiving end restore signal quality.

In some possible implementations, in a polarization direction, in the data frame, the quantity of pilot symbols that are -A-Aj is [Q/4], the quantity of pilot symbols that are -A+Aj is Q/2-[Q/4], the quantity of pilot symbols that are A-Aj is Q/2-[Q/4], and the quantity of pilot symbols that are A+Aj is [Q/4]. Alternatively, in a polarization direction, in the data frame, the quantity of pilot symbols that are -A-Aj is Q/2-[Q/4], the quantity of pilot symbols that are -A+Aj is [Q/4], the quantity of pilot symbols that are A-Aj is [Q/4], and the quantity of pilot symbols that are A+Aj is Q/2-[Q/4]. Alternatively, in a polarization direction, in the data frame, the quantity of pilot symbols that are -A-Aj is [Q/4]+1, the quantity of pilot symbols that are -A+Aj is Q/2-[Q/4]-1, the quantity of pilot symbols that are A-Aj is Q/2-[Q/4]-1, and the quantity of pilot symbols that are A+Aj is [Q/4]+1. Alternatively, in a polarization direction, in the data frame, the quantity of pilot symbols that are -A-Aj is Q/2-[Q/4]-1, the quantity of pilot symbols that are -A+Aj is [Q/4]+1, the quantity of pilot symbols that are A-Aj is [Q/4]+1, and the quantity of pilot symbols that are A+Aj is Q/2-[Q/4]-1. [a] represents rounding down a positive real number a to the nearest integer.

In some possible implementations, N=6144, M=64, Q=96, the target polynomial is x^9+x^8+x^5+x^4+1, a seed in a first polarization direction is 0x175, a seed in a second polarization direction is 0x03D, and the first polarization direction and the second polarization direction are orthogonal to each other.

In some possible implementations, 96 pilot symbols in the first polarization direction are sequentially:

A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj.

96 pilot symbols in the second polarization direction are sequentially:

A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, - A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

In some possible implementations, in a first polarization direction, in the data frame, the quantity of pilot symbols that are - A-Aj is [Q/4], the quantity of pilot symbols that are -A+Aj is Q/2-[Q/4], the quantity of pilot symbols that are A-Aj is Q/2-[Q/4], and the quantity of pilot symbols that are A+Aj is [Q/4], and in a second polarization direction, in the data frame, the quantity of pilot symbols that are -A-Aj is Q/2-[Q/4], the quantity of pilot symbols that are -A+Aj is [Q/4], the quantity of pilot symbols that are A-Aj is [Q/4], and the quantity of pilot symbols that are A+Aj is Q/2-[Q/4]. Alternatively, in a first polarization direction, in the data frame, the quantity of pilot symbols that are -A-Aj is [Q/4]+1, the quantity of pilot symbols that are -A+Aj is Q/2-[Q/4]-1, the quantity of pilot symbols that are A-Aj is Q/2-[Q/4|-1, and the quantity of pilot symbols that are A+Aj is [Q/4]+1; and in a second polarization direction, in the data frame, the quantity of pilot symbols that are -A-Aj is Q/2-[Q/4]-1, the quantity of pilot symbols that are -A+Aj is [Q/4]+1, the quantity of pilot symbols that are A-Aj is [Q/4]+1, and the quantity of pilot symbols that are A+Aj is Q/2-[Q/4|-1. [a] represents rounding down the positive real number a to the nearest integer, and the first polarization direction and the second polarization direction are orthogonal to each other.

In the implementation, in the two polarization directions, a total quantity of pilot symbols that are -A-Aj is Q/2, a total quantity of pilot symbols that are -A+Aj is Q/2, a total quantity of pilot symbols that are A-Aj is Q/2, and a total quantity of pilot symbols that are A+Aj is Q/2. This effectively ensures balance between symbol quantities. In addition, it can be further ensured that the sequence including the pilot symbols achieves the direct current balance, to help the receiving end restore the signal quality.

In some possible implementations, N=6144, M=64, Q=96, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to a third aspect, an embodiment of this application provides a data transmission method. The method applied to a receiving end includes the following steps. First, data frames are received. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8. Then, the data frames are processed.

In the implementation, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that a simple target polynomial is designed in this application to generate the pilot symbols. Correspondingly, a simple hardware structure may be used for implementation. In addition, the pilot symbols generated in the foregoing manner have good autocorrelation and cross-correlation characteristics, and are direct current balanced. This helps the receiving end restore signal quality.

In some possible implementations, the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^{10}+x^8+x^7+x^6+x^2+x+1;$$

$$x^{10}+x^9+x^7+x^5+x^4+x^2+1;$$

$$x^{10}+x^9+x^8+x^4+x^3+x^2+1;$$

or

$$x^{10}+x^9+x^8+x^7+x^3+x^2+1.$$

In some possible implementations, the target polynomial is one of the following:

$$x^{10}+x^9+x^8+x^7+x^4+x+1;$$

or

$$x^{10}+x^9+x^6+x^3+x^2+x+1.$$

It should be understood that the foregoing polynomials have good differential autocorrelation and differential cross-correlation characteristics, and good correlation effects can still be achieved when there is a frequency difference between a laser at a transmitting end and a laser at the receiving end.

In some possible implementations, each pilot symbol is at a start location of M consecutive symbols in which the pilot symbol is located.

In some possible implementations, a sequence including Q pilot symbols in a first polarization direction is different from a sequence including Q pilot symbols in a second polarization direction, and the first polarization direction and the second polarization direction are orthogonal to each other. This avoids a problem that the receiving end cannot distinguish between two polarization directions in actual transmission.

In some possible implementations, N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;

the target polynomial: $x^9+x^4+x^3+x+1$, the seed in the first polarization direction: 0x002, and the seed in the second polarization direction: 0x02B;

the target polynomial: $x^9+x^4+x^3+x+1$, the seed in the first polarization direction: 0x049, and the seed in the second polarization direction: 0x115;

the target polynomial: $x^9+x^4+x^3+x+1$, the seed in the first polarization direction: 0x049, and the seed in the second polarization direction: 0x02B;

the target polynomial: $x^9+x^4+x^3+x+1$, the seed in the first polarization direction: 0x115, and the seed in the second polarization direction: 0x08D;

the target polynomial: $x^9+x^4+x^3+x+1$, the seed in the first polarization direction: 0x08D, and the seed in the second polarization direction: 0x02B;

the target polynomial: $x^9+x^5+x^4+x+1$, the seed in the first polarization direction: 0x098, and the seed in the second polarization direction: 0x0FE;

the target polynomial: $x^9+x^5+x^4+x+1$, the seed in the first polarization direction: 0x098, and the seed in the second polarization direction: 0x0BF;

the target polynomial: $x^9+x^5+x^4+x+1$, the seed in the first polarization direction: 0x098, and the seed in the second polarization direction: 0x17F;

the target polynomial: $x^9+x^5+x^4+x+1$, the seed in the first polarization direction: 0x14C, and the seed in the second polarization direction: 0x0FE;

the target polynomial: $x^9+x^5+x^4+x+1$, the seed in the first polarization direction: 0x14C, and the seed in the second polarization direction: 0x0BF;

the target polynomial: $x^9+x^5+x^4+x+1$, the seed in the first polarization direction: 0x14C, and the seed in the second polarization direction: 0x17F;

the target polynomial: $x^9+x^5+x^4+x+1$, the seed in the first polarization direction: 0x0A6, and the seed in the second polarization direction: 0x0FE;

the target polynomial: $x^9+x^5+x^4+x+1$, the seed in the first polarization direction: 0x0A6, and the seed in the second polarization direction: 0x0BF;

the target polynomial: $x^9+x^5+x^4+x+1$, the seed in the first polarization direction: 0x0A6, and the seed in the second polarization direction: 0x17F;

the target polynomial: $x^9+x^8+x^5+x^4+1$, the seed in the first polarization direction: 0x1D4, and the seed in the second polarization direction: 0x11E;

the target polynomial: $x^9+x^8+x^5+x^4+1$, the seed in the first polarization direction: 0x1D4, and the seed in the second polarization direction: 0x03D;

the target polynomial: $x^9+x^8+x^5+x^4+1$, the seed in the first polarization direction: 0x1D4, and the seed in the second polarization direction: 0x08F;

the target polynomial: $x^9+x^8+x^5+x^4+1$, the seed in the first polarization direction: 0x0EA, and the seed in the second polarization direction: 0x11E;

the target polynomial: $x^9+x^8+x^5+x^4+1$, the seed in the first polarization direction: 0x0EA, and the seed in the second polarization direction: 0x03D;

the target polynomial: $x^9+x^8+x^5+x^4+1$, the seed in the first polarization direction: 0x0EA, and the seed in the second polarization direction: 0x08F;

the target polynomial: $x^9+x^8+x^5+x^4+1$, the seed in the first polarization direction: 0x11E, and the seed in the second polarization direction: 0x175;

the target polynomial: $x^9+x^8+x^5+x^4+1$, the seed in the first polarization direction: 0x175, and the seed in the second polarization direction: 0x03D;

the target polynomial: $x^9+x^8+x^5+x^4+1$, the seed in the first polarization direction: 0x175, and the seed in the second polarization direction: 0x08F;

the target polynomial: $x^9+x^8+x^6+x^5+1$, the seed in the first polarization direction: 0x16A, and the seed in the second polarization direction: 0x1E1;

the target polynomial: $x^9+x^8+x^6+x^5+1$, the seed in the first polarization direction: 0x16A, and the seed in the second polarization direction: 0x1C3;

the target polynomial: $x^9+x^8+x^6+x^5+1$, the seed in the first polarization direction: 0x1E1, and the seed in the second polarization direction: 0x069;

the target polynomial: $x^9+x^8+x^6+x^5+1$, the seed in the first polarization direction: 0x1E1, and the seed in the second polarization direction: 0x113;

the target polynomial: $x^9+x^8+x^6+x^5+1$, the seed in the first polarization direction: 0x069, and the seed in the second polarization direction: 0x1C3;

the target polynomial: $x^9+x^8+x^6+x^5+1$, the seed in the first polarization direction: 0x1C3, and the seed in the second polarization direction: 0x113;

the target polynomial: $x^{10}+x^4+x^3+x+1$, the seed in the first polarization direction: 0x0E6, and the seed in the second polarization direction: 0x36E;

the target polynomial: $x^{10}+x^5+x^2+x+1$, the seed in the first polarization direction: 0x3DC, and the seed in the second polarization direction: 0x36A;

the target polynomial: $x^{10}+x^5+x^2+x+1$, the seed in the first polarization direction: 0x36A, and the seed in the second polarization direction: 0x35E;

the target polynomial: $x^{10}+x^5+x^2+x+1$, the seed in the first polarization direction: 0x36A, and the seed in the second polarization direction: 0x1AF;

the target polynomial: $x^{10}+x^8+x^5+x+1$, the seed in the first polarization direction: 0x1FD, and the seed in the second polarization direction: 0x3A7;

the target polynomial: $x^{10}+x^9+x^4+x+1$, the seed in the first polarization direction: 0x12A, and the seed in the second polarization direction: 0x039;

the target polynomial: $x^{10}+x^9+x^4+x+1$, the seed in the first polarization direction: 0x12A, and the seed in the second polarization direction: 0x107;

the target polynomial: $x^{10}+x^9+x^4+x+1$, the seed in the first polarization direction: 0x039, and the seed in the second polarization direction: 0x295;

the target polynomial: $x^{10}+x^9+x^4+x+1$, the seed in the first polarization direction: 0x295, and the seed in the second polarization direction: 0x107;

the target polynomial: $x^{10}+x^9+x^5+x^2+1$, the seed in the first polarization direction: 0x26A, and the seed in the second polarization direction: 0x03A;

the target polynomial: $x^{10}+x^9+x^6+x+1$, the seed in the first polarization direction: 0x1A2, and the seed in the second polarization direction: 0x379;

the target polynomial: $x^{10}+x^9+x^6+x+1$, the seed in the first polarization direction: 0x1A2, and the seed in the second polarization direction: 0x3EF;

the target polynomial: $x^{10}+x^9+x^6+x+1$, the seed in the first polarization direction: 0x2D1, and the seed in the second polarization direction: 0x379;

the target polynomial: $x^{10}+x^9+x^6+x+1$, the seed in the first polarization direction: 0x2D1, and the seed in the second polarization direction: 0x3EF;

the target polynomial: $x^{10}+x^9+x^7+x^6+1$, the seed in the first polarization direction: 0x3CC, and the seed in the second polarization direction: 0x1E2;

the target polynomial: $x^{10}+x^9+x^8+x^5+1$, the seed in the first polarization direction: 0x170, and the seed in the second polarization direction: 0x14D;

the target polynomial: $x^{10}+x^9+x^8+x^5+1$, the seed in the first polarization direction: 0x0B8, and the seed in the second polarization direction: 0x14D;

the target polynomial: $x^{10}+x^9+x^8+x^5+1$, the seed in the first polarization direction: 0x299, and the seed in the second polarization direction: 0x14D;

the target polynomial: $x^{10}+x^8+x^6+x^5+x^3+x+1$, the seed in the first polarization direction: 0x354, and the seed in the second polarization direction: 0x2AD;

the target polynomial: $x^{10}+x^8+x^6+x^5+x^3+x+1$, the seed in the first polarization direction: 0x17C, and the seed in the second polarization direction: 0x2AD;

the target polynomial: $x^{10}+x^8+x^6+x^5+x^3+x+1$, the seed in the first polarization direction: 0x1AA, and the seed in the second polarization direction: 0x2AD;

the target polynomial: $x^{10}+x^8+x^6+x^5+x^3+x+1$, the seed in the first polarization direction: 0x06A, and the seed in the second polarization direction: 0x2AD;

the target polynomial: $x^{10}+x^8+x^6+x^5+x^3+x+1$, the seed in the first polarization direction: 0x3E6, and the seed in the second polarization direction: 0x2AD;

the target polynomial: $x^{10}+x^8+x^6+x^5+x^3+x+1$, the seed in the first polarization direction: 0x2A9, and the seed in the second polarization direction: 0x2AD;

the target polynomial: x^10+x^8+x^6+x^5+x^3+x+1, the seed in the first polarization direction: 0x2F9, and the seed in the second polarization direction: 0x2AD;

the target polynomial: x^10+x^8+x^6+x^5+x^3+x+1, the seed in the first polarization direction: 0x0D5, and the seed in the second polarization direction: 0x2AD;

the target polynomial: x^10+x^8+x^6+x^5+x^3+x+1, the seed in the first polarization direction: 0x2AD, and the seed in the second polarization direction: 0x1F3;

the target polynomial: x^10+x^8+x^6+x^5+x^3+x+1, the seed in the first polarization direction: 0x2AD, and the seed in the second polarization direction: 0x14B;

the target polynomial: x^10+x^8+x^6+x^5+x^3+x+1, the seed in the first polarization direction: 0x2AD, and the seed in the second polarization direction: 0x297;

the target polynomial: x^10+x^8+x^6+x^5+x^3+x+1, the seed in the first polarization direction: 0x2AD, and the seed in the second polarization direction: 0x12F;

the target polynomial: x^10+x^8+x^7+x^3+x^2+x+1, the seed in the first polarization direction: 0x320, and the seed in the second polarization direction: 0x3AC;

the target polynomial: x^10+x^8+x^7+x^3+x^2+x+1, the seed in the first polarization direction: 0x320, and the seed in the second polarization direction: 0x1D6;

the target polynomial: x^10+x^8+x^7+x^3+x^2+x+1, the seed in the first polarization direction: 0x320, and the seed in the second polarization direction: 0x075;

the target polynomial: x^10+x^8+x^7+x^3+x^2+x+1, the seed in the first polarization direction: 0x320, and the seed in the second polarization direction: 0x0ED;

the target polynomial: x^10+x^8+x^7+x^3+x^2+x+1, the seed in the first polarization direction: 0x320, and the seed in the second polarization direction: 0x0EB;

the target polynomial: x^10+x^8+x^7+x^3+x^2+x+1, the seed in the first polarization direction: 0x0D4, and the seed in the second polarization direction: 0x3AC;

the target polynomial: x^10+x^8+x^7+x^3+x^2+x+1, the seed in the first polarization direction: 0x0D4, and the seed in the second polarization direction: 0x1D6;

the target polynomial: x^10+x^8+x^7+x^3+x^2+x+1, the seed in the first polarization direction: 0x0D4, and the seed in the second polarization direction: 0x075;

the target polynomial: x^10+x^8+x^7+x^3+x^2+x+1, the seed in the first polarization direction: 0x0D4, and the seed in the second polarization direction: 0x0EB;

the target polynomial: x^10+x^8+x^7+x^3+x^2+x+1, the seed in the first polarization direction: 0x3AC, and the seed in the second polarization direction: 0x01A;

the target polynomial: x^10+x^8+x^7+x^3+x^2+x+1, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA;

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA;and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

In some possible implementations, N=6144, M=64, Q=96, and a correspondence between the target polynomial, a seed in the first polarization direction, and a seed in the second polarization direction is one of the following:

the target polynomial: x^9+x^8+x^6+x^5+1, the seed in the first polarization direction: 0x1D4, and the seed in the second polarization direction: 0x1E1;

the target polynomial: x^9+x^4+x^3+x+1, the seed in the first polarization direction: 0x094, and the seed in the second polarization direction: 0x02B;

the target polynomial: x^10+x^9+x^7+x^6+1, the seed in the first polarization direction: 0x058, and the seed in the second polarization direction: 0x3CC;

the target polynomial: x^10+x^9+x^7+x^6+1, the seed in the first polarization direction: 0x3CC, and the seed in the second polarization direction: 0x316;

the target polynomial: x^10+x^9+x^7+x^6+1, the seed in the first polarization direction: 0x3CC, and the seed in the second polarization direction: 0x18E;

the target polynomial: x^10+x^9+x^7+x^6+1, the seed in the first polarization direction: 0x3CC, and the seed in the second polarization direction: 0x163;

the target polynomial: x^10+x^9+x^8+x^5+1, the seed in the first polarization direction: 0x152, and the seed in the second polarization direction: 0x14D;

the target polynomial: x^10+x^9+x^8+x^5+1, the seed in the first polarization direction: 0x2A4, and the seed in the second polarization direction: 0x316;

the target polynomial: x^10+x^9+x^6+x+1, the seed in the first polarization direction: 0x0B4, and the seed in the second polarization direction: 0x2D1;

the target polynomial: x^10+x^9+x^6+x+1, the seed in the first polarization direction: 0x1A2, and the seed in the second polarization direction: 0x05A;

the target polynomial: x^10+x^9+x^6+x+1, the seed in the first polarization direction: 0x05A, and the seed in the second polarization direction: 0x2D1;

the target polynomial: x^10+x^9+x^4+x+1, the seed in the first polarization direction: 0x128, and the seed in the second polarization direction: 0x12A;

the target polynomial: x^10+x^9+x^4+x+1, the seed in the first polarization direction: 0x250, and the seed in the second polarization direction: 0x12A;

the target polynomial: x^10+x^9+x^4+x+1, the seed in the first polarization direction: 0x250, and the seed in the second polarization direction: 0x295;

the target polynomial: x^10+x^4+x^3+x+1, the seed in the first polarization direction: 0x39C, and the seed in the second polarization direction: 0x36E;

the target polynomial: x^10+x^4+x^3+x+1, the seed in the first polarization direction: 0x18E, and the seed in the second polarization direction: 0x36E;

the target polynomial: x^10+x^4+x^3+x+1, the seed in the first polarization direction: 0x36E, and the seed in the second polarization direction: 0x239;

the target polynomial: x^10+x^4+x^3+x+1, the seed in the first polarization direction: 0x36E, and the seed in the second polarization direction: 0x0E7;

the target polynomial: x^10+x^5+x^2+x+1, the seed in the first polarization direction: 0x232, and the seed in the second polarization direction: 0x36A;

the target polynomial: x^10+x^5+x^2+x+1, the seed in the first polarization direction: 0x36A, and the seed in the second polarization direction: 0x119;

the target polynomial: x^10+x^9+x^8+x^7+x^3+x^2+1, the seed in the first polarization direction: 0x282, and the seed in the second polarization direction: 0x01F;

the target polynomial: x^10+x^9+x^8+x^7+x^3+x^2+1, the seed in the first polarization direction: 0x014, and the seed in the second polarization direction: 0x01F;

the target polynomial: x^10+x^9+x^8+x^7+x^4+x+1, the seed in the first polarization direction: 0x1BA, and the seed in the second polarization direction: 0x2CE;

the target polynomial: x^10+x^9+x^8+x^7+x^4+x+1, the seed in the first polarization direction: 0x2A6, and the seed in the second polarization direction: 0x2CE;

the target polynomial: x^10+x^9+x^8+x^7+x^4+x+1, the seed in the first polarization direction: 0x196, and the seed in the second polarization direction: 0x2CE;

the target polynomial: x^10+x^9+x^8+x^7+x^4+x+1, the seed in the first polarization direction: 0x2CE, and the seed in the second polarization direction: 0x259;

the target polynomial: x^10+x^9+x^8+x^7+x^4+x+1, the seed in the first polarization direction: 0x380, and the seed in the second polarization direction: 0x2CE;

the target polynomial: x^10+x^9+x^8+x^7+x^4+x+1, the seed in the first polarization direction: 0x380, and the seed in the second polarization direction: 0x081;

the target polynomial: x^10+x^9+x^8+x^7+x^4+x+1, the seed in the first polarization direction: 0x2CE, and the seed in the second polarization direction: 0x375;

the target polynomial: x^10+x^9+x^8+x^7+x^4+x+1, the seed in the first polarization direction: 0x2CE, and the seed in the second polarization direction: 0x353;

the target polynomial: x^10+x^9+x^8+x^7+x^4+x+1, the seed in the first polarization direction: 0x2CE, and the seed in the second polarization direction: 0x2FF;

the target polynomial: x^10+x^9+x^8+x^7+x^4+x+1, the seed in the first polarization direction: 0x2CE, and the seed in the second polarization direction: 0x3FF;

the target polynomial: x^10+x^9+x^8+x^7+x^4+x+1, the seed in the first polarization direction: 0x301, and the seed in the second polarization direction: 0x2D9;

the target polynomial: x^10+x^9+x^8+x^7+x^4+x+1, the seed in the first polarization direction: 0x301, and the seed in the second polarization direction: 0x3D9;

the target polynomial: x^10+x^9+x^8+x^7+x^4+x+1, the seed in the first polarization direction: 0x1BA, and the seed in the second polarization direction: 0x3D9;

the target polynomial: x^10+x^9+x^8+x^7+x^4+x+1, the seed in the first polarization direction: 0x1BA, and the seed in the second polarization direction: 0x0AD;

the target polynomial: x^10+x^9+x^8+x^7+x^4+x+1, the seed in the first polarization direction: 0x19C, and the seed in the second polarization direction: 0x301;

the target polynomial: x^10+x^8+x^7+x^3+x^2+x+1, the seed in the first polarization direction: 0x0D4, and the seed in the second polarization direction: 0x0ED;

the target polynomial: x^10+x^8+x^7+x^3+x^2+x+1, the seed in the first polarization direction: 0x01A, and the seed in the second polarization direction: 0x0ED;

the target polynomial: x^10+x^9+x^6+x^3+x^2+x+1, the seed in the first polarization direction: 0x3C4, and the seed in the second polarization direction: 0x186;

the target polynomial: x^10+x^9+x^6+x^3+x^2+x+1, the seed in the first polarization direction: 0x3C4, and the seed in the second polarization direction: 0x261;

the target polynomial: x^10+x^9+x^6+x^3+x^2+x+1, the seed in the first polarization direction: 0x3C4, and the seed in the second polarization direction: 0x1A3;

the target polynomial: x^10+x^9+x^6+x^3+x^2+x+1, the seed in the first polarization direction: 0x3C4, and the seed in the second polarization direction: 0x0C7;

the target polynomial: x^10+x^9+x^6+x^3+x^2+x+1, the seed in the first polarization direction: 0x3C4, and the seed in the second polarization direction: 0x346;

the target polynomial: x^10+x^9+x^6+x^3+x^2+x+1, the seed in the first polarization direction: 0x3C4, and the seed in the second polarization direction: 0x1C5;

the target polynomial: x^10+x^9+x^6+x^3+x^2+x+1, the seed in the first polarization direction: 0x3C4, and the seed in the second polarization direction: 0x063;

the target polynomial: x^10+x^9+x^6+x^3+x^2+x+1, the seed in the first polarization direction: 0x1C5, and the seed in the second polarization direction: 0x327;

the target polynomial: x^10+x^9+x^6+x^3+x^2+x+1, the seed in the first polarization direction: 0x240, and the seed in the second polarization direction: 0x3C4;

the target polynomial: x^10+x^9+x^6+x^3+x^2+x+1, the seed in the first polarization direction: 0x3C4, and the seed in the second polarization direction: 0x103;

the target polynomial: x^10+x^9+x^6+x^3+x^2+x+1, the seed in the first polarization direction: 0x2E2, and the seed in the second polarization direction: 0x226;

the target polynomial: x^10+x^9+x^6+x^3+x^2+x+1, the seed in the first polarization direction: 0x2E2, and the seed in the second polarization direction: 0x165;

the target polynomial: x^10+x^9+x^6+x^3+x^2+x+1, the seed in the first polarization direction: 0x165, and the seed in the second polarization direction: 0x0C7;

the target polynomial: x^10+x^9+x^6+x^3+x^2+x+1, the seed in the first polarization direction: 0x266, and the seed in the second polarization direction: 0x0C7;

the target polynomial: x^10+x^9+x^6+x^3+x^2+x+1, the seed in the first polarization direction: 0x2E2, and the seed in the second polarization direction: 0x3E2;

the target polynomial: x^10+x^9+x^6+x^3+x^2+x+1, the seed in the first polarization direction: 0x0C4, and the seed in the second polarization direction: 0x226; or

the target polynomial: x^10+x^9+x^8+x^7+x^4+x+1, the seed in the first polarization direction: 0x1D8, and the seed in the second polarization direction: 0x2D9.

It should be understood that the foregoing polynomials and seeds have good differential autocorrelation and differential cross-correlation characteristics, and the good correlation effects can still be achieved when there is the frequency difference between the laser at the transmitting end and the laser at the receiving end.

In some possible implementations, N=6144, M=64, Q=96, the target polynomial is x^9+x^4+x^3+x+1, the seed in the first polarization direction is 0x049, the seed in the second polarization direction is 0x115, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj,

-A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, the target polynomial is x^10+x^9+x^4+x+1, the seed in the first polarization direction is 0x12A, the seed in the second polarization direction is 0x039, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to a fourth aspect, an embodiment of this application provides a data transmission method. The method applied to a receiving end includes the following steps. First, data frames are received. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8. Then, the data frames are processed.

In the implementation, a difference between every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help the receiving end restore signal quality.

In some possible implementations, in a polarization direction, in the data frame, the quantity of pilot symbols that are -A-Aj is [Q/4], the quantity of pilot symbols that are -A+Aj is Q/2-[Q/4], the quantity of pilot symbols that are A-Aj is Q/2-[Q/4], and the quantity of pilot symbols that are A+Aj is [Q/4]. Alternatively, in a polarization direction, in the data frame, the quantity of pilot symbols that are -A-Aj is Q/2-[Q/4], the quantity of pilot symbols that are -A+Aj is [Q/4], the quantity of pilot symbols that are A-Aj is [Q/4], and the quantity of pilot symbols that are A+Aj is Q/2-[Q/4]. Alternatively, in a polarization direction, in the data frame, the quantity of pilot symbols that are -A-Aj is [Q/4]+1, the quantity of pilot symbols that are -A+Aj is Q/2-[Q/4]-1, the quantity of pilot symbols that are A-Aj is Q/2-[Q/4]-1, and the quantity of pilot symbols that are A+Aj is [Q/4]+1. Alternatively, in a polarization direction, in the data frame, the quantity of pilot symbols that are -A-Aj is Q/2-[Q/4]-1, the quantity of pilot symbols that are -A+Aj is [Q/4]+1, the quantity of pilot symbols that are A-Aj is [Q/4]+1, and the quantity of pilot symbols that are A+Aj is Q/2-[Q/4]-1. [a] represents rounding down a positive real number a to the nearest integer.

In some possible implementations, N=6144, M=64, Q=96, the target polynomial is $x^9+x^8+x^5+x^4+1$, a seed in a first polarization direction is 0x175, a seed in a second polarization direction is 0x03D, and the first polarization direction and the second polarization direction are orthogonal to each other.

In some possible implementations, 96 pilot symbols in the first polarization direction are sequentially:
A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj.

96 pilot symbols in the second polarization direction are sequentially:
A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, - A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

In some possible implementations, in a first polarization direction, in the data frame, the quantity of pilot symbols that are - A-Aj is [Q/4], the quantity of pilot symbols that are -A+Aj is Q/2-[Q/4], the quantity of pilot symbols that are A-Aj is Q/2-[Q/4], and the quantity of pilot symbols that are A+Aj is [Q/4], and in a second polarization direction, in the data frame, the quantity of pilot symbols that are -A-Aj is Q/2-[Q/4], the quantity of pilot symbols that are -A+Aj is [Q/4], the quantity of pilot symbols that are A-Aj is [Q/4], and the quantity of pilot symbols that are A+Aj is Q/2-[Q/4]. Alternatively, in a first polarization direction, in the data frame, the quantity of pilot symbols that are -A-Aj is [Q/4]+1, the quantity of pilot symbols that are -A+Aj is Q/2-[Q/4]-1, the quantity of pilot symbols that are A-Aj is Q/2-[Q/4]-1, and the quantity of pilot symbols that are A+Aj is [Q/4]+1; and in a second polarization direction, in the data frame, the quantity of pilot symbols that are -A-Aj is Q/2-[Q/4]-1, the quantity of pilot symbols that are -A+Aj is [Q/4]+1, the quantity of pilot symbols that are A-Aj is [Q/4]+1, and the quantity of pilot symbols that are A+Aj is Q/2-[Q/4]-1. [a] represents rounding down the positive real number a to the nearest integer, and the first polarization direction and the second polarization direction are orthogonal to each other.

In the implementation, in the two polarization directions, a total quantity of pilot symbols that are -A-Aj is Q/2, a total quantity of pilot symbols that are -A+Aj is Q/2, a total quantity of pilot symbols that are A-Aj is Q/2, and a total quantity of pilot symbols that are A+Aj is Q/2. This effectively ensures balance between symbol quantities. In addition, it can be further ensured that the sequence including the pilot symbols achieves the direct current balance, to help the receiving end restore the signal quality.

In some possible implementations, N=6144, M=64, Q=96, and the first polarization direction and the second polarization direction are orthogonal to each other.

96 pilot symbols in the first polarization direction are sequentially:
A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A+Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, -A-Aj, A+Aj, A+Aj, -A-Aj, A+Aj, A-Aj, A+Aj, -A+Aj, -A+Aj, -A-Aj, -A+Aj, -A-Aj, and A+Aj.

96 pilot symbols in the second polarization direction are sequentially:
A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-A$_j$, -A-Aj, -A+Aj, A-A$_j$, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, and the first polarization direction and the second polarization direction are orthogonal to each other.

96 pilot symbols in the first polarization direction are sequentially:
-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:
A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$ .

In some possible implementations, in a polarization direction, the modulation format of the symbol in the data frame is QPSK, and A=-1 or 1.

According to a fifth aspect, an embodiment of this application provides a data transmission apparatus. The data transmission apparatus includes a processing unit and a sending unit. The processing unit is configured to generate data frames. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8. The sending unit is configured to send the data frames.

In the implementation, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that a simple target polynomial is designed in this application to generate the pilot symbols. Correspondingly, a simple hardware structure may be used for implementation. In addition, the pilot symbols generated in the foregoing manner have good autocorrelation and cross-correlation characteristics, and are direct current balanced. This helps a receiving end restore signal quality.

In some possible implementations, the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^{10}+x^8+x^7+x^6+x^2+x+1;$$

$$x^{10}+x^9+x^7+x^5+x^4+x^2+1;$$

$$x^{10}+x^9+x^8+x^4+x^3+x^2+1;$$

or

$$x^{10}+x^9+x^8+x^7+x^3+x^2+1.$$

In some possible implementations, the target polynomial is one of the following:

$$x^{10}+x^9+x^8+x^7+x^4+x+1;$$

or

$$x^{10}+x^9+x^6+x^3+x^2+x+1.$$

It should be understood that the foregoing polynomials have good differential autocorrelation and differential cross-correlation characteristics, and good correlation effects can still be achieved when there is a frequency difference between a laser at a transmitting end and a laser at the receiving end.

In some possible implementations, each pilot symbol is at a start location of M consecutive symbols in which the pilot symbol is located.

In some possible implementations, a sequence including Q pilot symbols in a first polarization direction is different from a sequence including Q pilot symbols in a second polarization direction, and the first polarization direction and the second polarization direction are orthogonal to each other. This avoids a problem that the receiving end cannot distinguish between two polarization directions in actual transmission.

In some possible implementations, N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;

the target polynomial: $x^9+x^4+x^3+x+1$, the seed in the first polarization direction: 0x002, and the seed in the second polarization direction: 0x02B;

the target polynomial: $x^9+x^4+x^3+x+1$, the seed in the first polarization direction: 0x049, and the seed in the second polarization direction: 0x115;

the target polynomial: $x^9+x^4+x^3+x+1$, the seed in the first polarization direction: 0x049, and the seed in the second polarization direction: 0x02B;

the target polynomial: $x^9+x^4+x^3+x+1$, the seed in the first polarization direction: 0x115, and the seed in the second polarization direction: 0x08D;

the target polynomial: $x^9+x^4+x^3+x+1$, the seed in the first polarization direction: 0x08D, and the seed in the second polarization direction: 0x02B;

the target polynomial: $x^9+x^5+x^4+x+1$, the seed in the first polarization direction: 0x098, and the seed in the second polarization direction: 0x0FE;

the target polynomial: $x^9+x^5+x^4+x+1$, the seed in the first polarization direction: 0x098, and the seed in the second polarization direction: 0x0BF;

the target polynomial: $x^9+x^5+x^4+x+1$, the seed in the first polarization direction: 0x098, and the seed in the second polarization direction: 0x17F;

the target polynomial: $x^9+x^5+x^4+x+1$, the seed in the first polarization direction: 0x14C, and the seed in the second polarization direction: 0x0FE;

the target polynomial: $x^9+x^5+x^4+x+1$, the seed in the first polarization direction: 0x14C, and the seed in the second polarization direction: 0x0BF;

the target polynomial: $x^9+x^5+x^4+x+1$, the seed in the first polarization direction: 0x14C, and the seed in the second polarization direction: 0x17F;

the target polynomial: $x^9+x^5+x^4+x+1$, the seed in the first polarization direction: 0x0A6, and the seed in the second polarization direction: 0x0FE;

the target polynomial: $x^9+x^5+x^4+x+1$, the seed in the first polarization direction: 0x0A6, and the seed in the second polarization direction: 0x0BF;

the target polynomial: $x^9+x^5+x^4+x+1$, the seed in the first polarization direction: 0x0A6, and the seed in the second polarization direction: 0x17F;

the target polynomial: $x^9+x^8+x^5+x^4+1$, the seed in the first polarization direction: 0x1D4, and the seed in the second polarization direction: 0x11E;

the target polynomial: $x^9+x^8+x^5+x^4+1$, the seed in the first polarization direction: 0x1D4, and the seed in the second polarization direction: 0x03D;

the target polynomial: $x^9+x^8+x^5+x^4+1$, the seed in the first polarization direction: 0x1D4, and the seed in the second polarization direction: 0x08F;

the target polynomial: $x^9+x^8+x^5+x^4+1$, the seed in the first polarization direction: 0x0EA, and the seed in the second polarization direction: 0x11E;

the target polynomial: $x^9+x^8+x^5+x^4+1$, the seed in the first polarization direction: 0x0EA, and the seed in the second polarization direction: 0x03D;

the target polynomial: $x^9+x^8+x^5+x^4+1$, the seed in the first polarization direction: 0x0EA, and the seed in the second polarization direction: 0x08F;

the target polynomial: $x^9+x^8+x^5+x^4+1$, the seed in the first polarization direction: 0x11E, and the seed in the second polarization direction: 0x175;

the target polynomial: $x^9+x^8+x^5+x^4+1$, the seed in the first polarization direction: 0x175, and the seed in the second polarization direction: 0x03D;

the target polynomial: $x^9+x^8+x^5+x^4+1$, the seed in the first polarization direction: 0x175, and the seed in the second polarization direction: 0x08F;

the target polynomial: $x^9+x^8+x^6+x^5+1$, the seed in the first polarization direction: 0x16A, and the seed in the second polarization direction: 0x1E1;

the target polynomial: $x^9+x^8+x^6+x^5+1$, the seed in the first polarization direction: 0x16A, and the seed in the second polarization direction: 0x1C3;

the target polynomial: $x^9+x^8+x^6+x^5+1$, the seed in the first polarization direction: 0x1E1, and the seed in the second polarization direction: 0x069;

the target polynomial: $x^9+x^8+x^6+x^5+1$, the seed in the first polarization direction: 0x1E1, and the seed in the second polarization direction: 0x113;

the target polynomial: $x^9+x^8+x^6+x^5+1$, the seed in the first polarization direction: 0x069, and the seed in the second polarization direction: 0x1C3;

the target polynomial: $x^9+x^8+x^6+x^5+1$, the seed in the first polarization direction: 0x1C3, and the seed in the second polarization direction: 0x113;

the target polynomial: $x^{10}+x^4+x^3+x+1$, the seed in the first polarization direction: 0x0E6, and the seed in the second polarization direction: 0x36E;

the target polynomial: $x^{10}+x^5+x^2+x+1$, the seed in the first polarization direction: 0x3DC, and the seed in the second polarization direction: 0x36A;

the target polynomial: $x^{10}+x^5+x^2+x+1$, the seed in the first polarization direction: 0x36A, and the seed in the second polarization direction: 0x35E;

the target polynomial: $x^{10}+x^5+x^2+x+1$, the seed in the first polarization direction: 0x36A, and the seed in the second polarization direction: 0x1AF;

the target polynomial: $x^{10}+x^8+x^5+x+1$, the seed in the first polarization direction: 0x1FD, and the seed in the second polarization direction: 0x3A7;

the target polynomial: $x^{10}+x^9+x^4+x+1$, the seed in the first polarization direction: 0x12A, and the seed in the second polarization direction: 0x039;

the target polynomial: $x^{10}+x^9+x^4+x+1$, the seed in the first polarization direction: 0x12A, and the seed in the second polarization direction: 0x107;

the target polynomial: $x^{10}+x^9+x^4+x+1$, the seed in the first polarization direction: 0x039, and the seed in the second polarization direction: 0x295;

the target polynomial: $x^{10}+x^9+x^4+x+1$, the seed in the first polarization direction: 0x295, and the seed in the second polarization direction: 0x107;

the target polynomial: $x^{10}+x^9+x^5+x^2+1$, the seed in the first polarization direction: 0x26A, and the seed in the second polarization direction: 0x03A;

the target polynomial: $x^{10}+x^9+x^6+x+1$, the seed in the first polarization direction: 0x1A2, and the seed in the second polarization direction: 0x379;

the target polynomial: $x^{10}+x^9+x^6+x+1$, the seed in the first polarization direction: 0x1A2, and the seed in the second polarization direction: 0x3EF;

the target polynomial: $x^{10}+x^9+x^6+x+1$, the seed in the first polarization direction: 0x2D1, and the seed in the second polarization direction: 0x379;

the target polynomial: $x^{10}+x^9+x^6+x+1$, the seed in the first polarization direction: 0x2D1, and the seed in the second polarization direction: 0x3EF;

the target polynomial: $x^{10}+x^9+x^7+x^6+1$, the seed in the first polarization direction: 0x3CC, and the seed in the second polarization direction: 0x1E2;

the target polynomial: $x^{10}+x^9+x^8+x^5+1$, the seed in the first polarization direction: 0x170, and the seed in the second polarization direction: 0x14D;

the target polynomial: $x^{10}+x^9+x^8+x^5+1$, the seed in the first polarization direction: 0x0B8, and the seed in the second polarization direction: 0x14D;

the target polynomial: $x^{10}+x^9+x^8+x^5+1$, the seed in the first polarization direction: 0x299, and the seed in the second polarization direction: 0x14D;

the target polynomial: $x^{10}+x^8+x^6+x^5+x^3+x+1$, the seed in the first polarization direction: 0x354, and the seed in the second polarization direction: 0x2AD;

the target polynomial: x^10+x^8+x^6+x^5+x^3+x+1, the seed in the first polarization direction: 0x17C, and the seed in the second polarization direction: 0x2AD;

the target polynomial: x^10+x^8+x^6+x^5+x^3+x+1, the seed in the first polarization direction: 0x1AA, and the seed in the second polarization direction: 0x2AD;

the target polynomial: x^10+x^8+x^6+x^5+x^3+x+1, the seed in the first polarization direction: 0x06A, and the seed in the second polarization direction: 0x2AD;

the target polynomial: x^10+x^8+x^6+x^5+x^3+x+1, the seed in the first polarization direction: 0x3E6, and the seed in the second polarization direction: 0x2AD;

the target polynomial: x^10+x^8+x^6+x^5+x^3+x+1, the seed in the first polarization direction: 0x2A9, and the seed in the second polarization direction: 0x2AD;

the target polynomial: x^10+x^8+x^6+x^5+x^3+x+1, the seed in the first polarization direction: 0x2F9, and the seed in the second polarization direction: 0x2AD;

the target polynomial: x^10+x^8+x^6+x^5+x^3+x+1, the seed in the first polarization direction: 0x0D5, and the seed in the second polarization direction: 0x2AD;

the target polynomial: x^10+x^8+x^6+x^5+x^3+x+1, the seed in the first polarization direction: 0x2AD, and the seed in the second polarization direction: 0x1F3;

the target polynomial: x^10+x^8+x^6+x^5+x^3+x+1, the seed in the first polarization direction: 0x2AD, and the seed in the second polarization direction: 0x14B;

the target polynomial: x^10+x^8+x^6+x^5+x^3+x+1, the seed in the first polarization direction: 0x2AD, and the seed in the second polarization direction: 0x297;

the target polynomial: x^10+x^8+x^6+x^5+x^3+x+1, the seed in the first polarization direction: 0x2AD, and the seed in the second polarization direction: 0x12F;

the target polynomial: x^10+x^8+x^7+x^3+x^2+x+1, the seed in the first polarization direction: 0x320, and the seed in the second polarization direction: 0x3AC;

the target polynomial: x^10+x^8+x^7+x^3+x^2+x+1, the seed in the first polarization direction: 0x320, and the seed in the second polarization direction: 0x1D6;

the target polynomial: x^10+x^8+x^7+x^3+x^2+x+1, the seed in the first polarization direction: 0x320, and the seed in the second polarization direction: 0x075;

the target polynomial: x^10+x^8+x^7+x^3+x^2+x+1, the seed in the first polarization direction: 0x320, and the seed in the second polarization direction: 0x0ED;

the target polynomial: x^10+x^8+x^7+x^3+x^2+x+1, the seed in the first polarization direction: 0x320, and the seed in the second polarization direction: 0x0EB;

the target polynomial: x^10+x^8+x^7+x^3+x^2+x+1, the seed in the first polarization direction: 0x0D4, and the seed in the second polarization direction: 0x3AC;

the target polynomial: x^10+x^8+x^7+x^3+x^2+x+1, the seed in the first polarization direction: 0x0D4, and the seed in the second polarization direction: 0x1D6;

the target polynomial: x^10+x^8+x^7+x^3+x^2+x+1, the seed in the first polarization direction: 0x0D4, and the seed in the second polarization direction: 0x075;

the target polynomial: x^10+x^8+x^7+x^3+x^2+x+1, the seed in the first polarization direction: 0x0D4, and the seed in the second polarization direction: 0x0EB;

the target polynomial: x^10+x^8+x^7+x^3+x^2+x+1, the seed in the first polarization direction: 0x3AC, and the seed in the second polarization direction: 0x01A;

the target polynomial: x^10+x^8+x^7+x^3+x^2+x+1, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA,

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA, and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

In some possible implementations, N=6144, M=64, Q=96, and a correspondence between the target polynomial, a seed in the first polarization direction, and a seed in the second polarization direction is one of the following:

the target polynomial: x^9+x^8+x^6+x^5+1, the seed in the first polarization direction: 0x1D4, and the seed in the second polarization direction: 0x1E1;

the target polynomial: x^9+x^4+x^3+x+1, the seed in the first polarization direction: 0x094, and the seed in the second polarization direction: 0x02B;

the target polynomial: x^10+x^9+x^7+x^6+1, the seed in the first polarization direction: 0x058, and the seed in the second polarization direction: 0x3CC;

the target polynomial: x^10+x^9+x^7+x^6+1, the seed in the first polarization direction: 0x3CC, and the seed in the second polarization direction: 0x316;

the target polynomial: x^10+x^9+x^7+x^6+1, the seed in the first polarization direction: 0x3CC, and the seed in the second polarization direction: 0x18E;

the target polynomial: x^10+x^9+x^7+x^6+1, the seed in the first polarization direction: 0x3CC, and the seed in the second polarization direction: 0x163;

the target polynomial: x^10+x^9+x^8+x^5+1, the seed in the first polarization direction: 0x152, and the seed in the second polarization direction: 0x14D;

the target polynomial: x^10+x^9+x^8+x^5+1, the seed in the first polarization direction: 0x2A4, and the seed in the second polarization direction: 0x316;

the target polynomial: x^10+x^9+x^6+x+1, the seed in the first polarization direction: 0x0B4, and the seed in the second polarization direction: 0x2D1;

the target polynomial: x^10+x^9+x^6+x+1, the seed in the first polarization direction: 0x1A2, and the seed in the second polarization direction: 0x05A;

the target polynomial: x^10+x^9+x^6+x+1, the seed in the first polarization direction: 0x05A, and the seed in the second polarization direction: 0x2D1;

the target polynomial: x^10+x^9+x^4+x+1, the seed in the first polarization direction: 0x128, and the seed in the second polarization direction: 0x12A;

the target polynomial: x^10+x^9+x^4+x+1, the seed in the first polarization direction: 0x250, and the seed in the second polarization direction: 0x12A;

the target polynomial: x^10+x^9+x^4+x+1, the seed in the first polarization direction: 0x250, and the seed in the second polarization direction: 0x295;

the target polynomial: x^10+x^4+x^3+x+1, the seed in the first polarization direction: 0x39C, and the seed in the second polarization direction: 0x36E;

the target polynomial: x^10+x^4+x^3+x+1, the seed in the first polarization direction: 0x18E, and the seed in the second polarization direction: 0x36E;

the target polynomial: x^10+x^4+x^3+x+1, the seed in the first polarization direction: 0x36E, and the seed in the second polarization direction: 0x239;

the target polynomial: x^10+x^4+x^3+x+1, the seed in the first polarization direction: 0x36E, and the seed in the second polarization direction: 0x0E7;

the target polynomial: x^10+x^5+x^2+x+1, the seed in the first polarization direction: 0x232, and the seed in the second polarization direction: 0x36A;

the target polynomial: x^10+x^5+x^2+x+1, the seed in the first polarization direction: 0x36A, and the seed in the second polarization direction: 0x119;

the target polynomial: x^10+x^9+x^8+x^7+x^3+x^2+1, the seed in the first polarization direction: 0x282, and the seed in the second polarization direction: 0x01F;

the target polynomial: x^10+x^9+x^8+x^7+x^3+x^2+1, the seed in the first polarization direction: 0x014, and the seed in the second polarization direction: 0x01F;

the target polynomial: x^10+x^9+x^8+x^7+x^4+x+1, the seed in the first polarization direction: 0x1BA, and the seed in the second polarization direction: 0x2CE;

the target polynomial: x^10+x^9+x^8+x^7+x^4+x+1, the seed in the first polarization direction: 0x2A6, and the seed in the second polarization direction: 0x2CE;

the target polynomial: x^10+x^9+x^8+x^7+x^4+x+1, the seed in the first polarization direction: 0x196, and the seed in the second polarization direction: 0x2CE;

the target polynomial: x^10+x^9+x^8+x^7+x^4+x+1, the seed in the first polarization direction: 0x2CE, and the seed in the second polarization direction: 0x259;

the target polynomial: x^10+x^9+x^8+x^7+x^4+x+1, the seed in the first polarization direction: 0x380, and the seed in the second polarization direction: 0x2CE;

the target polynomial: x^10+x^9+x^8+x^7+x^4+x+1, the seed in the first polarization direction: 0x380, and the seed in the second polarization direction: 0x081;

the target polynomial: x^10+x^9+x^8+x^7+x^4+x+1, the seed in the first polarization direction: 0x2CE, and the seed in the second polarization direction: 0x375;

the target polynomial: x^10+x^9+x^8+x^7+x^4+x+1, the seed in the first polarization direction: 0x2CE, and the seed in the second polarization direction: 0x353;

the target polynomial: x^10+x^9+x^8+x^7+x^4+x+1, the seed in the first polarization direction: 0x2CE, and the seed in the second polarization direction: 0x2FF;

the target polynomial: x^10+x^9+x^8+x^7+x^4+x+1, the seed in the first polarization direction: 0x2CE, and the seed in the second polarization direction: 0x3FF;

the target polynomial: x^10+x^9+x^8+x^7+x^4+x+1, the seed in the first polarization direction: 0x301, and the seed in the second polarization direction: 0x2D9;

the target polynomial: x^10+x^9+x^8+x^7+x^4+x+1, the seed in the first polarization direction: 0x301, and the seed in the second polarization direction: 0x3D9;

the target polynomial: x^10+x^9+x^8+x^7+x^4+x+1, the seed in the first polarization direction: 0x1BA, and the seed in the second polarization direction: 0x3D9;

the target polynomial: x^10+x^9+x^8+x^7+x^4+x+1, the seed in the first polarization direction: 0x1BA, and the seed in the second polarization direction: 0x0AD;

the target polynomial: x^10+x^9+x^8+x^7+x^4+x+1, the seed in the first polarization direction: 0x19C, and the seed in the second polarization direction: 0x301;

the target polynomial: x^10+x^8+x^7+x^3+x^2+x+1, the seed in the first polarization direction: 0x0D4, and the seed in the second polarization direction: 0x0ED;

the target polynomial: x^10+x^8+x^7+x^3+x^2+x+1, the seed in the first polarization direction: 0x01A, and the seed in the second polarization direction: 0x0ED;

the target polynomial: x^10+x^9+x^6+x^3+x^2+x+1, the seed in the first polarization direction: 0x3C4, and the seed in the second polarization direction: 0x186;

the target polynomial: x^10+x^9+x^6+x^3+x^2+x+1, the seed in the first polarization direction: 0x3C4, and the seed in the second polarization direction: 0x261;

the target polynomial: x^10+x^9+x^6+x^3+x^2+x+1, the seed in the first polarization direction: 0x3C4, and the seed in the second polarization direction: 0x1A3;

the target polynomial: x^10+x^9+x^6+x^3+x^2+x+1, the seed in the first polarization direction: 0x3C4, and the seed in the second polarization direction: 0x0C7;

the target polynomial: x^10+x^9+x^6+x^3+x^2+x+1, the seed in the first polarization direction: 0x3C4, and the seed in the second polarization direction: 0x346;

the target polynomial: x^10+x^9+x^6+x^3+x^2+x+1, the seed in the first polarization direction: 0x3C4, and the seed in the second polarization direction: 0x1C5;

the target polynomial: x^10+x^9+x^6+x^3+x^2+x+1, the seed in the first polarization direction: 0x3C4, and the seed in the second polarization direction: 0x063;

the target polynomial: x^10+x^9+x^6+x^3+x^2+x+1, the seed in the first polarization direction: 0x1C5, and the seed in the second polarization direction: 0x327;

the target polynomial: x^10+x^9+x^6+x^3+x^2+x+1, the seed in the first polarization direction: 0x240, and the seed in the second polarization direction: 0x3C4;

the target polynomial: x^10+x^9+x^6+x^3+x^2+x+1, the seed in the first polarization direction: 0x3C4, and the seed in the second polarization direction: 0x103;

the target polynomial: x^10+x^9+x^6+x^3+x^2+x+1, the seed in the first polarization direction: 0x2E2, and the seed in the second polarization direction: 0x226;

the target polynomial: x^10+x^9+x^6+x^3+x^2+x+1, the seed in the first polarization direction: 0x2E2, and the seed in the second polarization direction: 0x165;

the target polynomial: x^10+x^9+x^6+x^3+x^2+x+1, the seed in the first polarization direction: 0x165, and the seed in the second polarization direction: 0x0C7;

the target polynomial: x^10+x^9+x^6+x^3+x^2+x+1, the seed in the first polarization direction: 0x266, and the seed in the second polarization direction: 0x0C7;

the target polynomial: x^10+x^9+x^6+x^3+x^2+x+1, the seed in the first polarization direction: 0x2E2, and the seed in the second polarization direction: 0x3E2;

the target polynomial: x^10+x^9+x^6+x^3+x^2+x+1, the seed in the first polarization direction: 0x0C4, and the seed in the second polarization direction: 0x226; or

the target polynomial: x^10+x^9+x^8+x^7+x^4+x+1, the seed in the first polarization direction: 0x1D8, and the seed in the second polarization direction: 0x2D9.

It should be understood that the foregoing polynomials and seeds have good differential autocorrelation and differential cross-correlation characteristics, and the good correlation effects can still be achieved when there is the frequency difference between the laser at the transmitting end and the laser at the receiving end.

In some possible implementations, N=6144, M=64, Q=96, the target polynomial is $x^9+x^4+x^3+x+1$, the seed in the first polarization direction is 0x049, the seed in the second polarization direction is 0x115, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, the target polynomial is $x^{10}+x^9+x^4+x+1$, the seed in the first polarization direction is 0x12A, the seed in the second polarization direction is 0x039, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A+Aj, A+Aj, -A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to a sixth aspect, an embodiment of this application provides a data transmission apparatus. The data transmission apparatus includes a processing unit and a sending unit. The processing unit is configured to generate data frames. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2. The sending unit is configured to send the data frames.

In the implementation, the difference between the every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help a receiving end restore signal quality.

In some possible implementations, in a polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is Q/2-[Q/4], and the quantity of pilot symbols that are A+Aj is $\lfloor Q/4 \rfloor$. Alternatively, in a polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$. Alternatively, in a polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$. Alternatively, in a polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$. $\lfloor a \rfloor$ represents rounding down a positive real number a to the nearest integer.

In some possible implementations, N=6144, M=64, Q=96, the target polynomial is x^9+x^8+x^5+x^4+1, a seed in a first polarization direction is 0x175, a seed in a second polarization direction is 0x03D, and the first polarization direction and the second polarization direction are orthogonal to each other.

In some possible implementations, 96 pilot symbols in the first polarization direction are sequentially:
A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj.

96 pilot symbols in the second polarization direction are sequentially:
A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, - A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A-Aj, A-Aj, A+Aj, A+Aj, -A-Aj, -A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

In some possible implementations, in a first polarization direction, in the data frame, the quantity of pilot symbols that are - A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$; and in a second polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$. Alternatively, in a first polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-$ 1, the quantity of pilot symbols that are A-Aj is $Q/2-\lfloor Q/4 \rfloor-1$, and the quantity of pilot symbols that are A+Aj is $\lfloor Q/4 \rfloor+1$; and in a second polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$. [a] represents rounding down the positive real number a to the nearest integer, and the first polarization direction and the second polarization direction are orthogonal to each other.

In the implementation, in the two polarization directions, a total quantity of pilot symbols that are -A-Aj is Q/2, a total quantity of pilot symbols that are -A+Aj is Q/2, a total quantity of pilot symbols that are A-Aj is Q/2, and a total quantity of pilot symbols that are A+Aj is Q/2. This effectively ensures balance between symbol quantities. In addition, it can be further ensured that the sequence including the pilot symbols achieves the direct current balance, to help the receiving end restore the signal quality.

In some possible implementations, N=6144, M=64, Q=96, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A+Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A+Aj, A+Aj, A-Aj, -A+Aj, -A+Aj, -A-Aj, -A+Aj, A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to a seventh aspect, an embodiment of this application provides a data transmission apparatus. The data transmission apparatus includes a receiving unit and a processing unit. The receiving unit is configured to receive data frames. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8. The processing unit is configured to process the data frames.

In the implementation, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that a simple target polynomial is designed in this application to generate the pilot symbols. Correspondingly, a simple hardware structure may be used for implementation. In addition, the pilot symbols generated in the foregoing manner have good autocorrelation and cross-correlation characteristics, and are direct current balanced. This helps a receiving end restore signal quality.

In some possible implementations, the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^10+x^8+x^7+x^6+x^2+x+1;$$

$$x^10+x^9+x^7+x^5+x^4+x^2+1;$$

$$x^10+x^9+x^8+x^4+x^3+x^2+1;$$

or

$$x^10+x^9+x^8+x^7+x^3+x^2+1.$$

In some possible implementations, the target polynomial is one of the following:

$$x^10+x^9+x^8+x^7+x^4+x+1;$$

or

$$x^10+x^9+x^6+x^3+x^2+x+1.$$

It should be understood that the foregoing polynomials have good differential autocorrelation and differential cross-correlation characteristics, and good correlation effects can still be achieved when there is a frequency difference between a laser at a transmitting end and a laser at the receiving end.

In some possible implementations, each pilot symbol is at a start location of M consecutive symbols in which the pilot symbol is located.

In some possible implementations, a sequence including Q pilot symbols in a first polarization direction is different from a sequence including Q pilot symbols in a second polarization direction, and the first polarization direction and the second polarization direction are orthogonal to each other. This avoids a problem that the receiving end cannot distinguish between two polarization directions in actual transmission.

In some possible implementations, N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;

the target polynomial: $x^9+x^4+x^3+x+1$, the seed in the first polarization direction: 0x002, and the seed in the second polarization direction: 0x02B;

the target polynomial: $x^9+x^4+x^3+x+1$, the seed in the first polarization direction: 0x049, and the seed in the second polarization direction: 0x115;

the target polynomial: $x^9+x^4+x^3+x+1$, the seed in the first polarization direction: 0x049, and the seed in the second polarization direction: 0x02B;

the target polynomial: $x^9+x^4+x^3+x+1$, the seed in the first polarization direction: 0x115, and the seed in the second polarization direction: 0x08D;

the target polynomial: $x^9+x^4+x^3+x+1$, the seed in the first polarization direction: 0x08D, and the seed in the second polarization direction: 0x02B;

the target polynomial: $x^9+x^5+x^4+x+1$, the seed in the first polarization direction: 0x098, and the seed in the second polarization direction: 0x0FE;

the target polynomial: $x^9+x^5+x^4+x+1$, the seed in the first polarization direction: 0x098, and the seed in the second polarization direction: 0x0BF;

the target polynomial: $x^9+x^5+x^4+x+1$, the seed in the first polarization direction: 0x098, and the seed in the second polarization direction: 0x17F;

the target polynomial: $x^9+x^5+x^4+x+1$, the seed in the first polarization direction: 0x14C, and the seed in the second polarization direction: 0x0FE;

the target polynomial: $x^9+x^5+x^4+x+1$, the seed in the first polarization direction: 0x14C, and the seed in the second polarization direction: 0x0BF;

the target polynomial: $x^9+x^5+x^4+x+1$, the seed in the first polarization direction: 0x14C, and the seed in the second polarization direction: 0x17F;

the target polynomial: $x^9+x^5+x^4+x+1$, the seed in the first polarization direction: 0x0A6, and the seed in the second polarization direction: 0x0FE;

the target polynomial: $x^9+x^5+x^4+x+1$, the seed in the first polarization direction: 0x0A6, and the seed in the second polarization direction: 0x0BF;

the target polynomial: x^9+x^5+x^4+x+1, the seed in the first polarization direction: 0x0A6, and the seed in the second polarization direction: 0x17F;

the target polynomial: x^9+x^8+x^5+x^4+1, the seed in the first polarization direction: 0x1D4, and the seed in the second polarization direction: 0x11E;

the target polynomial: x^9+x^8+x^5+x^4+1, the seed in the first polarization direction: 0x1D4, and the seed in the second polarization direction: 0x03D;

the target polynomial: x^9+x^8+x^5+x^4+1, the seed in the first polarization direction: 0x1D4, and the seed in the second polarization direction: 0x08F;

the target polynomial: x^9+x^8+x^5+x^4+1, the seed in the first polarization direction: 0x0EA, and the seed in the second polarization direction: 0x11E;

the target polynomial: x^9+x^8+x^5+x^4+1, the seed in the first polarization direction: 0x0EA, and the seed in the second polarization direction: 0x03D;

the target polynomial: x^9+x^8+x^5+x^4+1, the seed in the first polarization direction: 0x0EA, and the seed in the second polarization direction: 0x08F;

the target polynomial: x^9+x^8+x^5+x^4+1, the seed in the first polarization direction: 0x11E, and the seed in the second polarization direction: 0x175;

the target polynomial: x^9+x^8+x^5+x^4+1, the seed in the first polarization direction: 0x175, and the seed in the second polarization direction: 0x03D;

the target polynomial: x^9+x^8+x^5+x^4+1, the seed in the first polarization direction: 0x175, and the seed in the second polarization direction: 0x08F;

the target polynomial: x^9+x^8+x^6+x^5+1, the seed in the first polarization direction: 0x16A, and the seed in the second polarization direction: 0x1E1;

the target polynomial: x^9+x^8+x^6+x^5+1, the seed in the first polarization direction: 0x16A, and the seed in the second polarization direction: 0x1C3;

the target polynomial: x^9+x^8+x^6+x^5+1, the seed in the first polarization direction: 0x1E1, and the seed in the second polarization direction: 0x069;

the target polynomial: x^9+x^8+x^6+x^5+1, the seed in the first polarization direction: 0x1E1, and the seed in the second polarization direction: 0x113;

the target polynomial: x^9+x^8+x^6+x^5+1, the seed in the first polarization direction: 0x069, and the seed in the second polarization direction: 0x1C3;

the target polynomial: x^9+x^8+x^6+x^5+1, the seed in the first polarization direction: 0x1C3, and the seed in the second polarization direction: 0x113;

the target polynomial: x^10+x^4+x^3+x+1, the seed in the first polarization direction: 0x0E6, and the seed in the second polarization direction: 0x36E;

the target polynomial: x^10+x^5+x^2+x+1, the seed in the first polarization direction: 0x3DC, and the seed in the second polarization direction: 0x36A;

the target polynomial: x^10+x^5+x^2+x+1, the seed in the first polarization direction: 0x36A, and the seed in the second polarization direction: 0x35E;

the target polynomial: x^10+x^5+x^2+x+1, the seed in the first polarization direction: 0x36A, and the seed in the second polarization direction: 0x1AF;

the target polynomial: x^10+x^8+x^5+x+1, the seed in the first polarization direction: 0x1FD, and the seed in the second polarization direction: 0x3A7;

the target polynomial: x^10+x^9+x^4+x+1, the seed in the first polarization direction: 0x12A, and the seed in the second polarization direction: 0x039;

the target polynomial: x^10+x^9+x^4+x+1, the seed in the first polarization direction: 0x12A, and the seed in the second polarization direction: 0x107;

the target polynomial: x^10+x^9+x^4+x+1, the seed in the first polarization direction: 0x039, and the seed in the second polarization direction: 0x295;

the target polynomial: x^10+x^9+x^4+x+1, the seed in the first polarization direction: 0x295, and the seed in the second polarization direction: 0x107;

the target polynomial: x^10+x^9+x^5+x^2+1, the seed in the first polarization direction: 0x26A, and the seed in the second polarization direction: 0x03A;

the target polynomial: x^10+x^9+x^6+x+1, the seed in the first polarization direction: 0x1A2, and the seed in the second polarization direction: 0x379;

the target polynomial: x^10+x^9+x^6+x+1, the seed in the first polarization direction: 0x1A2, and the seed in the second polarization direction: 0x3EF;

the target polynomial: x^10+x^9+x^6+x+1, the seed in the first polarization direction: 0x2D1, and the seed in the second polarization direction: 0x379;

the target polynomial: x^10+x^9+x^6+x+1, the seed in the first polarization direction: 0x2D1, and the seed in the second polarization direction: 0x3EF;

the target polynomial: x^10+x^9+x^7+x^6+1, the seed in the first polarization direction: 0x3CC, and the seed in the second polarization direction: 0x1E2;

the target polynomial: x^10+x^9+x^8+x^5+1, the seed in the first polarization direction: 0x170, and the seed in the second polarization direction: 0x14D;

the target polynomial: x^10+x^9+x^8+x^5+1, the seed in the first polarization direction: 0x0B8, and the seed in the second polarization direction: 0x14D;

the target polynomial: x^10+x^9+x^8+x^5+1, the seed in the first polarization direction: 0x299, and the seed in the second polarization direction: 0x14D;

the target polynomial: x^10+x^8+x^6+x^5+x^3+x+1, the seed in the first polarization direction: 0x354, and the seed in the second polarization direction: 0x2AD;

the target polynomial: x^10+x^8+x^6+x^5+x^3+x+1, the seed in the first polarization direction: 0x17C, and the seed in the second polarization direction: 0x2AD;

the target polynomial: x^10+x^8+x^6+x^5+x^3+x+1, the seed in the first polarization direction: 0x1AA, and the seed in the second polarization direction: 0x2AD;

the target polynomial: x^10+x^8+x^6+x^5+x^3+x+1, the seed in the first polarization direction: 0x06A, and the seed in the second polarization direction: 0x2AD;

the target polynomial: x^10+x^8+x^6+x^5+x^3+x+1, the seed in the first polarization direction: 0x3E6, and the seed in the second polarization direction: 0x2AD;

the target polynomial: x^10+x^8+x^6+x^5+x^3+x+1, the seed in the first polarization direction: 0x2A9, and the seed in the second polarization direction: 0x2AD;

the target polynomial: x^10+x^8+x^6+x^5+x^3+x+1, the seed in the first polarization direction: 0x2F9, and the seed in the second polarization direction: 0x2AD;

the target polynomial: x^10+x^8+x^6+x^5+x^3+x+1, the seed in the first polarization direction: 0x0D5, and the seed in the second polarization direction: 0x2AD;

the target polynomial: x^10+x^8+x^6+x^5+x^3+x+1, the seed in the first polarization direction: 0x2AD, and the seed in the second polarization direction: 0x1F3;

the target polynomial: x^10+x^8+x^6+x^5+x^3+x+1, the seed in the first polarization direction: 0x2AD, and the seed in the second polarization direction: 0x14B;

the target polynomial: x^10+x^8+x^6+x^5+x^3+x+1, the seed in the first polarization direction: 0x2AD, and the seed in the second polarization direction: 0x297;

the target polynomial: x^10+x^8+x^6+x^5+x^3+x+1, the seed in the first polarization direction: 0x2AD, and the seed in the second polarization direction: 0x12F;

the target polynomial: x^10+x^8+x^7+x^3+x^2+x+1, the seed in the first polarization direction: 0x320, and the seed in the second polarization direction: 0x3AC;

the target polynomial: x^10+x^8+x^7+x^3+x^2+x+1, the seed in the first polarization direction: 0x320, and the seed in the second polarization direction: 0x1D6;

the target polynomial: x^10+x^8+x^7+x^3+x^2+x+1, the seed in the first polarization direction: 0x320, and the seed in the second polarization direction: 0x075;

the target polynomial: x^10+x^8+x^7+x^3+x^2+x+1, the seed in the first polarization direction: 0x320, and the seed in the second polarization direction: 0x0ED;

the target polynomial: x^10+x^8+x^7+x^3+x^2+x+1, the seed in the first polarization direction: 0x320, and the seed in the second polarization direction: 0x0EB;

the target polynomial: x^10+x^8+x^7+x^3+x^2+x+1, the seed in the first polarization direction: 0x0D4, and the seed in the second polarization direction: 0x3AC;

the target polynomial: x^10+x^8+x^7+x^3+x^2+x+1, the seed in the first polarization direction: 0x0D4, and the seed in the second polarization direction: 0x1D6;

the target polynomial: x^10+x^8+x^7+x^3+x^2+x+1, the seed in the first polarization direction: 0x0D4, and the seed in the second polarization direction: 0x075;

the target polynomial: x^10+x^8+x^7+x^3+x^2+x+1, the seed in the first polarization direction: 0x0D4, and the seed in the second polarization direction: 0x0EB;

the target polynomial: x^10+x^8+x^7+x^3+x^2+x+1, the seed in the first polarization direction: 0x3AC, and the seed in the second polarization direction: 0x01A;

the target polynomial: x^10+x^8+x^7+x^3+x^2+x+1, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA;

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA, and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

In some possible implementations, N=6144, M=64, Q=96, and a correspondence between the target polynomial, a seed in the first polarization direction, and a seed in the second polarization direction is one of the following:

the target polynomial: x^9+x^8+x^6+x^5+1, the seed in the first polarization direction: 0x1D4, and the seed in the second polarization direction: 0x1E1;

the target polynomial: x^9+x^4+x^3+x+1, the seed in the first polarization direction: 0x094, and the seed in the second polarization direction: 0x02B;

the target polynomial: x^10+x^9+x^7+x^6+1, the seed in the first polarization direction: 0x058, and the seed in the second polarization direction: 0x3CC;

the target polynomial: x^10+x^9+x^7+x^6+1, the seed in the first polarization direction: 0x3CC, and the seed in the second polarization direction: 0x316;

the target polynomial: x^10+x^9+x^7+x^6+1, the seed in the first polarization direction: 0x3CC, and the seed in the second polarization direction: 0x18E;

the target polynomial: x^10+x^9+x^7+x^6+1, the seed in the first polarization direction: 0x3CC, and the seed in the second polarization direction: 0x163;

the target polynomial: x^10+x^9+x^8+x^5+1, the seed in the first polarization direction: 0x152, and the seed in the second polarization direction: 0x14D;

the target polynomial: x^10+x^9+x^8+x^5+1, the seed in the first polarization direction: 0x2A4, and the seed in the second polarization direction: 0x316;

the target polynomial: x^10+x^9+x^6+x+1, the seed in the first polarization direction: 0x0B4, and the seed in the second polarization direction: 0x2D1;

the target polynomial: x^10+x^9+x^6+x+1, the seed in the first polarization direction: 0x1A2, and the seed in the second polarization direction: 0x05A;

the target polynomial: x^10+x^9+x^6+x+1, the seed in the first polarization direction: 0x05A, and the seed in the second polarization direction: 0x2D1;

the target polynomial: x^10+x^9+x^4+x+1, the seed in the first polarization direction: 0x128, and the seed in the second polarization direction: 0x12A;

the target polynomial: x^10+x^9+x^4+x+1, the seed in the first polarization direction: 0x250, and the seed in the second polarization direction: 0x12A;

the target polynomial: x^10+x^9+x^4+x+1, the seed in the first polarization direction: 0x250, and the seed in the second polarization direction: 0x295;

the target polynomial: x^10+x^4+x^3+x+1, the seed in the first polarization direction: 0x39C, and the seed in the second polarization direction: 0x36E;

the target polynomial: x^10+x^4+x^3+x+1, the seed in the first polarization direction: 0x18E, and the seed in the second polarization direction: 0x36E;

the target polynomial: x^10+x^4+x^3+x+1, the seed in the first polarization direction: 0x36E, and the seed in the second polarization direction: 0x239;

the target polynomial: x^10+x^4+x^3+x+1, the seed in the first polarization direction: 0x36E, and the seed in the second polarization direction: 0x0E7;

the target polynomial: x^10+x^5+x^2+x+1, the seed in the first polarization direction: 0x232, and the seed in the second polarization direction: 0x36A;

the target polynomial: x^10+x^5+x^2+x+1, the seed in the first polarization direction: 0x36A, and the seed in the second polarization direction: 0x119;

the target polynomial: x^10+x^9+x^8+x^7+x^3+x^2+1, the seed in the first polarization direction: 0x282, and the seed in the second polarization direction: 0x01F;

the target polynomial: x^10+x^9+x^8+x^7+x^3+x^2+1, the seed in the first polarization direction: 0x014, and the seed in the second polarization direction: 0x01F;

the target polynomial: x^10+x^9+x^8+x^7+x^4+x+1, the seed in the first polarization direction: 0x1BA, and the seed in the second polarization direction: 0x2CE;

the target polynomial: x^10+x^9+x^8+x^7+x^4+x+1, the seed in the first polarization direction: 0x2A6, and the seed in the second polarization direction: 0x2CE;

the target polynomial: x^10+x^9+x^8+x^7+x^4+x+1, the seed in the first polarization direction: 0x196, and the seed in the second polarization direction: 0x2CE;

the target polynomial: x^10+x^9+x^8+x^7+x^4+x+1, the seed in the first polarization direction: 0x2CE, and the seed in the second polarization direction: 0x259;

the target polynomial: x^10+x^9+x^8+x^7+x^4+x+1, the seed in the first polarization direction: 0x380, and the seed in the second polarization direction: 0x2CE;

the target polynomial: x^10+x^9+x^8+x^7+x^4+x+1, the seed in the first polarization direction: 0x380, and the seed in the second polarization direction: 0x081;

the target polynomial: x^10+x^9+x^8+x^7+x^4+x+1, the seed in the first polarization direction: 0x2CE, and the seed in the second polarization direction: 0x375;

the target polynomial: x^10+x^9+x^8+x^7+x^4+x+1, the seed in the first polarization direction: 0x2CE, and the seed in the second polarization direction: 0x353;

the target polynomial: x^10+x^9+x^8+x^7+x^4+x+1, the seed in the first polarization direction: 0x2CE, and the seed in the second polarization direction: 0x2FF;

the target polynomial: x^10+x^9+x^8+x^7+x^4+x+1, the seed in the first polarization direction: 0x2CE, and the seed in the second polarization direction: 0x3FF;

the target polynomial: x^10+x^9+x^8+x^7+x^4+x+1, the seed in the first polarization direction: 0x301, and the seed in the second polarization direction: 0x2D9;

the target polynomial: x^10+x^9+x^8+x^7+x^4+x+1, the seed in the first polarization direction: 0x301, and the seed in the second polarization direction: 0x3D9;

the target polynomial: x^10+x^9+x^8+x^7+x^4+x+1, the seed in the first polarization direction: 0x1BA, and the seed in the second polarization direction: 0x3D9;

the target polynomial: x^10+x^9+x^8+x^7+x^4+x+1, the seed in the first polarization direction: 0x1BA, and the seed in the second polarization direction: 0x0AD;

the target polynomial: x^10+x^9+x^8+x^7+x^4+x+1, the seed in the first polarization direction: 0x19C, and the seed in the second polarization direction: 0x301;

the target polynomial: x^10+x^8+x^7+x^3+x^2+x+1, the seed in the first polarization direction: 0x0D4, and the seed in the second polarization direction: 0x0ED;

the target polynomial: x^10+x^8+x^7+x^3+x^2+x+1, the seed in the first polarization direction: 0x01A, and the seed in the second polarization direction: 0x0ED;

the target polynomial: x^10+x^9+x^6+x^3+x^2+x+1, the seed in the first polarization direction: 0x3C4, and the seed in the second polarization direction: 0x186;

the target polynomial: x^10+x^9+x^6+x^3+x^2+x+1, the seed in the first polarization direction: 0x3C4, and the seed in the second polarization direction: 0x261;

the target polynomial: x^10+x^9+x^6+x^3+x^2+x+1, the seed in the first polarization direction: 0x3C4, and the seed in the second polarization direction: 0x1A3;

the target polynomial: x^10+x^9+x^6+x^3+x^2+x+1, the seed in the first polarization direction: 0x3C4, and the seed in the second polarization direction: 0x0C7;

the target polynomial: x^10+x^9+x^6+x^3+x^2+x+1, the seed in the first polarization direction: 0x3C4, and the seed in the second polarization direction: 0x346;

the target polynomial: x^10+x^9+x^6+x^3+x^2+x+1, the seed in the first polarization direction: 0x3C4, and the seed in the second polarization direction: 0x1C5;

the target polynomial: x^10+x^9+x^6+x^3+x^2+x+1, the seed in the first polarization direction: 0x3C4, and the seed in the second polarization direction: 0x063;

the target polynomial: x^10+x^9+x^6+x^3+x^2+x+1, the seed in the first polarization direction: 0x1C5, and the seed in the second polarization direction: 0x327;

the target polynomial: x^10+x^9+x^6+x^3+x^2+x+1, the seed in the first polarization direction: 0x240, and the seed in the second polarization direction: 0x3C4;

the target polynomial: x^10+x^9+x^6+x^3+x^2+x+1, the seed in the first polarization direction: 0x3C4, and the seed in the second polarization direction: 0x103;

the target polynomial: x^10+x^9+x^6+x^3+x^2+x+1, the seed in the first polarization direction: 0x2E2, and the seed in the second polarization direction: 0x226;

the target polynomial: x^10+x^9+x^6+x^3+x^2+x+1, the seed in the first polarization direction: 0x2E2, and the seed in the second polarization direction: 0x165;

the target polynomial: $x^{10}+x^9+x^6+x^3+x^2+x+1$, the seed in the first polarization direction: 0x165, and the seed in the second polarization direction: 0x0C7;

the target polynomial: $x^{10}+x^9+x^6+x^3+x^2+x+1$, the seed in the first polarization direction: 0x266, and the seed in the second polarization direction: 0x0C7;

the target polynomial: $x^{10}+x^9+x^6+x^3+x^2+x+1$, the seed in the first polarization direction: 0x2E2, and the seed in the second polarization direction: 0x3E2;

the target polynomial: $x^{10}+x^9+x^6+x^3+x^2+x+1$, the seed in the first polarization direction: 0x0C4, and the seed in the second polarization direction: 0x226; or

the target polynomial: $x^{10}+x^9+x^8+x^7+x^4+x+1$, the seed in the first polarization direction: 0x1D8, and the seed in the second polarization direction: 0x2D9.

It should be understood that the foregoing polynomials and seeds have good differential autocorrelation and differential cross-correlation characteristics, and the good correlation effects can still be achieved when there is the frequency difference between the laser at the transmitting end and the laser at the receiving end.

In some possible implementations, N=6144, M=64, Q=96, the target polynomial is $x^9+x^4+x^3+x+1$, the seed in the first polarization direction is 0x049, the seed in the second polarization direction is 0x115, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, the target polynomial is $x^{10}+x^9+x^4+x+1$, the seed in the first polarization direction is 0x12A, the seed in the second polarization direction is 0x039, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, -A-Aj, A-Aj, -A+Aj, A+Aj, A-Aj, A+Aj, A-Aj, -A-Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and A=-1, 1, -3, 3, $-\sqrt{5}$, or $\sqrt{5}$.

In some possible implementations, in a polarization direction, the modulation format of the symbol in the data frame is QPSK, and A=-1 or 1.

According to an eighth aspect, an embodiment of this application provides a data transmission apparatus. The data transmission apparatus includes a receiving unit and a processing unit. The receiving unit is configured to receive data frames. In a polarization direction, the data frame includes N symbols, every M consecutive symbols in the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2. The processing unit is configured to process the data frames.

In the implementation, the difference between the every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help a receiving end restore signal quality.

In some possible implementations, in a polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is Q/2-[Q/4], and the quantity of pilot symbols that are A+Aj is $\lfloor Q/4 \rfloor$. Alternatively, in a polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$. Alternatively, in a polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$. Alternatively, in a polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$. $\lfloor a \rfloor$ represents rounding down a positive real number a to the nearest integer.

In some possible implementations, N=6144, M=64, Q=96, the target polynomial is x^9+x^8+x^5+x^4+1, a seed in a first polarization direction is 0x175, a seed in a second polarization direction is 0x03D, and the first polarization direction and the second polarization direction are orthogonal to each other.

In some possible implementations, 96 pilot symbols in the first polarization direction are sequentially:
A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj.

96 pilot symbols in the second polarization direction are sequentially:
A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, - A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, -A-Aj,

-A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

In some possible implementations, in a first polarization direction, in the data frame, the quantity of pilot symbols that are - A-Aj is $\lfloor Q/4 \rfloor$, the quantity of pilot symbols that are -A+Aj is $Q/2 - \lfloor Q/4 \rfloor$, the quantity of pilot symbols that are A-Aj is $Q/2 - \lfloor Q/4 \rfloor$, and the quantity of pilot symbols that are A+Aj is $\lfloor Q/4 \rfloor$; and in a second polarization direction, in the data frame, the quantity of pilot symbols that are -A-Aj is $Q/2 - \lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2 - \lfloor Q/4 \rfloor$. Alternatively, in a first polarization direction, in the data frame, the quantity of pilot symbols that are -A-Aj is $\lfloor Q/4 \rfloor + 1$, the quantity of pilot symbols that are -A+Aj is $Q/2 - \lfloor Q/4 \rfloor - 1$, the quantity of pilot symbols that are A-Aj is $Q/2 - \lfloor Q/4 \rfloor - 1$, and the quantity of pilot symbols that are A+Aj is $\lfloor Q/4 \rfloor + 1$, and in a second polarization direction, in the data frame, the quantity of pilot symbols that are -A-Aj is $Q/2 - \lfloor Q/4 \rfloor - 1$, the quantity of pilot symbols that are -A+Aj is $\lfloor Q/4 \rfloor + 1$, the quantity of pilot symbols that are A-Aj is [Q/4] +1, and the quantity of pilot symbols that are A+Aj is $Q/2 - \lfloor Q/4 \rfloor - 1$. [a] represents rounding down the positive real number a to the nearest integer, and the first polarization direction and the second polarization direction are orthogonal to each other.

In the implementation, in the two polarization directions, a total quantity of pilot symbols that are -A-Aj is Q/2, a total quantity of pilot symbols that are -A+Aj is Q/2, a total quantity of pilot symbols that are A-Aj is Q/2, and a total quantity of pilot symbols that are A+Aj is Q/2. This effectively ensures balance between symbol quantities. In addition, it can be further ensured that the sequence including the pilot symbols achieves the direct current balance, to help the receiving end restore the signal quality.

In some possible implementations, N=6144, M=64, Q=96, and the first polarization direction and the second polarization direction are orthogonal to each other.

96 pilot symbols in the first polarization direction are sequentially:

A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj.

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

In some possible implementations, N=6144, M=64, Q=96, and the first polarization direction and the second polarization direction are orthogonal to each other.

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj.

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

In some possible implementations, a quantity of data frames is W, W is an integer greater than 1, and the W data frames are carried in a plurality of optical signals for transmission.

In some possible implementations, the W data frames are respectively carried in W optical signals. Any two of the W optical signals have different wavelengths. Alternatively, all of the W optical signals have a same wavelength, and the W optical signals are respectively transmitted through W optical fibers.

In some possible implementations, the W data frames include a first data frame and a second data frame, and the first polarization direction and the second polarization direction are orthogonal to each other. In the first polarization direction, Q pilot symbols in the first data frame are generated by using a first target polynomial and a first seed; and in the second polarization direction, the Q pilot symbols in the first data frame are generated by using the first target polynomial and a second seed. In the first polarization direction, Q pilot symbols in the second data frame are generated by using a second target polynomial and a third seed; and in the second polarization direction, the Q pilot symbols in the second data frame are generated by using the second target polynomial and a fourth seed.

In some possible implementations, a first pilot symbol sequence in the first data frame is the same as a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, the first seed is the same as the third seed, the second seed is the same as the fourth seed, the first seed is different from the second seed, and the third seed is different from the fourth seed.

In some possible implementations, a first pilot symbol sequence in the first data frame is different from a second pilot symbol sequence in the second data frame, the first pilot symbol sequence includes the Q pilot symbols in the first data frame, and the second pilot symbol sequence includes the Q pilot symbols in the second data frame.

In some possible implementations, the first target polynomial is the same as the second target polynomial, and any two of the first seed, the second seed, the third seed, and the fourth seed are different from each other.

In some possible implementations, the first target polynomial is different from the second target polynomial.

In some possible implementations, in a polarization direction, a quantity of consecutive identical pilot symbols in the data frame is less than or equal to 4.

In some possible implementations, in a polarization direction, a modulation format of the symbol in the data frame is 16QAM, and $A = -1, 1, -3, 3, -\sqrt{5}$, or $\sqrt{5}$.

In some possible implementations, in a polarization direction, the modulation format of the symbol in the data frame is QPSK, and A=-1 or 1.

In embodiments of this application, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that the simple target polynomial is designed in this application to generate the pilot symbols. Correspondingly, the simple hardware structure may be used for the implementation. In addition, the pilot symbols generated in the foregoing manner have the good autocorrelation and cross-correlation characteristics, and are direct current balanced. This helps the receiving end restore the signal quality.

## BRIEF DESCRIPTION OF DRAWINGS

FIG. 1 is a diagram of a communication system to which an embodiment of this application is applied;

FIG. 2 is a diagram of an implementation of a transmitting-end DSP processor according to an embodiment of this application;

FIG. 3 is a diagram of another implementation of a transmitting-end DSP processor according to an embodiment of this application;

FIG. 4 is a schematic flowchart of a data transmission method according to an embodiment of this application;

FIG. 5 is a diagram of a structure of a data frame according to an embodiment of this application;

FIG. 6 is a diagram of symbols in a constellation diagram according to an embodiment of this application;

FIG. 7 is a diagram of a first generation structure of a pilot symbol according to an embodiment of this application;

FIG. 8 is a diagram of a second generation structure of a pilot symbol according to an embodiment of this application;

FIG. 9 is a diagram of a structure of another data frame according to an embodiment of this application;

FIG. 10 is a diagram of a third generation structure of a pilot symbol according to an embodiment of this application;

FIG. 11 is a diagram of a first implementation procedure of generating pilot symbols based on DP-16QAM modulation according to an embodiment of this application;

FIG. 12(a) to FIG. 12(c) are diagrams of correlation characteristics corresponding to pilot symbols according to an embodiment of this application;

FIG. 13(a) and FIG. 13(b) are diagrams of reflecting an autocorrelation characteristic and a cross-correlation characteristic according to an embodiment of this application;

FIG. 14 is a diagram of a fourth generation structure of a pilot symbol according to an embodiment of this application;

FIG. 15 is a diagram of a second implementation procedure of generating pilot symbols based on DP-16QAM modulation according to an embodiment of this application;

FIG. 16(a) to FIG. 16(c) are other diagrams of correlation characteristics corresponding to pilot symbols according to an embodiment of this application;

FIG. 17(a) and FIG. 17(b) are other diagrams of reflecting an autocorrelation characteristic and a cross-correlation characteristic according to an embodiment of this application;

FIG. 18 is a diagram of a transmission scenario of a plurality of data frame streams according to an embodiment of this application;

FIG. 19 is a diagram of a fifth generation structure of a pilot symbol according to an embodiment of this application;

FIG. 20 is a diagram of a third implementation procedure of generating pilot symbols based on DP-16QAM modulation according to an embodiment of this application;

FIG. 21(a) to FIG. 21(c) are other diagrams of correlation characteristics corresponding to pilot symbols according to an embodiment of this application;

FIG. 22(a) and FIG. 22(b) are other diagrams of reflecting an autocorrelation characteristic and a cross-correlation characteristic according to an embodiment of this application;

FIG. 23 is a diagram of a sixth generation structure of a pilot symbol according to an embodiment of this application;

FIG. 24 is a diagram of a fourth implementation procedure of generating pilot symbols based on DP-16QAM modulation according to an embodiment of this application;

FIG. 25(a) and FIG. 25(b) are other diagrams of a correlation characteristic and a cross-correlation characteristic that correspond to pilot symbols according to an embodiment of this application;

FIG. 26(a) and FIG. 26(b) are diagrams of reflecting an autocorrelation characteristic and a cross-correlation characteristic according to an embodiment of this application;

FIG. 27 is a diagram of a seventh generation structure of a pilot symbol according to an embodiment of this application;

FIG. 28 is a diagram of a fifth implementation procedure of generating pilot symbols based on DP-16QAM modulation according to an embodiment of this application;

FIG. 29(a) and FIG. 29(b) are other diagrams of a correlation characteristic and a cross-correlation characteristic that correspond to pilot symbols according to an embodiment of this application;

FIG. 30(a) and FIG. 30(b) are other diagrams of reflecting an autocorrelation characteristic and a cross-correlation characteristic according to an embodiment of this application;

FIG. 31 is a diagram of a structure of a data transmission apparatus used at a transmitting end according to an embodiment of this application;

FIG. 32 is a diagram of a structure of a data transmission apparatus used at a receiving end according to an embodiment of this application; and

FIG. 33 is a diagram of another structure of a data transmission apparatus according to an embodiment of this application.

## DESCRIPTION OF EMBODIMENTS

Embodiments of this application provide a data transmission method and a data transmission apparatus. A simple target polynomial is designed to generate pilot symbols. Correspondingly, a simple hardware structure may be used for implementation. In addition, the generated pilot symbols have good autocorrelation and cross-correlation characteristics, and are direct current balanced. This helps a receiving end restore signal quality.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

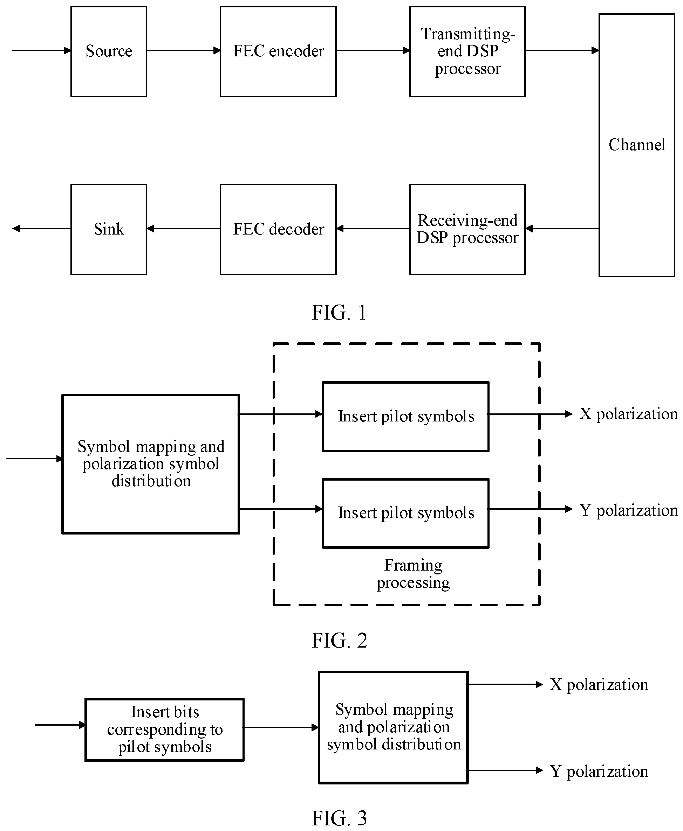

FIG. 1 is a diagram of a communication system to which an embodiment of this application is applied. As shown in FIG. 1, at a transmitting end, a source provides a to-be-sent data stream. An encoder receives and encodes the data stream. Encoded codeword information combining a parity bit and an information bit is sent to a transmitting-end digital signal processing (Digital Signal Processing, DSP) processor for framing, and is transmitted through a channel to a receiving end. After receiving a signal with distortion resulting from noise or other impairments on the channel, the receiving end sends the signal to a receiving-end DSP processor for dispersion compensation, synchronization, phase recovery, and other operations. Then, a decoder performs decoding to restore original data, and sends the data to a sink.

FIG. 2 is a diagram of an implementation of a transmitting-end DSP processor according to an embodiment of this application. As shown in FIG. 2, in a possible implementation, the transmitting-end DSP processor performs symbol mapping on a received data sequence. Usually, the received data sequence is an information sequence and a parity sequence obtained based on a forward error correction (Forward Error Correction, FEC) code. A symbol mapping manner includes but is not limited to quadrature phase shift keying (Quadrature Phase Shift Keying, QPSK) and quadrature amplitude modulation (Quadrature Amplitude Modulation, QAM). The transmitting-end DSP processor further performs polarization symbol distribution on the data sequence to obtain a dual-polarization (Dual-polarization, DP) symbol, for example, a DP-QPSK, DP-8QAM, DP-16QAM, DP-32QAM, or DP-64QAM symbol. For ease of description, two polarization directions are collectively denoted as an X polarization direction and a Y polarization direction below, where the X polarization direction and the Y polarization direction are orthogonal to each other. It should be understood that the X polarization direction and the Y polarization direction are not two specified polarization directions, but are any two polarization directions that are orthogonal to each other.

Further, the transmitting-end DSP processor performs the following framing processing on a specific quantity of dual-polarization symbols. Specifically, pilot symbols are inserted in each of the X polarization direction and the Y polarization direction, to obtain a to-be-sent dual-polarization symbol sequence, which is referred to as a frame (frame). In embodiments, the frame is referred to as a data frame, and may also be referred to as a DSP frame.

It should be noted that, after the symbol mapping, the symbols may be further interleaved, and the foregoing framing processing is performed on interleaved symbols. It should be understood that one dual-polarization symbol may be represented by two symbols, where one symbol is located in the X polarization direction, and the other symbol is located in the Y polarization direction. Each symbol may be represented by a complex number. For example, a symbol obtained through 16QAM modulation may be represented by any one of the following 16 complex numbers: $\pm 1 \pm 1j$, $\pm 1 \pm 3j$, $\pm 3 \pm 1j$, and $\pm 3 \pm 3j$, where $\pm$ herein represents a positive value or a negative value. For example, $\pm 3$ represents 3 or -3. j represents an imaginary unit. In some scenarios, the imaginary unit may alternatively be represented by another symbol like i. This is not limited herein. In some cases, real and imaginary parts are normalized, but the essence does not change. Further, a sequence having L dual-polarization symbols may be completely represented by two complex sequences whose lengths are L, where one complex sequence represents a symbol in the X polarization direction, and the other complex sequence represents a symbol in the Y polarization direction. Each complex sequence whose length is L is represented by a real part sequence (also referred to as an I-channel sequence) whose length is L and an imaginary part sequence (also referred to as a Q-channel sequence) whose length is L, where L is an integer greater than 1. Therefore, there are four different types of sequences, including an X-polarization I-channel sequence, an X-polarization Q-channel sequence, a Y-polarization I-channel sequence, and a Y-polarization Q-channel sequence.

FIG. 3 is a diagram of another implementation of a transmitting-end DSP processor according to an embodiment of this application. As shown in FIG. 3, different from the framing operation performed on the symbols shown in FIG. 2, in another possible implementation, before symbol mapping, the transmitting-end DSP processor inserts, in a received data sequence according to a used symbol mapping rule, bits corresponding to pilot symbols, and then may obtain, through the symbol mapping and polarization symbol distribution, a same frame as that in the operation shown in FIG. 2. In this case, before the symbol mapping, a bit sequence obtained by inserting the bits corresponding to the symbols may be further interleaved, and then the same frame as that in the operation shown in FIG. 2 is obtained through the symbol mapping and the polarization symbol distribution.

It should be noted that a specific framing manner used by the transmitting-end DSP processor is not limited in this application. In addition to the framing manners described in FIG. 2 and FIG. 3, other similar framing manners are also applicable to this solution, and are not described one by one herein.

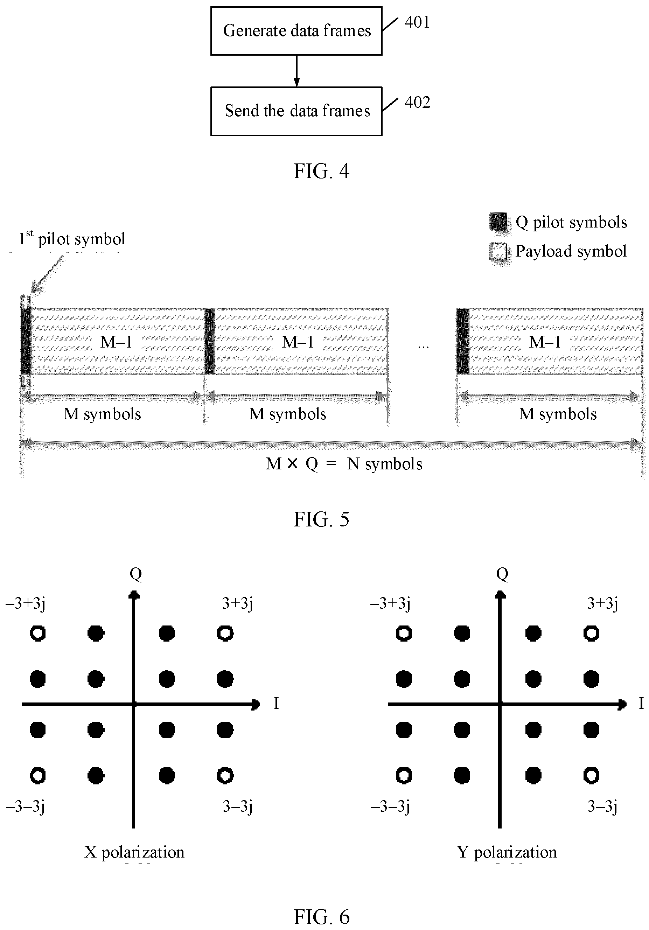

FIG. 4 is a schematic flowchart of a data transmission method according to an embodiment of this application. It should be understood that the data transmission method is applied to a transmitting end, for example, may be specifically implemented by the transmitting-end DSP processor shown in FIG. 1.

401: Generate data frames.

It should be noted that a specific implementation of generating the data frames is not limited in this application. For example, the framing manner described in FIG. 2 or FIG. 3 may be used. Certainly, other similar framing manners are also applicable to this solution, and are not described one by one herein. It should be understood that the data frame includes symbols in two polarization directions, and structures of the data frame in the two polarization directions are similar. For example, the data frame includes N symbols in an X polarization direction and N symbols in a Y polarization direction. The following describes the structure of the data frame by using one of the polarization directions as an example.

FIG. 5 is a diagram of a structure of a data frame according to an embodiment of this application. As shown in FIG. 5, in a polarization direction, the data frame includes N symbols, every M consecutive symbols in the N symbols include one pilot (pilot) symbol at a fixed location and M-1 payload (payload) symbols, $N = M \times Q$, Q is an even number, and M is an integer greater than or equal to 1. In other words, the every M consecutive symbols in the N symbols may be considered as one group, and the N symbols include Q groups of symbols in total. For example, N=6144, M=64, Q=96, a symbol 1 to a symbol 64 are 64 consecutive symbols in a 1st group, a symbol 65 to a symbol 128 are 64 consecutive symbols in a 2nd group, ..., and a symbol 6081 to a symbol 6144 are 64 consecutive symbols in a 96th group. It should be understood that the payload symbol may also be referred to as a symbol before framing, and includes an information symbol and a parity symbol that are obtained through FEC encoding. At a receiving end, a pilot symbol may be used to assist in carrier phase recovery, and may be further used to distinguish between the two polarization directions.

It should be understood that a specific location of a pilot symbol in each group of M symbols is not limited in this application. In an example, each pilot symbol is at a start location of M consecutive symbols in which the pilot symbol is located. For example, a 1st symbol in the data frame shown in FIG. 5 is a 1st pilot symbol.

It should be noted that Q pilot symbols in the data frame are generated by using a target polynomial (polynomial) and a seed (seed). Each pilot symbol is one of -A-Aj, -A+Aj, A-Aj, and A+Aj, and A is a real number. A degree (degree) of the target polynomial is less than or equal to 10, and a quantity of terms of the target polynomial is greater than or equal to 2 and less than or equal to 8, so that hardware implementation complexity is low. In addition, the Q pilot symbols are direct current balanced (Direct Current Balance), that is, a sum of the Q pilot symbols is 0, to be specific, a sum of real parts and a sum of imaginary parts of complex numbers corresponding to the Q pilot symbols are both 0, so that the direct current balance can be achieved. This helps the receiving end restore signal quality.

402: Send the data frames.

The sent data frames are transmitted through a channel to the receiving end. A specific operation performed after the receiving end receives the data frames is not described in detail in this application. For details, refer to the diagram of the structure of the system shown in FIG. 1.

The following describes in detail a characteristic of the pilot symbol and a specific manner of generating the pilot symbol.

In embodiments of this application, a value of A is determined based on a modulation format used during symbol generation. In some actual application scenarios, -A-Aj, -A+Aj, A-Aj, and A+Aj are symbols in a constellation diagram of the used modulation format. For example, if QPSK is used, there are only four symbols. In this case, A=$\pm 1$, and each pilot symbol may be represented by one of -1-1j, -1+1j, 1-1j, and 1+1j. In one frame, all frame symbols represented by the four complex numbers exist. If 16QAM is used, there are 16 symbols in the constellation diagram. In this case, A=$\pm 1$ or $\pm 3$.

FIG. 6 is a diagram of symbols in a constellation diagram according to an embodiment of this application. As shown in FIG. 6, when A=3 or -3, each pilot symbol may be represented by one of -3-3j, -3+3j, 3-3j, and 3+3j, for example, a hollow symbol shown in FIG. 6. Similarly, if 64QAM is used, A=$\pm 1$, $\pm 3$, $\pm 5$, or $\pm 7$. It should be noted that a higher-order modulation format may alternatively be used. Details are not described in this application. In an actual transmission process, four outer symbols in the constellation diagram are used as pilot symbols, so that a symbol error probability is low.

It should be noted that the symbols in the constellation diagram may alternatively be compressed, and correspondingly, a value of A is also compressed. The 16QAM is used as an example, and power normalization is performed on the 16 symbols in the 16QAM constellation diagram. In this case, values of the 16 symbols in the 16QAM constellation diagram are changed to $\{\pm \frac{1}{\sqrt{10}} \pm \frac{1}{\sqrt{10}}j, \pm \frac{1}{\sqrt{10}} \pm \frac{3}{\sqrt{10}}j, \pm \frac{3}{\sqrt{10}} \pm \frac{1}{\sqrt{10}}j, \pm \frac{3}{\sqrt{10}} \pm \frac{3}{\sqrt{10}}j\}$, and the value of A is $\frac{1}{\sqrt{10}}$ or $\frac{3}{\sqrt{10}}$. Alternatively, normalization in another manner may be used. This is not limited in this application.

It should be understood that, when four outermost symbols in the constellation diagram are used as the pilot symbols -A-Aj, -A+Aj, A-Aj, and A+Aj, the pilot symbols have high sensitivity (sensitivity), but have a large peak to average power (peak to average power) ratio. When four innermost symbols in the constellation diagram are used as the pilot symbols -A-Aj, -A+Aj, A-Aj, and A+Aj, the pilots have small noise (noise), but have low sensitivity (sensitivity).

It should be noted that, in some actual application scenarios, alternatively, the pilot symbols -A-Aj, -A+Aj, A-Aj, and A+Aj may not be the symbols in the constellation diagram of the used modulation format, and may be four symbols in an intermediate area between the four outermost symbols and the four innermost symbols in the constellation diagram. In this case, the pilot symbols have fair noise and sensitivity, but have a low peak to average power ratio. The 16QAM is used as an example, the values of the 16 symbols in the 16QAM constellation diagram are $\{\pm 1 \pm 1j, \pm 1 \pm 3j, \pm 3 \pm 1j, \pm 3 \pm 3j\}$, and the value of the real number A satisfies $1 \le A \le 3$. For example, the real number $A = \sqrt{5}$.

In addition, the two polarization directions are orthogonal to each other. To be specific, when one of the polarization directions is X polarization, the other polarization direction is Y polarization; or when one of the polarization directions is Y polarization, the other polarization direction is X polarization.

In the data frame, a sequence including Q pilot symbols in the X polarization direction is different from a sequence including Q pilot symbols in the Y polarization direction. For example, if a sequence including pilot symbols in the X polarization direction is -A-Aj, -A-Aj, A+Aj, and A-Aj, in a same order, a sequence including pilot symbols in the Y polarization direction cannot be the same as the sequence including the pilot symbols in the X polarization direction, and may be -A-Aj, -A-Aj, A+Aj, and A+Aj. There is one different symbol. This avoids a problem that the receiving end cannot distinguish between the two polarization directions in actual transmission.

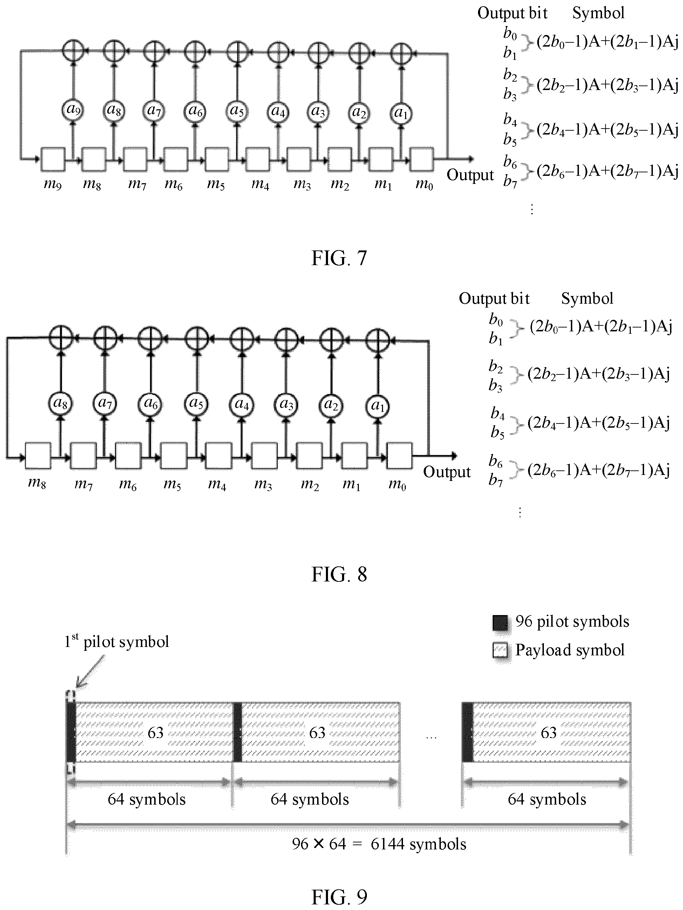

In embodiments of this application, when a 10-degree polynomial is used as the target polynomial, the 10-degree polynomial may be represented as:
$x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$, where values of $a_9, ...,$ and $a_1$ may be 0 or 1, and a quantity of non zeros in $a_9, ...,$ and $a_1$ is not greater than 6. FIG. 7 is a diagram of a first generation structure of a pilot symbol according to an embodiment of this application. As shown in FIG. 7, each block may be considered as one storage element, and a quantity of storage elements is the same as a quantity of bits in a preloaded seed, that is, each storage element is configured to input a corresponding bit that is in the seed. For example, if a seed length is 10 bits, and the seed may be represented as $m_9, m_8, m_7, m_6, m_5, m_4, m_3, m_2, m_1,$ and $m_0$ in a binary form, 10 corresponding storage elements are used. Certainly, the seed may alternatively be represented in a hexadecimal or decimal form, and needs to be converted into the binary form during an operation with the target polynomial. For example, 0110111000 is represented as 0x1B8 in the hexadecimal form, and is represented as 440 in the decimal form.

It should be noted that the polynomial $x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$ is sometimes written as $x^{\wedge}10 + a_9 \times (x^{\wedge}9) + a_8 \times (x^{\wedge}8) + a_7 \times (x^{\wedge}7) + a_6 \times (x^{\wedge}6) + a_8 \times (x^{\wedge}5) + a_4 \times (x^{\wedge}4) + a_3 \times (x^{\wedge}3) + a_2 \times (x^{\wedge}2) + a_1 \times x + 1$.

When a 9-degree polynomial is used as the target polynomial, the 9-degree polynomial may be represented as: $x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$, where values of $a_8, ...,$ and $a_1$ may be 0 or 1, and a quantity of non zeros in $a_8, ...,$ and $a_1$ is not greater than 6.

FIG. 8 is a diagram of a second generation structure of a pilot symbol according to an embodiment of this application. As shown in FIG. 8, a seed length is 9 bits, and the seed may be represented as $m_8, m_7, m_6, m_5, m_4, m_3, m_2, m_1,$ and $m_0$ in a binary form. Certainly, the seed may alternatively be represented in a hexadecimal or decimal form, and needs to be converted into the binary form during an operation with the target polynomial.

It should be noted that an algebraic expression formed through addition (or subtraction) of several monomials is referred to as a polynomial. Each monomial in the polynomial is referred to as a term of the polynomial, and a highest degree (degree, which is also referred to as an order) in degrees of these monomials is a degree of the polynomial. A quantity of terms of the polynomial is a quantity of the foregoing monomials whose coefficients are not 0. For example, a quantity of terms of the foregoing 10-degree polynomial is equal to 2 plus the quantity of non zeros in $a_9, ...,$ and $a_1$.

In embodiments of this application, a same target generator polynomial may be used for pilot symbols in two orthogonal polarization directions. However, because seeds used in the two polarization directions are different, correspondingly, pilot symbols output in the two polarization directions are not completely the same.

In FIG. 7 or FIG. 8, for a scenario in which Q pilot symbols need to be generated, a consecutive bit sequence $b_0,$ $b_1, b_2, ...,$ and $b_{2Q-1}$ whose bit length is 2Q is obtained based on the target polynomial and the seed. The foregoing bit sequence is also referred to as a pseudo random binary sequence (Pseudo Random Binary Sequence, PRBS). A bit sequence generated by using the 9-degree polynomial is also referred to as a PRBS9, and a bit sequence generated by using the 10-degree polynomial is also referred to as a PRBS10. Every two consecutive bits in the bit sequence $b_0, b_1,$ $b_2, ...,$ and $b_{2Q-1}$ are mapped to one symbol, where $b_{2t}$ and $b_{2t+1}$ are mapped to one symbol $(2b_{2t} - 1)A + (2b_{2t+1} - 1)Aj$, and $0 \leq t < Q$.

In this embodiment of this application, the target polynomial and the seed may be determined by designing the values of the coefficients $a_9, ...,$ and $a_1$ in the 10-degree polynomial or the values of the coefficients $a_8, ...,$ and $a_1$ in the 9-degree polynomial, so that a generated pilot symbol sequence in the X polarization direction or the Y polarization direction has a good autocorrelation characteristic, and pilot symbol sequences in the two polarization directions have a good cross-correlation characteristic. In addition, an appropriate target polynomial and seed are selected, so that the Q pilot symbols achieve the direct current balance. This helps the receiving end restore the signal quality.

It should be noted that the data frame considered in embodiments of the present invention includes only the pilot symbol and the payload symbol (also referred to as the symbol before framing). This DSP frame structure is different from another existing DSP superframe structure. A DSP superframe usually includes a plurality of types of symbols, for example, a frame synchronization symbol used for frame synchronization and distinguishing between two polarization directions, a training symbol used for link training, and a pilot symbol used for carrier phase recovery. Therefore, in receiving-end processing corresponding to the DSP frame considered in the present invention, in addition to assisting in the carrier phase recovery, the pilot symbol further needs to be used to distinguish between two polarization directions and used for the frame synchronization. The receiving end obtains four data streams: a real part sequence data stream in the X polarization direction, an imaginary part sequence data stream in the X polarization direction, a real part sequence data stream in the Y polarization direction, and an imaginary part sequence data stream in the Y polarization direction, and needs to use the pilot symbol to determine whether each data stream corresponds to a real part sequence or an imaginary part sequence in the X polarization direction or the Y polarization direction. In this embodiment of the present invention, the target polynomial and the seed are determined by designing the values of the coefficients $a_9, ...,$ and $a_1$ in the 10-degree polynomial or the values of the coefficients $a_8, ...,$ and $a_1$ in the 9-degree polynomial, so that real part sequences (also referred to as I channels) and imaginary part sequences (also referred to as Q channels) of the generated pilot symbol sequences in the two polarization directions have good autocorrelation and cross-correlation characteristics. More specifically, a total of four sequences with a length of Q bits: the real part sequence of the designed pilot symbol sequence in the X polarization direction, the imaginary part sequence of the designed pilot symbol sequence in the X polarization direction, the real part sequence of the designed pilot symbol sequence in the Y polarization direction, and the imaginary part sequence of the designed pilot symbol sequence in the Y polarization direction have a good autocorrelation characteristic and a good cross-correlation characteristic.

It should be noted that, it can be learned from FIG. 7 and FIG. 8 that the degree of the target polynomial and the quantity of non-zero terms in the coefficients affect complexity of the generation structure of the pilot symbol. In embodiments of this application, when the target polynomial is designed, the degree of the polynomial needs to be constrained not to be greater than 10, and the quantity of non-zero terms of the polynomial needs to be constrained not to be greater than 8. When the polynomial is selected, the degree and the quantity of non-zero terms of the target polynomial need to be selected to be as small as possible, so that the complexity of the generation structure of the pilot symbol is low, and power consumption is low. It should be further noted that, when a target polynomial is given, there may be no seed that can cause a pilot symbol sequence, determined based on the target polynomial and the seed, to have good autocorrelation and cross-correlation. Therefore, in the target polynomial selection, not only a minimum degree and a minimum quantity of non-zero terms are selected, but also whether a corresponding seed can be selected to cause a generated pilot symbol sequence and a real part sequence and an imaginary part sequence of the pilot symbol sequence to have good autocorrelation and cross-correlation characteristics needs to be considered, to help the receiving end restore the signal quality.

In a possible implementation, the target polynomial is one in the following Table 1.

Table 1

| Sequence number | Target polynomial |
|---|---|
| 1 | x^9+x^4+x^3+x+1 |
| 2 | x^9+x^5+x^4+x+1 |
| 3 | x^9+x^8+x^5+x^4+1 |
| 4 | x^9+x^8+x^6+x^5+1 |
| 5 | x^10+x^4+x^3+x+1 |
| 6 | x^10+x^5+x^2+x+1 |
| 7 | x^10+x^8+x^5+x+1 |
| 8 | x^10+x^9+x^4+x+1 |
| 9 | x^10+x^9+x^5+x^2+1 |
| 10 | x^10+x^9+x^6+x+1 |
| 11 | x^10+x^9+x^7+x^6+1 |
| 12 | x^10+x^9+x^8+x^5+1 |
| 13 | x^10+x^8+x^6+x^5+x^3+x+1 |
| 14 | x^10+x^8+x^7+x^3+x^2+x+1 |
| 15 | x^10+x^8+x^7+x^6+x^2+x+1 |
| 16 | x^10+x^9+x^7+x^5+x^4+x^2+1 |
| 17 | x^10+x^9+x^8+x^4+x^3+x^2+1 |
| 18 | x^10+x^9+x^8+x^7+x^3+x^2+1 |

In embodiments of this application, that a polynomial whose degree is less than or equal to 10, especially the 9-degree or 10-degree polynomial is considered mainly because a higher-degree polynomial cannot significantly improve autocorrelation and cross-correlation characteristics of a generated pilot symbol sequence. Although implementation complexity of a lower-degree polynomial, for example, a 6-degree or 7-degree polynomial, is low, autocorrelation and cross-correlation characteristics of a generated pilot symbol sequence are usually not good enough. In addition, a polynomial whose quantity of terms is not greater than 8, especially a 9-degree or 10-degree polynomial whose quantity of terms is 5 or 7 is considered, and the polynomial has low hardware implementation complexity.

In a possible implementation, an example in which N=6144, M=64, and Q=96 is used, and a correspondence between the target polynomial, a seed in the X polarization direction, and a seed in the Y polarization direction is one in the following Table 2. In this way, generated 96 pilot symbols have good autocorrelation and cross-correlation characteristics in the X polarization direction or the Y polarization direction.

Table 2

| Sequence number | Target polynomial | Seed in the X polarization direction | Seed in the Y polarization direction |
|---|---|---|---|
| 1 | x^9+x^4+x^3+x+1 | 0x002 | 0x115 |

(continued)

| Sequence number | Target polynomial | Seed in the X polarization direction | Seed in the Y polarization direction |
|---|---|---|---|
| 2 | x^9+x^4+x^3+x+1 | 0x002 | 0x02B |
| 3 | x^9+x^4+x^3+x+1 | 0x049 | 0x115 |
| 4 | x^9+x^4+x^3+x+1 | 0x049 | 0x02B |
| 5 | x^9+x^4+x^3+x+1 | 0x115 | 0x08D |
| 6 | x^9+x^4+x^3+x+1 | 0x08D | 0x02B |
| 7 | x^9+x^5+x^4+x+1 | 0x098 | 0x0FE |
| 8 | x^9+x^5+x^4+x+1 | 0x098 | 0x0BF |
| 9 | x^9+x^5+x^4+x+1 | 0x098 | 0x17F |
| 10 | x^9+x^5+x^4+x+1 | 0x14C | 0x0FE |
| 11 | x^9+x^5+x^4+x+1 | 0x14C | 0x0BF |
| 12 | x^9+x^5+x^4+x+1 | 0x14C | 0x17F |
| 13 | x^9+x^5+x^4+x+1 | 0x0A6 | 0x0FE |
| 14 | x^9+x^5+x^4+x+1 | 0x0A6 | 0x0BF |
| 15 | x^9+x^5+x^4+x+1 | 0x0A6 | 0x17F |
| 16 | x^9+x^8+x^5+x^4+1 | 0x1D4 | 0x11E |
| 17 | x^9+x^8+x^5+x^4+1 | 0x1D4 | 0x03D |
| 18 | x^9+x^8+x^5+x^4+1 | 0x1D4 | 0x08F |
| 19 | x^9+x^8+x^5+x^4+1 | 0x0EA | 0x11E |
| 20 | x^9+x^8+x^5+x^4+1 | 0x0EA | 0x03D |
| 21 | x^9+x^8+x^5+x^4+1 | 0x0EA | 0x08F |
| 22 | x^9+x^8+x^5+x^4+1 | 0x11E | 0x175 |
| 23 | x^9+x^8+x^5+x^4+1 | 0x175 | 0x03D |
| 24 | x^9+x^8+x^5+x^4+1 | 0x175 | 0x08F |
| 25 | x^9+x^8+x^6+x^5+1 | 0x16A | 0x1E1 |
| 26 | x^9+x^8+x^6+x^5+1 | 0x16A | 0x1C3 |
| 27 | x^9+x^8+x^6+x^5+1 | 0x1E1 | 0x069 |
| 28 | x^9+x^8+x^6+x^5+1 | 0x1E1 | 0x113 |
| 29 | x^9+x^8+x^6+x^5+1 | 0x069 | 0x1C3 |
| 30 | x^9+x^8+x^6+x^5+1 | 0x1C3 | 0x113 |
| 31 | x^10+x^4+x^3+x+1 | 0x0E6 | 0x36E |
| 32 | x^10+x^5+x^2+x+1 | 0x3DC | 0x36A |
| 33 | x^10+x^5+x^2+x+1 | 0x36A | 0x35E |
| 34 | x^10+x^5+x^2+x+1 | 0x36A | 0x1AF |
| 35 | x^10+x^8+x^5+x+1 | 0x1FD | 0x3A7 |
| 36 | x^10+x^9+x^4+x+1 | 0x12A | 0x039 |
| 37 | x^10+x^9+x^4+x+1 | 0x12A | 0x107 |
| 38 | x^10+x^9+x^4+x+1 | 0x039 | 0x295 |
| 39 | x^10+x^9+x^4+x+1 | 0x295 | 0x107 |
| 40 | x^10+x^9+x^5+x^2+1 | 0x26A | 0x03A |

(continued)

| Sequence number | Target polynomial | Seed in the X polarization direction | Seed in the Y polarization direction |
|---|---|---|---|
| 41 | x^10+x^9+x^6+x+1 | 0x1A2 | 0x379 |
| 42 | x^10+x^9+x^6+x+1 | 0x1A2 | 0x3EF |
| 43 | x^10+x^9+x^6+x+1 | 0x2D1 | 0x379 |
| 44 | x^10+x^9+x^6+x+1 | 0x2D1 | 0x3EF |
| 45 | x^10+x^9+x^7+x^6+1 | 0x3CC | 0x1E2 |
| 46 | x^10+x^9+x^8+x^5+1 | 0x170 | 0x14D |
| 47 | x^10+x^9+x^8+x^5+1 | 0x0B8 | 0x14D |
| 48 | x^10+x^9+x^8+x^5+1 | 0x299 | 0x14D |
| 49 | x^10+x^8+x^6+x^5+x^3+x+1 | 0x354 | 0x2AD |
| 50 | x^10+x^8+x^6+x^5+x^3+x+1 | 0x17C | 0x2AD |
| 51 | x^10+x^8+x^6+x^5+x^3+x+1 | 0x1AA | 0x2AD |
| 52 | x^10+x^8+x^6+x^5+x^3+x+1 | 0x06A | 0x2AD |
| 53 | x^10+x^8+x^6+x^5+x^3+x+1 | 0x3E6 | 0x2AD |
| 54 | x^10+x^8+x^6+x^5+x^3+x+1 | 0x2A9 | 0x2AD |
| 55 | x^10+x^8+x^6+x^5+x^3+x+1 | 0x2F9 | 0x2AD |
| 56 | x^10+x^8+x^6+x^5+x^3+x+1 | 0x0D5 | 0x2AD |
| 57 | x^10+x^8+x^6+x^5+x^3+x+1 | 0x2AD | 0x1F3 |
| 58 | x^10+x^8+x^6+x^5+x^3+x+1 | 0x2AD | 0x14B |
| 59 | x^10+x^8+x^6+x^5+x^3+x+1 | 0x2AD | 0x297 |
| 60 | x^10+x^8+x^6+x^5+x^3+x+1 | 0x2AD | 0x12F |
| 61 | x^10+x^8+x^7+x^3+x^2+x+1 | 0x320 | 0x3AC |
| 62 | x^10+x^8+x^7+x^3+x^2+x+1 | 0x320 | 0x1D6 |
| 63 | x^10+x^8+x^7+x^3+x^2+x+1 | 0x320 | 0x075 |
| 64 | x^10+x^8+x^7+x^3+x^2+x+1 | 0x320 | 0x0ED |
| 65 | x^10+x^8+x^7+x^3+x^2+x+1 | 0x320 | 0x0EB |
| 66 | x^10+x^8+x^7+x^3+x^2+x+1 | 0x0D4 | 0x3AC |
| 67 | x^10+x^8+x^7+x^3+x^2+x+1 | 0x0D4 | 0x1D6 |
| 68 | x^10+x^8+x^7+x^3+x^2+x+1 | 0x0D4 | 0x075 |
| 69 | x^10+x^8+x^7+x^3+x^2+x+1 | 0x0D4 | 0x0EB |
| 70 | x^10+x^8+x^7+x^3+x^2+x+1 | 0x3AC | 0x01A |
| 71 | x^10+x^8+x^7+x^3+x^2+x+1 | 0x01A | 0x1D6 |
| 72 | x^10+x^8+x^7+x^3+x^2+x+1 | 0x01A | 0x075 |
| 73 | x^10+x^8+x^7+x^3+x^2+x+1 | 0x01A | 0x0EB |
| 74 | x^10+x^8+x^7+x^6+x^2+x+1 | 0x1B0 | 0x3F4 |
| 75 | x^10+x^8+x^7+x^6+x^2+x+1 | 0x1B0 | 0x1FA |
| 76 | x^10+x^8+x^7+x^6+x^2+x+1 | 0x3F4 | 0x13D |
| 77 | x^10+x^8+x^7+x^6+x^2+x+1 | 0x1FA | 0x13D |
| 78 | x^10+x^9+x^7+x^5+x^4+x^2+1 | 0x35C | 0x2EE |
| 79 | x^10+x^9+x^7+x^5+x^4+x^2+1 | 0x0DC | 0x2EE |

(continued)

| Sequence number | Target polynomial | Seed in the X polarization direction | Seed in the Y polarization direction |
|---|---|---|---|
| 80 | x^10+x^9+x^7+x^5+x^4+x^2+1 | 0x33A | 0x2EE |
| 81 | x^10+x^9+x^7+x^5+x^4+x^2+1 | 0x26E | 0x2EE |
| 82 | x^10+x^9+x^7+x^5+x^4+x^2+1 | 0x2EE | 0x2B9 |
| 83 | x^10+x^9+x^7+x^5+x^4+x^2+1 | 0x2EE | 0x1B9 |
| 84 | x^10+x^9+x^7+x^5+x^4+x^2+1 | 0x2EE | 0x275 |
| 85 | x^10+x^9+x^7+x^5+x^4+x^2+1 | 0x2EE | 0x39D |
| 86 | x^10+x^9+x^7+x^5+x^4+x^2+1 | 0x2EE | 0x173 |
| 87 | x^10+x^9+x^7+x^5+x^4+x^2+1 | 0x2EE | 0x0EB |
| 88 | x^10+x^9+x^7+x^5+x^4+x^2+1 | 0x2EE | 0x39B |
| 89 | x^10+x^9+x^7+x^5+x^4+x^2+1 | 0x2EE | 0x337 |
| 90 | x^10+x^9+x^8+x^4+x^3+x^2+1 | 0x0C6 | 0x157 |
| 91 | x^10+x^9+x^8+x^4+x^3+x^2+1 | 0x0C6 | 0x2D7 |
| 92 | x^10+x^9+x^8+x^4+x^3+x^2+1 | 0x263 | 0x157 |
| 93 | x^10+x^9+x^8+x^4+x^3+x^2+1 | 0x263 | 0x2D7 |
| 94 | x^10+x^9+x^8+x^7+x^3+x^2+1 | 0x350 | 0x130 |
| 95 | x^10+x^9+x^8+x^7+x^3+x^2+1 | 0x350 | 0x298 |
| 96 | x^10+x^9+x^8+x^7+x^3+x^2+1 | 0x350 | 0x34C |
| 97 | x^10+x^9+x^8+x^7+x^3+x^2+1 | 0x350 | 0x261 |
| 98 | x^10+x^9+x^8+x^7+x^3+x^2+1 | 0x350 | 0x01F |
| 99 | x^10+x^9+x^8+x^7+x^3+x^2+1 | 0x130 | 0x014 |
| 100 | x^10+x^9+x^8+x^7+x^3+x^2+1 | 0x130 | 0x282 |
| 101 | x^10+x^9+x^8+x^7+x^3+x^2+1 | 0x298 | 0x014 |
| 102 | x^10+x^9+x^8+x^7+x^3+x^2+1 | 0x298 | 0x282 |
| 103 | x^10+x^9+x^8+x^7+x^3+x^2+1 | 0x014 | 0x34C |
| 104 | x^10+x^9+x^8+x^7+x^3+x^2+1 | 0x014 | 0x261 |
| 105 | x^10+x^9+x^8+x^7+x^3+x^2+1 | 0x34C | 0x282 |
| 106 | x^10+x^9+x^8+x^7+x^3+x^2+1 | 0x282 | 0x261 |

It should be noted that, when the target polynomial is designed, the degree of the polynomial needs to be constrained not to be greater than 10, and the quantity of non-zero terms of the polynomial needs to be constrained not to be greater than 8. When the polynomial is selected, the degree and the quantity of non-zero terms of the target polynomial need to be selected to be as small as possible, so that the complexity of the generation structure of the pilot symbol is low, and power consumption is low. It is considered that when a target polynomial is given, there may be no seed that can cause a pilot symbol sequence, determined based on the target polynomial and the seed, to have good autocorrelation and cross-correlation. Therefore, in the target polynomial selection, not only a minimum degree and a minimum quantity of non-zero terms are selected, but also whether a corresponding seed can be selected to cause a generated pilot symbol sequence and a real part sequence and an imaginary part sequence of the pilot symbol sequence to have good autocorrelation and cross-correlation characteristics needs to be considered, to help the receiving end restore the signal quality.

In another possible implementation, the target polynomial is one in the following Table 6.

Table 6

| Sequence number | Target polynomial |
| --- | --- |
| 1 | x^10+x^9+x^8+x^7+x^4+x+1 |
| 2 | x^10+x^9+x^6+x^3+x^2+x+1 |

It should be understood that, it is considered that there is a frequency difference between a laser at the transmitting end and a laser at the receiving end, namely, a frequency offset of the laser, and an effect of frame synchronization performed by the receiving end is affected. The polynomials in Table 6 have good differential autocorrelation and differential cross-correlation characteristics, and good correlation effects can still be achieved when there is the frequency offset of the laser.

In a possible implementation, an example in which N=6144, M=64, and Q=96 is used, and a correspondence between the target polynomial, a seed in the X polarization direction, and a seed in the Y polarization direction is one in the following Table 7.

Table 7

| Sequence number | Target polynomial | Seed in the X polarization direction | Seed in the Y polarization direction |
| --- | --- | --- | --- |
| 1 | x^9+x^8+x^6+x^5+1 | 0x1D4 | 0x1E1 |
| 2 | x^9+x^4+x^3+x+1 | 0x094 | 0x02B |
| 3 | x^10+x^9+x^7+x^6+1 | 0x058 | 0x3CC |
| 4 | x^10+x^9+x^7+x^6+1 | 0x3CC | 0x316 |
| 5 | x^10+x^9+x^7+x^6+1 | 0x3CC | 0x18E |
| 6 | x^10+x^9+x^7+x^6+1 | 0x3CC | 0x163 |
| 7 | x^10+x^9+x^8+x^5+1 | 0x152 | 0x14D |
| 8 | x^10+x^9+x^8+x^5+1 | 0x2A4 | 0x14D |
| 9 | x^10+x^9+x^6+x+1 | 0x0B4 | 0x2D1 |
| 10 | x^10+x^9+x^6+x+1 | 0x1A2 | 0x05A |
| 11 | x^10+x^9+x^6+x+1 | 0x05A | 0x2D1 |
| 12 | x^10+x^9+x^4+x+1 | 0x128 | 0x12A |
| 13 | x^10+x^9+x^4+x+1 | 0x250 | 0x12A |
| 14 | x^10+x^9+x^4+x+1 | 0x250 | 0x295 |
| 15 | x^10+x^4+x^3+x+1 | 0x39C | 0x36E |
| 16 | x^10+x^4+x^3+x+1 | 0x18E | 0x36E |
| 17 | x^10+x^4+x^3+x+1 | 0x36E | 0x239 |
| 18 | x^10+x^4+x^3+x+1 | 0x36E | 0x0E7 |
| 19 | x^10+x^5+x^2+x+1 | 0x232 | 0x36A |
| 20 | x^10+x^5+x^2+x+1 | 0x36A | 0x119 |
| 21 | x^10+x^9+x^8+x^7+x^3+x^2+1 | 0x282 | 0x01F |
| 22 | x^10+x^9+x^8+x^7+x^3+x^2+1 | 0x014 | 0x01F |
| 23 | x^10+x^9+x^8+x^7+x^4+x+1 | 0x1BA | 0x2CE |
| 24 | x^10+x^9+x^8+x^7+x^4+x+1 | 0x2A6 | 0x2CE |
| 25 | x^10+x^9+x^8+x^7+x^4+x+1 | 0x196 | 0x2CE |
| 26 | x^10+x^9+x^8+x^7+x^4+x+1 | 0x2CE | 0x259 |
| 27 | x^10+x^9+x^8+x^7+x^4+x+1 | 0x380 | 0x2CE |

(continued)

| Sequence number | Target polynomial | Seed in the X polarization direction | Seed in the Y polarization direction |
|---|---|---|---|
| 28 | x^10+x^9+x^8+x^7+x^4+x+1 | 0x380 | 0x081 |
| 29 | x^10+x^9+x^8+x^7+x^4+x+1 | 0x2CE | 0x375 |
| 30 | x^10+x^9+x^8+x^7+x^4+x+1 | 0x2CE | 0x353 |
| 31 | x^10+x^9+x^8+x^7+x^4+x+1 | 0x2CE | 0x2FF |
| 32 | x^10+x^9+x^8+x^7+x^4+x+1 | 0x2CE | 0x3FF |
| 33 | x^10+x^9+x^8+x^7+x^4+x+1 | 0x301 | 0x2D9 |
| 34 | x^10+x^9+x^8+x^7+x^4+x+1 | 0x301 | 0x3D9 |
| 35 | x^10+x^9+x^8+x^7+x^4+x+1 | 0x1BA | 0x3D9 |
| 36 | x^10+x^9+x^8+x^7+x^4+x+1 | 0x1BA | 0x0AD |
| 37 | x^10+x^9+x^8+x^7+x^4+x+1 | 0x19C | 0x301 |
| 38 | x^10+x^8+x^7+x^3+x^2+x+1 | 0x0D4 | 0x0ED |
| 39 | x^10+x^8+x^7+x^3+x^2+x+1 | 0x01A | 0x0ED |
| 40 | x^10+x^9+x^6+x^3+x^2+x+1 | 0x3C4 | 0x186 |
| 41 | x^10+x^9+x^6+x^3+x^2+x+1 | 0x3C4 | 0x261 |
| 42 | x^10+x^9+x^6+x^3+x^2+x+1 | 0x3C4 | 0x1A3 |
| 43 | x^10+x^9+x^6+x^3+x^2+x+1 | 0x3C4 | 0x0C7 |
| 44 | x^10+x^9+x^6+x^3+x^2+x+1 | 0x3C4 | 0x346 |
| 45 | x^10+x^9+x^6+x^3+x^2+x+1 | 0x3C4 | 0x1C5 |
| 46 | x^10+x^9+x^6+x^3+x^2+x+1 | 0x3C4 | 0x063 |
| 47 | x^10+x^9+x^6+x^3+x^2+x+1 | 0x1C5 | 0x327 |
| 48 | x^10+x^9+x^6+x^3+x^2+x+1 | 0x240 | 0x3C4 |
| 49 | x^10+x^9+x^6+x^3+x^2+x+1 | 0x3C4 | 0x103 |
| 50 | x^10+x^9+x^6+x^3+x^2+x+1 | 0x2E2 | 0x226 |
| 51 | x^10+x^9+x^6+x^3+x^2+x+1 | 0x2E2 | 0x165 |
| 52 | x^10+x^9+x^6+x^3+x^2+x+1 | 0x165 | 0x0C7 |
| 53 | x^10+x^9+x^6+x^3+x^2+x+1 | 0x266 | 0x0C7 |
| 54 | x^10+x^9+x^6+x^3+x^2+x+1 | 0x2E2 | 0x3E2 |
| 55 | x^10+x^9+x^6+x^3+x^2+x+1 | 0x0C4 | 0x226 |
| 56 | x^10+x^9+x^8+x^7+x^4+x+1 | 0x1D8 | 0x2D9 |

It should be understood that, it is considered that there is the frequency difference between the laser at the transmitting end and the laser at the receiving end, namely, the frequency offset of the laser, and the effect of the frame synchronization performed by the receiving end is affected. The polynomials and the seeds in Table 7 have good differential autocorrelation and differential cross-correlation characteristics, and good correlation effects can still be achieved when there is the frequency offset of the laser.

Further, in a polarization direction, a difference between every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help the receiving end restore the signal quality. For example, Q=96, the quantities of pilot symbols that are respectively -A-Aj, -A+Aj, A-Aj, and A+Aj may be 23, 25, 25, and 23 in sequence, and the difference between the every two of quantities is less than or equal to 2.

In a possible implementation, the quantity of pilot symbols that are -A-Aj is $\lfloor Q/4 \rfloor$, the quantity of pilot symbols that are - A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$; the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$; the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is [Q/4]+1, or the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$. $\lfloor a \rfloor$ represents rounding down a positive real number a to the nearest integer. For example, Q=96, and the quantities of pilot symbols that are respectively -A-Aj, -A+Aj, A-Aj, and A+Aj may be 24, 24, 24, and 24 in sequence, the quantities of pilot symbols that are respectively -A-Aj, -A+Aj, A-Aj, and A+Aj may be 23, 25, 25, and 23 in sequence, or the quantities of pilot symbols that are respectively -A-Aj, -A+Aj, A-Aj, and A+Aj may be 25, 23, 23, and 25 in sequence.

Further, in two polarization directions, a total quantity of pilot symbols that are -A-Aj is Q/2, a total quantity of pilot symbols that are -A+Aj is Q/2, a total quantity of pilot symbols that are A-Aj is Q/2, and a total quantity of pilot symbols that are A+Aj is Q/2. This effectively ensures balance between symbol quantities. In addition, it can be further ensured that the sequence including the pilot symbols achieves the direct current balance, to help the receiving end restore the signal quality.

In a possible implementation, in the X polarization direction, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$. In the Y polarization direction, the quantity of pilot symbols that are -A-Aj is $Q/2-\lfloor Q/4 \rfloor$, the quantity of pilot symbols that are -A+Aj is [Q/4], the quantity of pilot symbols that are A-Aj is [Q/4], and the quantity of pilot symbols that are A+Aj is $Q/2-\lfloor Q/4 \rfloor$.

In another possible implementation, in the X polarization direction, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$. In the Y polarization direction, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$.

Further, in a polarization direction, a quantity of consecutive identical pilot symbols in the data frame is less than or equal to 4. A pilot symbol sequence obtained under this condition helps improve the signal quality restored by the receiving end.

The following describes several specific embodiments by using an example in which N=6144, M=64, and Q=96.

Embodiment 1: Implementation in which the degree of the polynomial is 9

FIG. 9 is a diagram of a structure of another data frame according to an embodiment of this application. Considering dual-polarization DP-16QAM modulation, 96×63=6048 dual-polarization payload symbols are obtained through BCH (126, 110) encoding and the DP-16QAM dual-polarization modulation. One pilot symbol is inserted before every 63 symbols in the 6048 payload symbols, and a total of 96 pilot symbols are inserted, to obtain the structure of the data frame (also referred to as a DSP frame) shown in FIG. 9, that is, N=6144, M=64, and Q=96. In the X polarization direction or the Y polarization direction, the 96 pilot symbols are generated based on the target polynomial and the seed. Specifically, for a scenario in which the 96 pilot symbols need to be generated, a consecutive bit sequence $b_0$, $b_1$, $b_2$, ... , and $b_{191}$ whose bit length is 96 × 2 = 192 is obtained based on the target polynomial and the seed. Every two consecutive bits in the bit sequence $b_0$, $b_1$, $b_2$, ... , and $b_{191}$ are mapped to one symbol, where $b_{2t}$ and $b_{2t+1}$ are mapped to one symbol $(2b_{2t} - 1)A + (2b_{2t+1} - 1)Aj$. It should be noted that, alternatively, the symbol $(2b_{2t} - 1)A + (2b_{2t+1} - 1)Aj$ may not be a symbol in a constellation diagram of a used modulation format, and may be one of four symbols in an intermediate area between four outermost symbols and four innermost symbols in the constellation diagram of the used modulation format.

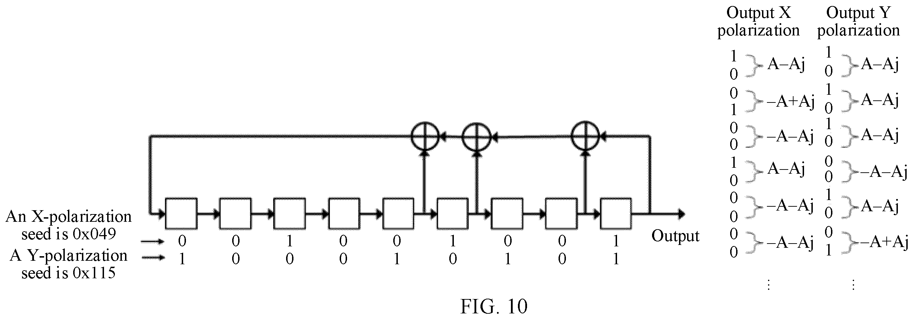

FIG. 10 is a diagram of a third generation structure of a pilot symbol according to an embodiment of this application. If the target polynomial is $x^9 + x^4 + x^3 + x + 1$, the seed in the X polarization direction is 0x049, and the seed in the Y polarization direction is 0x115, that is, an item whose sequence number is 3 in Table 2 is used, a process of generating the 96 pilot symbols in each of the two polarization directions is shown in FIG. 10.

In the X polarization direction, an input seed is 0x049, and is converted into a binary sequence 001001001, that is, values of $m_8$ to $m_0$. If two bits that are consecutively output in sequence are 1 and 0, the pilot symbol in the X polarization direction is A-Aj. If two bits that are consecutively output in sequence are 0 and 0, the pilot symbol in the X polarization direction is -A-Aj. If two bits that are consecutively output in sequence are 1 and 1, the pilot symbol in the X polarization direction is A+Aj. If two bits that are consecutively output in sequence are 0 and 1, the pilot symbol in the X polarization direction is -A+Aj. By analogy, the 96 pilot symbols in the X polarization direction may be obtained.

In the Y polarization direction, the input polarization seed is 0x115, and is converted into a binary sequence 100010101, that is, values of $m_8$ to $m_0$. If two bits that are consecutively output in sequence are 1 and 0, the pilot symbol in the Y polarization direction is A-Aj. If two bits that are consecutively output in sequence are 0 and 0, the pilot symbol in the Y polarization direction is -A-Aj. If two bits that are consecutively output in sequence are 1 and 1, the pilot symbol in the Y polarization direction is A+Aj. If two bits that are consecutively output in sequence are 0 and 1, the pilot symbol in the Y polarization direction is -A+Aj. By analogy, the 96 pilot symbols in the Y polarization direction may be obtained.

Specifically, the 96 pilot symbols in each of the two polarization directions are shown in the following Table 3.

Table 3

| Polarization direction | Pilot symbol |
| --- | --- |
| X polarization direction | A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, -A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj |
| Y polarization direction | A-Aj, A-Aj, A-Aj, -A-Aj, A-Aj, -A+Aj, A-Aj, A-Aj, -A+Aj, A-Aj, A+Aj, -A+Aj, A-Aj, -A-Aj, - A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj |

In the X polarization direction, quantities of pilot symbols that are respectively -A-Aj, -A+Aj, A-Aj, and A+Aj are 25, 23, 23, and 25 in sequence. In the Y polarization direction, quantities of pilot symbols that are respectively -A-Aj, -A+Aj, A-Aj, and A+Aj are 23, 25, 25, and 23 in sequence. In a polarization direction, a difference between every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance. Further, in the X and Y polarization directions, a total quantity of pilot symbols that are -A-Aj, a total quantity of pilot symbols that are -A+Aj, a total quantity of pilot symbols that are A-Aj, and a total quantity of pilot symbols that are A+Aj are all 48. This effectively ensures balance between symbol quantities, to help the receiving end restore the signal quality.

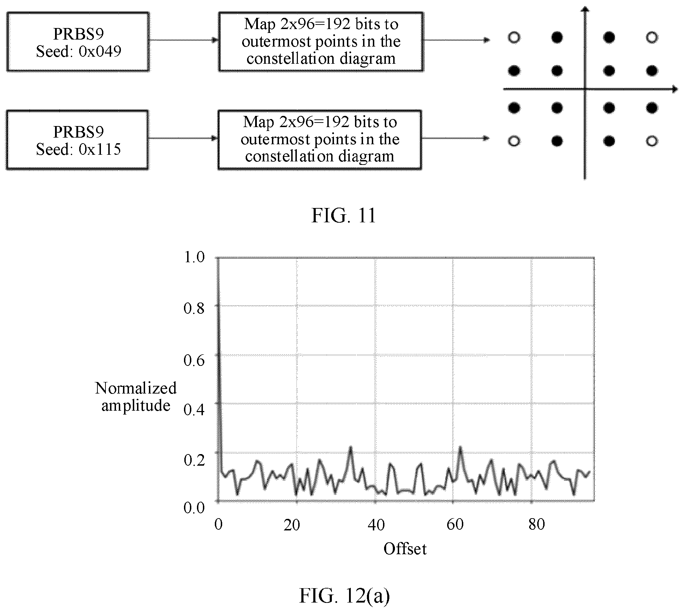

FIG. 11 is a diagram of a first implementation procedure of generating pilot symbols based on DP-16QAM modulation according to an embodiment of this application. Considering the DP-16QAM modulation, a manner of generating the pilot symbols in the X polarization direction and the Y polarization direction is specifically shown in FIG. 11, where a degree of a generator polynomial is 9, and a bit sequence generated by using the 9-degree polynomial is referred to as a PRBS9.

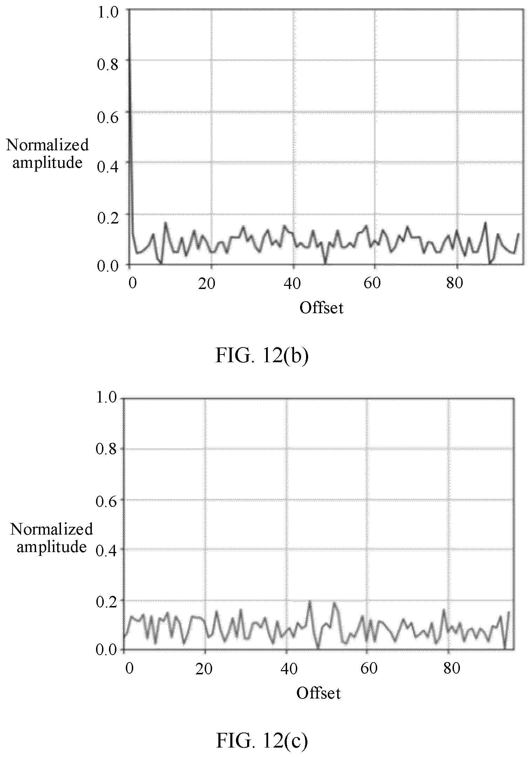

FIG. 12(a) to FIG. 12(c) are diagrams of correlation characteristics corresponding to pilot symbols according to an embodiment of this application. FIG. 12(a) shows a periodic autocorrelation result of a pilot symbol sequence in the X polarization direction. FIG. 12(b) shows a periodic autocorrelation result of a pilot symbol sequence in the Y polarization direction. FIG. 12(c) shows a periodic cross-correlation result of pilot symbol sequences in the X and Y polarization directions. Normalized amplitudes of side lobe values of periodic autocorrelation functions of the symbol sequences in the two polarization directions are not greater than 0.222, and a normalized amplitude of a side lobe value of a periodic cross-correlation function of the symbol sequences in the two polarization directions is not greater than 0.193.

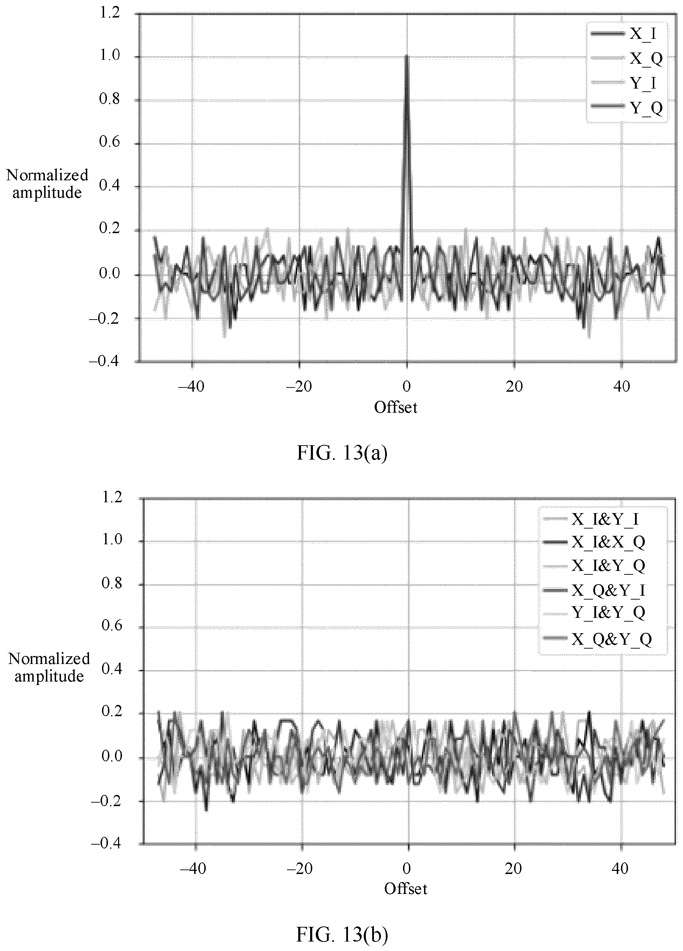

FIG. 13(a) and FIG. 13(b) are diagrams of reflecting an autocorrelation characteristic and a cross-correlation characteristic according to an embodiment of this application. A real part sequence of the pilot symbol sequence in the X polarization direction is denoted as (X_I), an imaginary part sequence of the pilot symbol sequence in the X polarization direction is denoted as (X_Q), a real part sequence of the pilot symbol sequence in the Y polarization direction is denoted as (Y_I), and an imaginary part sequence of the pilot symbol sequence in the Y polarization direction is denoted as (Y_Q). FIG.

13(a) and FIG. 13(b) show autocorrelation characteristics and cross-correlation characteristics of the four sequences: X_I, X_Q, Y_I, and Y_Q whose lengths are Q bits. FIG. 13(a) shows periodic autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). FIG. 13(b) shows periodic cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither a side lobe value of a periodic autocorrelation function nor an absolute value of a normalized amplitude of a periodic cross-correlation function is greater than 0.2917.

Based on received signals in the two polarization directions, the receiving end performs DSP by using a PS pilot sequence, to restore the signals. For example, correlation values between the received signals and a real part sequence/an imaginary part sequence of the PS pilot sequence in the X polarization direction and a real part sequence/an imaginary part sequence of the PS pilot sequence in the Y polarization direction are separately calculated, so that the X/Y polarization direction and a real part/an imaginary part can be distinguished, frame synchronization and alignment can be performed, and carrier phase recovery is performed by using a PS pilot signal. The designed pilot symbol sequence has good autocorrelation and cross-correlation characteristics, and are direct current balanced. This helps the receiving end improve quality of the restored signals.

Embodiment 2: Implementation in which the degree of the polynomial is 10

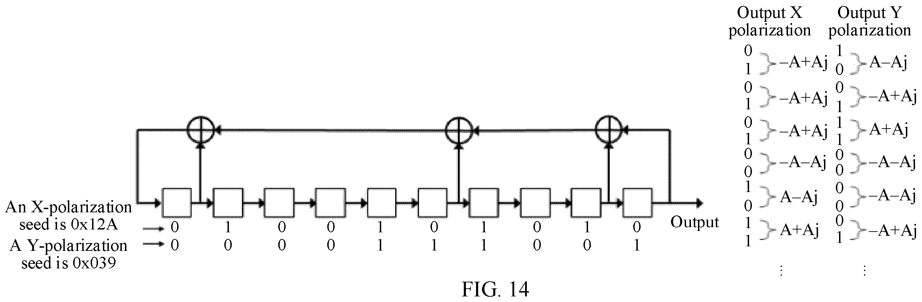

FIG. 14 is a diagram of a fourth generation structure of a pilot symbol according to an embodiment of this application. If the target polynomial is $x^{10} + x^9 + x^4 + x + 1$, the seed in the X polarization direction is 0x12A, and the seed in the Y polarization direction is 0x039, that is, an item whose sequence number is 36 in Table 2 is used, a process of generating the 96 pilot symbols in each of the two polarization directions is shown in FIG. 14.

In the X polarization direction, the input polarization seed is 0x12A, and is converted into a binary sequence 0100101010, that is, values of $m_9$ to $m_0$. If two bits that are consecutively output in sequence are 1 and 0, the pilot symbol in the X polarization direction is A-Aj. If two bits that are consecutively output in sequence are 0 and 0, the pilot symbol in the X polarization direction is -A-Aj. If two bits that are consecutively output in sequence are 1 and 1, the pilot symbol in the X polarization direction is A+Aj. If two bits that are consecutively output in sequence are 0 and 1, the pilot symbol in the X polarization direction is -A+Aj. By analogy, the 96 pilot symbols in the X polarization direction may be obtained.

In the Y polarization direction, the input polarization seed is 0x039, and is converted into a binary sequence 0000111001, that is, values of $m_9$ to $m_0$. If two bits that are consecutively output in sequence are 1 and 0, the pilot symbol in the Y polarization direction is A-Aj. If two bits that are consecutively output in sequence are 0 and 0, the pilot symbol in the Y polarization direction is -A-Aj. If two bits that are consecutively output in sequence are 1 and 1, the pilot symbol in the Y polarization direction is A+Aj. If two bits that are consecutively output in sequence are 0 and 1, the pilot symbol in the Y polarization direction is -A+Aj. By analogy, the 96 pilot symbols in the Y polarization direction may be obtained.

Specifically, the 96 pilot symbols in each of the two polarization directions are shown in the following Table 4.

Table 4

| Polarization direction | Pilot symbol |
|---|---|
| X polarization direction | -A+Aj, -A+Aj, -A+Aj, -A-Aj, A-Aj, A+Aj, -A+Aj, A-Aj, A+Aj, -A-Aj, A-Aj, -A+Aj, -A+Aj, - A+Aj, A+Aj, -A+Aj, -A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, -A+Aj, -A+Aj, A-Aj, -A-Aj, -A+Aj, A-Aj, A+Aj, -A+Aj, -A-Aj, and -A+Aj |

(continued)

| Polarization direction | Pilot symbol |
|---|---|
| Y polarization direction | A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, - A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, - A+Aj, A+Aj, A-Aj, A+Aj, A-Aj, -A-Aj, A-Aj, -A+Aj, A+Aj, A+Aj, A+Aj, A-Aj, -A+Aj, -A+Aj, - A-Aj, -A+Aj, A+Aj, -A+Aj, -A-Aj, -A+Aj, -A-Aj, A-Aj, A+Aj, A+Aj, A-Aj, A+Aj, and A+Aj |

In the X polarization direction, quantities of pilot symbols that are respectively -A-Aj, -A+Aj, A-Aj, and A+Aj are 25, 23, 23, and 25 in sequence. In the Y polarization direction, quantities of pilot symbols that are respectively -A-Aj, -A+Aj, A-Aj, and A+Aj are 23, 25, 25, and 23 in sequence. In a polarization direction, a difference between every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance. Further, in the X and Y polarization directions, a total quantity of pilot symbols that are -A-Aj, a total quantity of pilot symbols that are -A+Aj, a total quantity of pilot symbols that are A-Aj, and a total quantity of pilot symbols that are A+Aj are all 48. This effectively ensures balance between symbol quantities, to help the receiving end restore the signal quality.

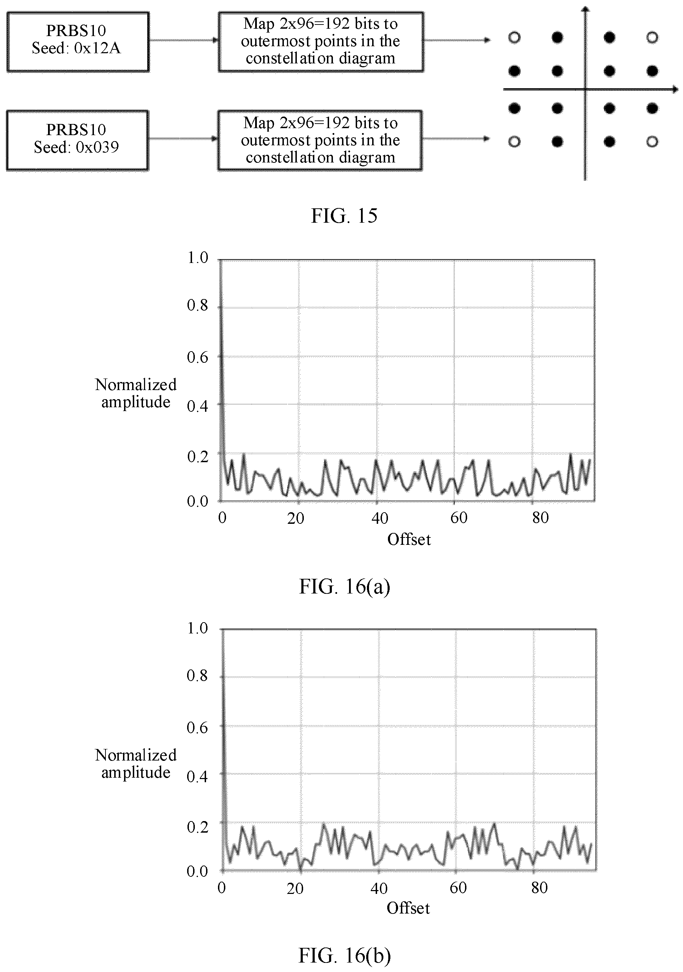

FIG. 15 is a diagram of a second implementation procedure of generating pilot symbols based on DP-16QAM modulation according to an embodiment of this application. Considering the DP-16QAM modulation, a manner of generating the pilot symbols in the X polarization direction and the Y polarization direction is specifically shown in FIG. 15, where a degree of a generator polynomial is 10, and a bit sequence generated by using the 10-degree polynomial is referred to as a PRBS10.

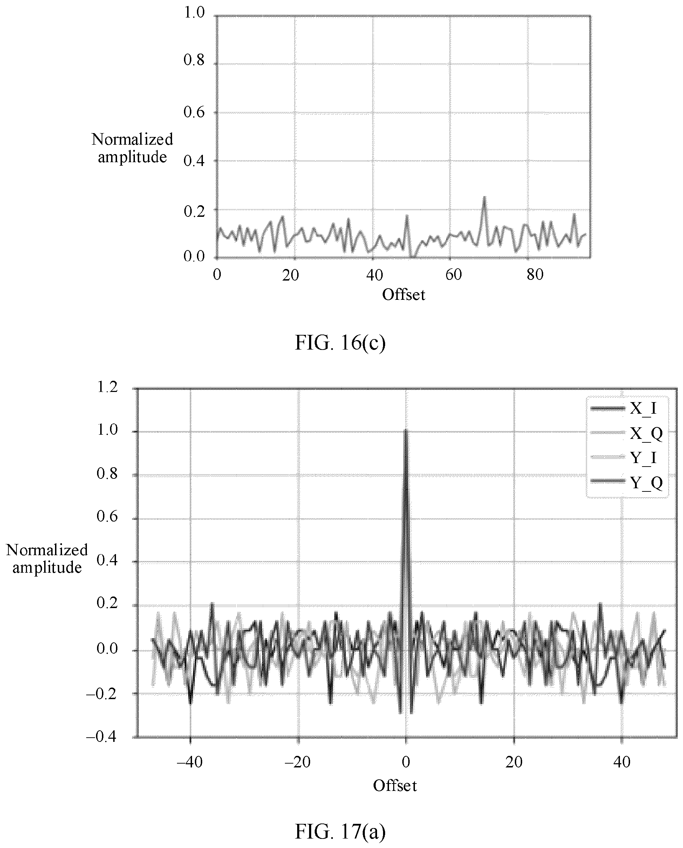

FIG. 16(a) to FIG. 16(c) are diagrams of correlation characteristics corresponding to pilot symbols according to an embodiment of this application. (a) in FIG. 16 shows a periodic autocorrelation result of a pilot symbol sequence in the X polarization direction. (b) in FIG. 16 shows a periodic autocorrelation result of a pilot symbol sequence in the Y polarization direction. (c) in FIG. 16 shows a periodic cross-correlation result of pilot symbol sequences in the X and Y polarization directions. Normalized amplitudes of side lobe values of periodic autocorrelation functions of the symbol sequences in the two polarization directions are not greater than 0.193, and a normalized amplitude of a side lobe value of a periodic cross-correlation function of the symbol sequences in the two polarization directions is not greater than 0.251.

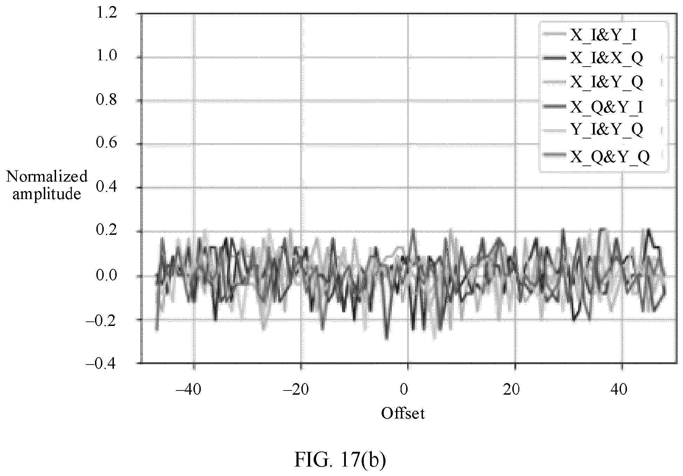

FIG. 17(a) and FIG. 17(b) are other diagrams of reflecting an autocorrelation characteristic and a cross-correlation characteristic according to an embodiment of this application. A real part sequence of the pilot symbol sequence in the X polarization direction is denoted as (X_I), an imaginary part sequence of the pilot symbol sequence in the X polarization direction is denoted as (X_Q), a real part sequence of the pilot symbol sequence in the Y polarization direction is denoted as (Y_I), and an imaginary part sequence of the pilot symbol sequence in the Y polarization direction is denoted as (Y_Q). FIG. 17(a) and FIG. 17(b) show autocorrelation characteristics and cross-correlation characteristics of the four sequences: X_I, X_Q, Y_I, and Y_Q whose lengths are Q bits. FIG. 17(a) shows periodic autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). FIG. 17(b) shows periodic cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither a side lobe value of a periodic autocorrelation function nor an absolute value of a normalized amplitude of a periodic cross-correlation function is greater than 0.2917.

Based on received signals in the two polarization directions, the receiving end performs DSP by using a PS pilot sequence, to restore the signals. For example, correlation values between the received signals and a real part sequence/an imaginary part sequence of the PS pilot sequence in the X polarization direction and a real part sequence/an imaginary part sequence of the PS pilot sequence in the Y polarization direction are separately calculated, so that the X/Y polarization direction and a real part/an imaginary part can be distinguished, frame synchronization and alignment can be performed, and carrier phase recovery is performed by using a PS pilot signal. The designed pilot symbol sequence has good autocorrelation and cross-correlation characteristics, and are direct current balanced. This helps the receiving end improve quality of the restored signals.

Based on the foregoing descriptions, in embodiments of this application, in the data frame including the N symbols, the every M consecutive symbols include the pilot symbol at the fixed location and the M-1 payload symbols, and N=M×Q. The Q pilot symbols in the data frame are generated by using the target polynomial and the seed, the Q pilot symbols are direct current balanced, the degree of the target polynomial is less than or equal to 10, and the quantity of terms of the target polynomial is greater than or equal to 2 and less than or equal to 8. It can be learned that a simple target polynomial is designed in this application to generate the pilot symbols. Correspondingly, a simple hardware structure may be used for implementation. In addition, the pilot symbols generated in the foregoing manner have the good autocorrelation and cross-correlation characteristics, and are direct current balanced. This helps the receiving end restore the signal quality.

It should be noted that, currently, communication architectures of some optical transport networks support transmission rates of 400 Gbps and 800 Gbps. At the transmission rate of 400 Gbps, a correspondingly needed baud rate is usually about 60 Gbaud (baud) when the dual-polarization 16QAM (dual-polarization 16 quadrature amplitude modulation, DP-16QAM) modulation is used. At the transmission rate of 800 Gbps, a correspondingly needed baud rate is usually about 120 Gbaud (baud) when the DP-16QAM modulation is used. With the growth of services, metro telecommunication transmission and data center transmission scenarios have increasingly high requirements on transmission rates. For example, at transmission rates such as 1.2 Tbps and 1.6 Tbps, when the DP-16QAM modulation and a single-wavelength transmission manner are used, corresponding baud rates are about 180 Gbaud and 240 Gbaud. At a same transmission rate, a higher baud rate is needed when a lower-order modulation, such as DP-quadrature phase shift keying (Quadrature Phase Shift Keying, QPSK), is used. When higher-order modulation, such as DP-32QAM or DP-64QAM, is used, although a needed baud rate is lower, a transmission distance is limited. A higher transmission rate needed in the optical transport network corresponds to a higher needed baud rate, and corresponds to higher power consumption of a device. Currently, there is no low-power device with a baud rate higher than 140 Gbaud. In the metro telecommunication transmission and data center transmission scenarios, low power consumption is usually required for implementation. A plurality of data frames are carried in a plurality of optical signals for transmission, so that data streams are transmitted in parallel, and an overall transmission rate can be improved while a current baud rate and a current modulation order are maintained. For example, wavelengths of the plurality of optical signals are different, and the plurality of optical signals with the different wavelengths are transmitted on a same optical fiber, and is also referred to as wavelength division multiplexing (Wavelength Division Multiplexing, WDM) transmission. For another example, the plurality of optical signals are respectively transmitted through a plurality of different optical fibers, and is also referred to as a parallel single mode (Parallel Single Mode, PSM). The following embodiment does not need a device with a higher baud rate, and is applicable to the metro telecommunication transmission and data center transmission scenarios that require the low power consumption.

Embodiment 3

Two data frames: a first data frame and a second data frame are considered. For structures of the first data frame and the second data frame, refer to the diagram of the structure of the data frame in FIG. 9. Considering dual-polarization DP-16QAM modulation, 96×63=6048 dual-polarization payload symbols are obtained through BCH (126, 110) encoding and the DP-16QAM dual-polarization modulation. One pilot symbol is inserted before every 63 symbols in the 6048 payload symbols, and a total of 96 pilot symbols are inserted, to obtain the structure of the data frame (also referred to as a DSP frame) shown in FIG. 9, that is, N=6144, M=64, and Q=96. In the X polarization direction or the Y polarization direction, the 96 pilot symbols are generated based on the target polynomial and the seed. For the first data frame, in the X polarization direction, 96 pilot symbols are generated based on a first target polynomial and a first seed; and in the Y polarization direction, the 96 pilot symbols are generated based on the first target polynomial and a second seed. For the second data frame, in the X polarization direction, 96 pilot symbols are generated based on a second target polynomial and a third seed; and in the Y polarization direction, the 96 pilot symbols are generated based on the second target polynomial and a fourth seed.

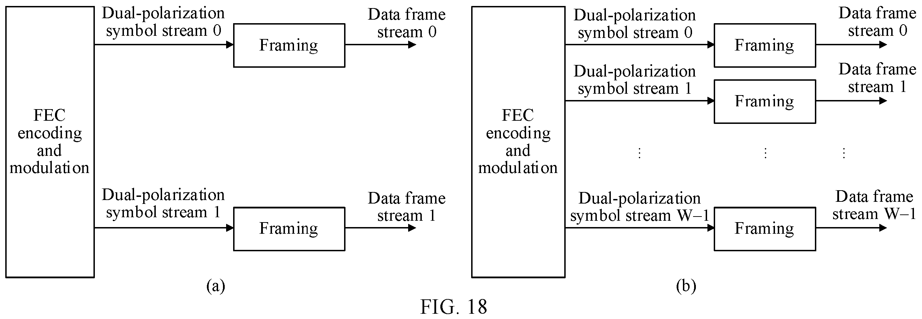

FIG. 18 is a diagram of a transmission scenario of a plurality of data frame streams according to an embodiment of this application. In this embodiment, two dual-polarization symbol streams are obtained through the BCH (126, 110) encoding and the DP-16QAM dual-polarization modulation. In each dual-polarization symbol stream, one pilot symbol is inserted before every 63 symbols in every 6048 payload symbols according to the foregoing framing solution, and a total of 96 pilot symbols are inserted, to obtain one data frame. In other words, the first data frame is located in one data frame stream obtained by performing framing on one of the two dual-polarization symbol streams, and the second data frame is located in another data frame stream obtained by performing framing on the other dual-polarization symbol stream in the two dual-polarization symbol streams. The two data frame streams are carried in the plurality of optical signals for transmission, as shown in an example in (a) in FIG. 18. In this embodiment, the two data frame streams are transmitted on different wavelengths. For a 1.6TE scenario, a rate of each data frame stream is about 800 G bits per second.

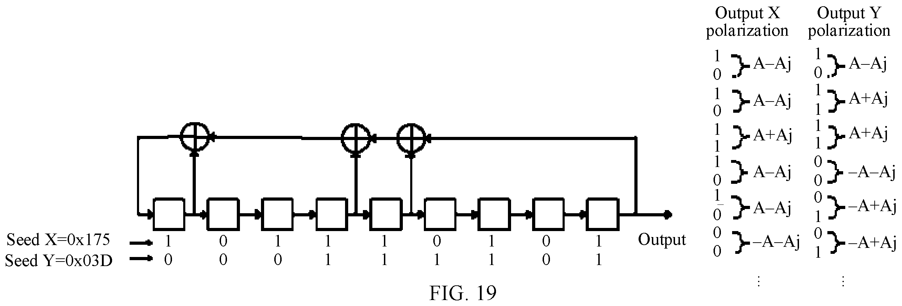

In this embodiment, the first target polynomial and the second target polynomial are a same target polynomial. The first seed and the third seed are the same, and are referred to as seeds in the X polarization direction. The second seed and the fourth seed are the same, and are referred to as seeds in the Y polarization direction. In other words, same 96 pilot symbols are used in the first data frame and the second data frame. Considering that a 9-degree target polynomial is $x^9 + x^8 + x^5 + x^4 + 1$, the seed in the X polarization direction is 0x175, and the seed in the Y polarization direction is 0x03D, that is, an item whose sequence number is 23 in Table 2 is used, a process of generating the 96 pilot symbols in each of the two polarization directions is shown in FIG. 19.

FIG. 19 is a diagram of a fifth generation structure of a pilot symbol according to an embodiment of this application. In the X polarization direction, the input seed is 0x175, and is converted into a binary sequence 101110101, that is, values of $m_8$ to $m_0$. If two bits that are consecutively output in sequence are 1 and 0, the pilot symbol in the X polarization direction is A-Aj. If two bits that are consecutively output in sequence are 0 and 0, the pilot symbol in the X polarization direction is -A-Aj. If two bits that are consecutively output in sequence are 1 and 1, the pilot symbol in the X polarization direction is A+Aj. If two bits that are consecutively output in sequence are 0 and 1, the pilot symbol in the X polarization direction is -A+Aj. By analogy, the 96 pilot symbols in the X polarization direction may be obtained.

In the Y polarization direction, the input polarization seed is 0x03D, and is converted into a binary sequence 000111101, that is, values of $m_8$ to $m_0$. If two bits that are consecutively output in sequence are 1 and 0, the pilot symbol in the Y polarization direction is A-Aj. If two bits that are consecutively output in sequence are 0 and 0, the pilot symbol in the Y polarization direction is -A-Aj. If two bits that are consecutively output in sequence are 1 and 1, the pilot symbol in the Y polarization direction is A+Aj. If two bits that are consecutively output in sequence are 0 and 1, the pilot symbol in the Y polarization direction is -A+Aj. By analogy, the 96 pilot symbols in the Y polarization direction may be obtained.

Specifically, the 96 pilot symbols in each of the two polarization directions are shown in the following Table 5.

Table 5

| Polarization direction | Pilot symbol |
|---|---|
| X polarization direction | A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, - A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, -A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj |
| Y polarization direction | A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, -A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, - A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj |

In the X polarization direction, quantities of pilot symbols that are respectively -A-Aj, -A+Aj, A-Aj, and A+Aj are all 24. In the Y polarization direction, quantities of pilot symbols that are respectively -A-Aj, -A+Aj, A-Aj, and A+Aj are 25, 23, 23, and 25 in sequence. In a polarization direction, a difference between every two of quantities of pilot symbols that are respectively -A-Aj, -A+Aj, A-Aj, and A+Aj in the data frame is less than or equal to 2. In addition, the quantity of pilot symbols that are -A-Aj is the same as the quantity of pilot symbols that are A+Aj, and the quantity of pilot symbols that are -A+Aj is the same as the quantity of pilot symbols that are A-Aj. This effectively ensures that symbol quantities in each polarization direction are approximately balanced, and can further ensure that a sequence including the pilot symbols achieves the direct current balance, to help the receiving end restore the signal quality.

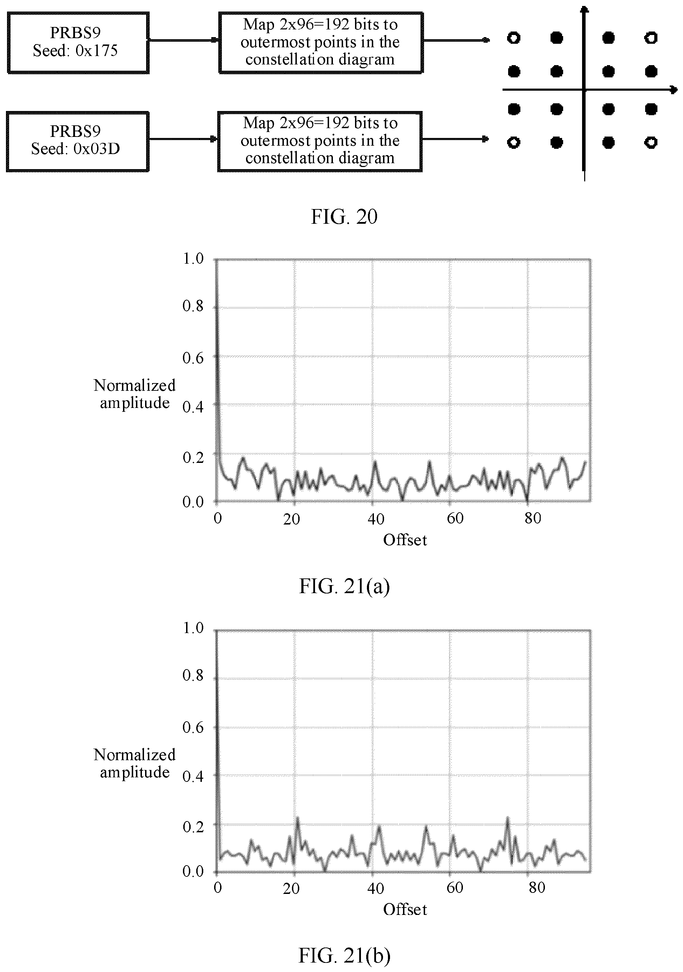

FIG. 20 is a diagram of a third implementation procedure of generating pilot symbols based on DP-16QAM modulation according to an embodiment of this application. Considering the DP-16QAM modulation, a manner of generating the pilot symbols in the X polarization direction and the Y polarization direction is specifically shown in FIG. 20, where a degree of a generator polynomial is 9, and a bit sequence generated by using the 9-degree polynomial is referred to as a PRBS9.

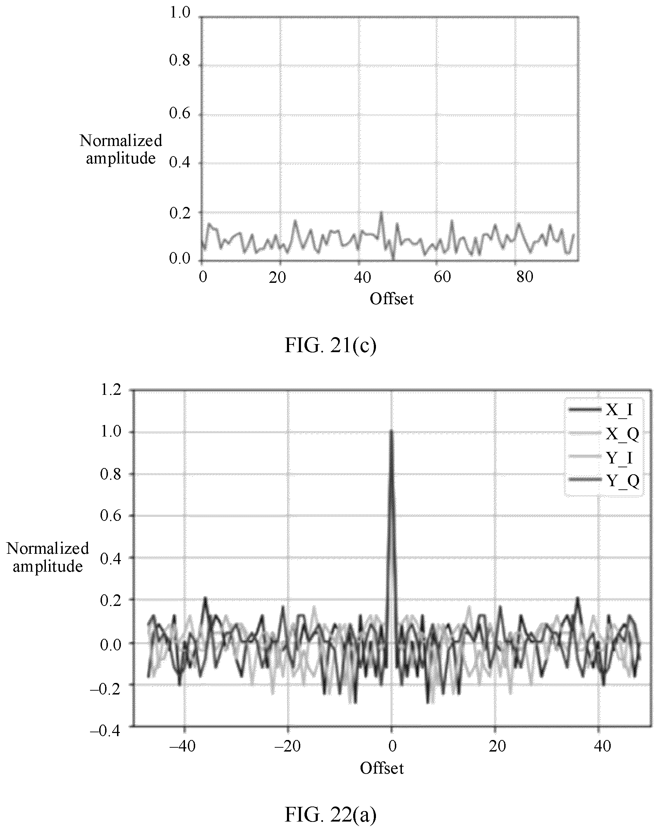

FIG. 21(a) to FIG. 21(c) are other diagrams of correlation characteristics corresponding to pilot symbols according to an embodiment of this application. FIG. 21(a) shows a periodic autocorrelation result of a pilot symbol sequence in the X polarization direction. FIG. 21(b) shows a periodic autocorrelation result of a pilot symbol sequence in the Y polarization direction. FIG. 21(c) shows a periodic cross-correlation result of pilot symbol sequences in the X and Y polarization directions. Normalized amplitudes of side lobe values of periodic autocorrelation functions of the symbol sequences in the two polarization directions are not greater than 0.180, and a normalized amplitude of a side lobe value of a periodic cross-correlation function of the symbol sequences in the two polarization directions is not greater than 0.225.

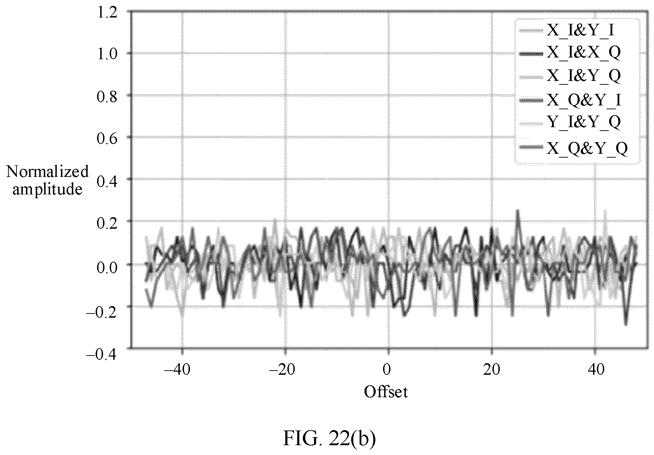

FIG. 22(a) and FIG. 22(b) are other diagrams of reflecting an autocorrelation characteristic and a cross-correlation characteristic according to an embodiment of this application. A real part sequence of the pilot symbol sequence in the X polarization direction is denoted as (X_I), an imaginary part sequence of the pilot symbol sequence in the X polarization direction is denoted as (X_Q), a real part sequence of the pilot symbol sequence in the Y polarization direction is denoted as (Y_I), and an imaginary part sequence of the pilot symbol sequence in the Y polarization direction is denoted as (Y_Q). FIG. 22(a) and FIG. 22(b) show autocorrelation characteristics and cross-correlation characteristics of the four sequences: X_I, X_Q, Y_I, and Y_Q whose lengths are Q bits. FIG. 22(a) shows periodic autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). FIG. 22(b) shows periodic cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither a side lobe value of a periodic autocorrelation function nor an absolute value of a normalized amplitude of a periodic cross-correlation function is greater than 0.292.

Based on received signals in the two polarization directions, the receiving end performs DSP by using a PS pilot sequence, to restore the signals. For example, correlation values between the received signals and a real part sequence and an imaginary part sequence of the PS pilot sequence in the X polarization direction and correlation values between the received signals and a real part sequence and an imaginary part sequence of the PS pilot sequence in the Y polarization direction are separately calculated, so that the X polarization direction and the Y polarization direction and a real part and an imaginary part can be distinguished, frame synchronization and alignment can be performed, and carrier phase recovery is performed by using a PS pilot signal. The designed pilot symbol sequence has good autocorrelation and cross-correlation characteristics, and are direct current balanced. This helps the receiving end improve quality of the restored signals.

It should be noted that, in this embodiment, it is considered that the two data frame streams are transmitted on the different wavelengths, and 96 pilot symbols in each data frame stream are generated by using a same target polynomial. In some other specific applications, pilot symbol sequences in the two data frame streams are generated by using different target polynomials. In some other specific applications, pilot symbol sequences in the two data frame streams are generated by using a same target polynomial and different seeds. In some other specific applications, the two data frame streams are transmitted on two optical fibers.

It should be noted that, in some other specific applications, a quantity of data frame streams is greater than 2. As shown in (b) in FIG. 18, W dual-polarization symbol streams are obtained through FEC encoding and modulation. In each dual-polarization symbol stream, one pilot symbol is inserted before every M-1 symbols in every (M-1)×Q payload symbols according to the foregoing framing solution, and a total of Q pilot symbols are inserted, to obtain one data frame. In this way, a total of W data frame streams are obtained. The W data frame streams are carried in a plurality of optical signals for transmission. For example, the W data frame streams are respectively carried in W optical signals. In an example, any two of the W optical signals have different wavelengths, and the W optical signals are transmitted on a same optical fiber. In another example, all of the W optical signals have a same wavelength, and the W optical signals are respectively transmitted through W optical fibers.

The following describes several specific embodiments based on Table 7.

Embodiment 4: The target polynomial is x^10+x^9+x^6+x+1, the seed in the X polarization direction is 0x0B4, and the seed in the Y polarization direction is 0x2D1.

As shown in FIG. 9, considering dual-polarization DP-16QAM modulation, 96×63=6048 dual-polarization payload symbols are obtained through BCH (126, 110) encoding and the DP-16QAM dual-polarization modulation. One pilot symbol is inserted before every 63 symbols in the 6048 payload symbols, and a total of 96 pilot symbols are inserted, to obtain the structure of the data frame (also referred to as a DSP frame) shown in FIG. 14, that is, N=6144, M=64, and Q=96. In the X polarization direction or the Y polarization direction, the 96 pilot symbols are generated based on the target polynomial and the seed. Specifically, for a scenario in which the 96 pilot symbols need to be generated, a

consecutive bit sequence $b_0$, $b_1$, $b_2$, ..., and $b_{191}$ whose bit length is $96 \times 2 = 192$ is obtained based on the target polynomial and the seed. Every two consecutive bits in the bit sequence $b_0$, $b_1$, $b_2$, ... , and $b_{191}$ are mapped to one symbol, where $b_{2t}$ and $b_{2t+1}$ are mapped to one symbol $(2b_{2t} - 1)A + (2b_{2t+1} - 1)Aj$. It should be noted that, alternatively, the symbol $(2b_{2t} - 1)A + (2b_{2t+1} - 1)Aj$ may not be a symbol in a constellation diagram of a used modulation format, and may be one of four symbols in an intermediate area between four outermost symbols and four innermost symbols in the constellation diagram of the used modulation format.

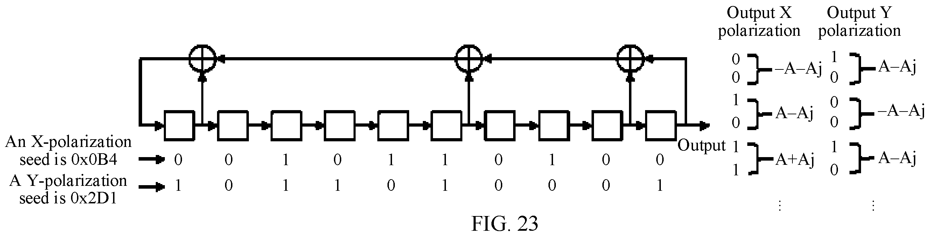

FIG. 23 is a diagram of a sixth generation structure of a pilot symbol according to an embodiment of this application. If the target polynomial is $x^{10}+x^9+x^6+x+1$, the seed in the X polarization direction is 0x0B4, and the seed in the Y polarization direction is 0x2D1, that is, an item whose sequence number is 9 in Table 7 is used, a process of generating the 96 pilot symbols in each of the two polarization directions is shown in FIG. 23.

In the X polarization direction, the input seed is 0x0B4, and is converted into a binary sequence 0010110100, that is, values of $m_9$ to $m_0$. If two bits that are consecutively output in sequence are 1 and 0, the pilot symbol in the X polarization direction is A-Aj. If two bits that are consecutively output in sequence are 0 and 0, the pilot symbol in the X polarization direction is -A-Aj. If two bits that are consecutively output in sequence are 1 and 1, the pilot symbol in the X polarization direction is A+Aj. If two bits that are consecutively output in sequence are 0 and 1, the pilot symbol in the X polarization direction is -A+Aj. By analogy, the 96 pilot symbols in the X polarization direction may be obtained.

In the Y polarization direction, the input seed is 0x2D1, and is converted into a binary sequence 1011010001, that is, values of $m_9$ to $m_0$. If two bits that are consecutively output in sequence are 1 and 0, the pilot symbol in the Y polarization direction is A-Aj. If two bits that are consecutively output in sequence are 0 and 0, the pilot symbol in the Y polarization direction is -A-Aj. If two bits that are consecutively output in sequence are 1 and 1, the pilot symbol in the Y polarization direction is A+Aj. If two bits that are consecutively output in sequence are 0 and 1, the pilot symbol in the Y polarization direction is -A+Aj. By analogy, the 96 pilot symbols in the Y polarization direction may be obtained.

Specifically, the 96 pilot symbols in each of the two polarization directions are shown in the following Table 8.

Table 8

| Polarization direction | Pilot symbol |
|---|---|
| X polarization direction | -A-Aj, A-Aj, A+Aj, -A+Aj, -A-Aj, -A-Aj, A-Aj, -A+Aj, A-Aj, -A+Aj, -A+Aj, -A+Aj, -A+Aj, - A+Aj, -A-Aj, A+Aj, -A+Aj, A+Aj, -A-Aj, A+Aj, A-Aj, -A+Aj, -A+Aj, A+Aj, A-Aj, -A+Aj, A-Aj, A-Aj, A+Aj, A+Aj, A-Aj, -A-Aj, -A+Aj, A+Aj, A-Aj, -A+Aj, -A-Aj, A-Aj, -A-Aj, -A-Aj, A-Aj, - A+Aj, A+Aj, A-Aj, A+Aj, A+Aj, A-Aj, A-Aj, -A+Aj, -A-Aj, -A+Aj, -A+Aj, -A+Aj, -A-Aj, -A+Aj, -A+Aj, -A-Aj, A+Aj, A+Aj, A+Aj, A+Aj, -A-Aj, A-Aj, -A-Aj, A+Aj, A-Aj, A+Aj, A+Aj, -A-Aj, A-Aj, A-Aj, A+Aj, -A+Aj, -A-Aj, A+Aj, -A+Aj, -A-Aj, A+Aj, A-Aj, A+Aj, A-Aj, A+Aj, -A-Aj, -A-Aj, -A-Aj, A-Aj, -A+Aj, -A-Aj, -A+Aj, A-Aj, A-Aj, -A+Aj, -A-Aj, A-Aj, A-Aj, and -A-Aj |
| Y polarization direction | A-Aj, -A-Aj, A-Aj, A+Aj, -A+Aj, A-Aj, -A-Aj, -A+Aj, A-Aj, A-Aj, -A-Aj, A+Aj, -A-Aj, -A-Aj, A+Aj, A-Aj, A+Aj, -A-Aj, A+Aj, A+Aj, A+Aj, -A-Aj, A+Aj, A+Aj, -A+Aj, -A-Aj, -A-Aj, -A-Aj, - A+Aj, -A+Aj, A-Aj, -A+Aj, -A-Aj, A+Aj, -A-Aj, -A+Aj, -A+Aj, A+Aj, A+Aj, -A+Aj, A+Aj, - A+Aj, -A+Aj, A+Aj, -A+Aj, -A-Aj, A+Aj, -A-Aj, A+Aj, -A+Aj, -A-Aj, -A-Aj, -A+Aj, A-Aj, A+Aj, -A-Aj, A-Aj, A+Aj, A-Aj, A+Aj, -A+Aj, A+Aj, A-Aj, -A-Aj, A-Aj, A+Aj, -A-Aj, -A+Aj, A-Aj, A+Aj, -A+Aj, -A+Aj, A+Aj, -A-Aj, -A-Aj, A-Aj, A-Aj, -A+Aj, -A-Aj, -A-Aj, A-Aj, A+Aj, A-Aj, A-Aj, A-Aj, -A+Aj, -A-Aj, A+Aj, -A+Aj, A-Aj, A+Aj, -A+Aj, -A-Aj, A-Aj, A-Aj, and A-Aj |

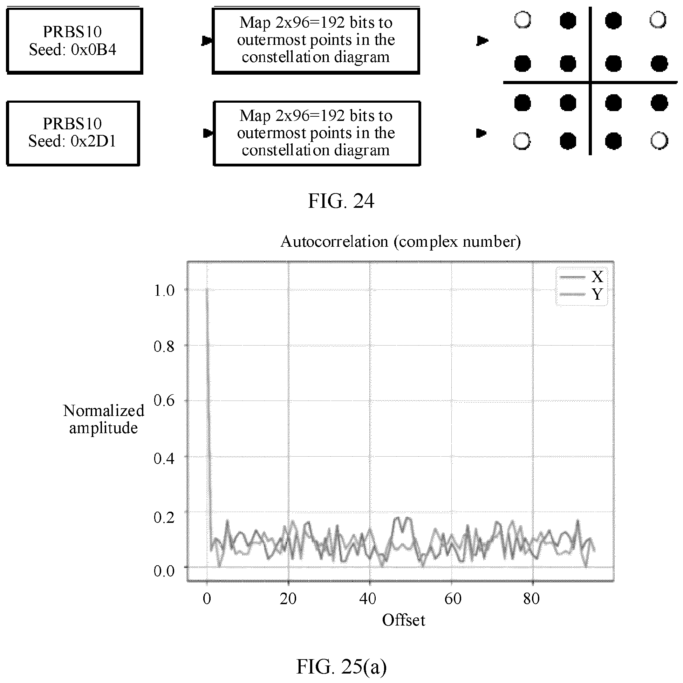

FIG. 24 is a diagram of a fourth implementation procedure of generating pilot symbols based on DP-16QAM modulation according to an embodiment of this application. Considering the DP-16QAM modulation, a manner of generating the pilot symbols in the X polarization direction and the Y polarization direction is specifically shown in FIG. 16(a) to FIG. 16(c), where a degree of a generator polynomial is 10, and a bit sequence generated by using the 10-degree polynomial is referred to as a PRBS10.

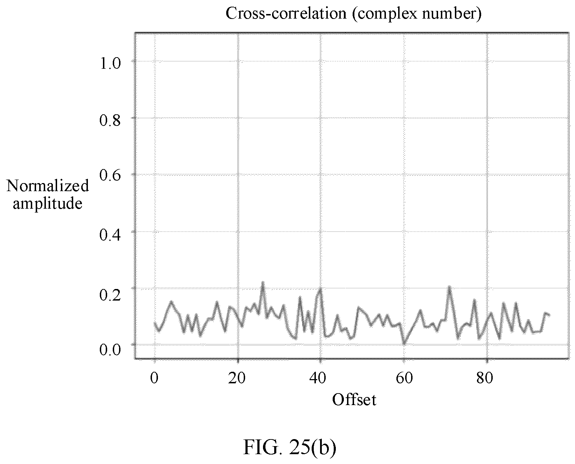

FIG. 25(a) and FIG. 25(b) are other diagrams of a correlation characteristic and a cross-correlation characteristic that correspond to pilot symbols according to an embodiment of this application. FIG. 25(a) shows periodic autocorrelation results obtained by performing differencing on every two adjacent symbols in pilot symbol sequences in the X and Y polarization directions. FIG. 25(b) shows a periodic differential cross-correlation result of the pilot symbol sequences in the X and Y polarization directions. Normalized amplitudes of side lobe values of periodic differential autocorrelation functions of the symbol sequences in the two polarization directions are not greater than 0.179, and a normalized amplitude of a side lobe value of a periodic differential cross-correlation function of the symbol sequences in the two polarization directions is not greater than 0.222.

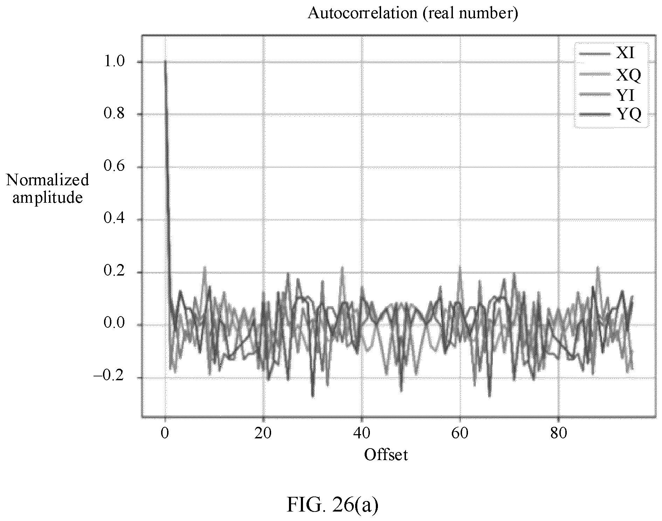

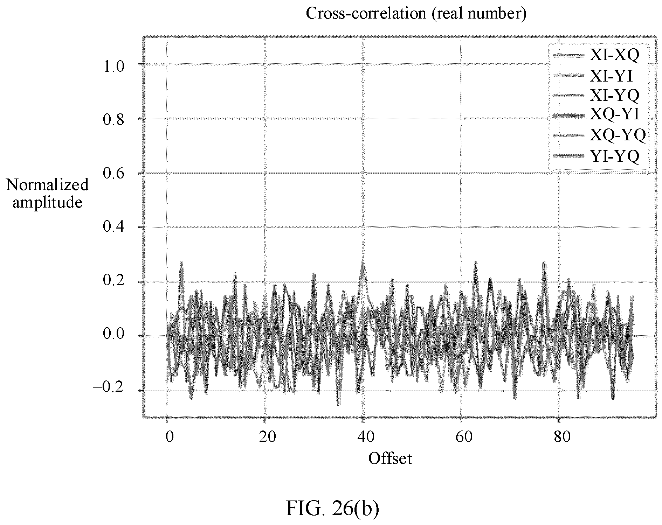

FIG. 26(a) and FIG. 26(b) are diagrams of reflecting an autocorrelation characteristic and a cross-correlation characteristic according to an embodiment of this application. A real part sequence of the pilot symbol sequence in the X polarization direction is denoted as (X_I), an imaginary part sequence of the pilot symbol sequence in the X polarization direction is denoted as (X_Q), a real part sequence of the pilot symbol sequence in the Y polarization direction is denoted as (Y_I), and an imaginary part sequence of the pilot symbol sequence in the Y polarization direction is denoted as (Y_Q). FIG. 26(a) and FIG. 26(b) show autocorrelation characteristics and cross-correlation characteristics of the four sequences: X_I, X_Q, Y_I, and Y_Q whose lengths are Q bits. FIG. 26(a) shows periodic differential autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). FIG. 26(b) shows periodic differential cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither a side lobe value of a periodic differential autocorrelation function nor a normalized amplitude of a periodic differential cross-correlation function is greater than 0.2709.

Based on received signals in the two polarization directions, the receiving end performs DSP by using a PS pilot sequence, to restore the signals. For example, differential correlation values between the received signals and sequence symbols of the PS pilot sequence in the X polarization and the Y polarization are separately calculated, so that the polarization directions can be distinguished, frame synchronization and alignment can be performed, and carrier phase recovery is performed by using a PS pilot signal. The designed pilot symbol sequence has good differential autocorrelation and differential cross-correlation characteristics, and are direct current balanced. This helps the receiving end improve quality of the restored signals.

Embodiment 5: The target polynomial is $x^{10}+x^9+x^4+x+1$, the seed in the X polarization direction is 0x128, and the seed in the Y polarization direction is 0x12A.

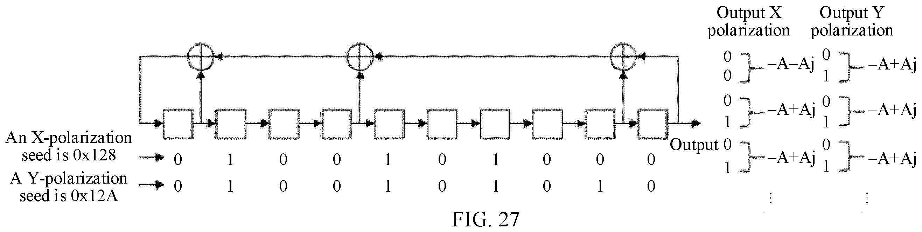

FIG. 27 is a diagram of a seventh generation structure of a pilot symbol according to an embodiment of this application. If the target polynomial is $x^{10}+x^9+x^4+x+1$, the seed in the X polarization direction is 0x128, and the seed in the Y polarization direction is 0x12A, that is, an item whose sequence number is 12 in Table 7 is used, a process of generating the 96 pilot symbols in each of the two polarization directions is shown in FIG. 27.

In the X polarization direction, the input seed is 0x128, and is converted into a binary sequence 0100101000, that is, values of $m_9$ to $m_0$. If two bits that are consecutively output in sequence are 1 and 0, the pilot symbol in the X polarization direction is A-Aj. If two bits that are consecutively output in sequence are 0 and 0, the pilot symbol in the X polarization direction is -A-Aj. If two bits that are consecutively output in sequence are 1 and 1, the pilot symbol in the X polarization direction is A+Aj. If two bits that are consecutively output in sequence are 0 and 1, the pilot symbol in the X polarization direction is -A+Aj. By analogy, the 96 pilot symbols in the X polarization direction may be obtained.

In the Y polarization direction, the input seed is 0x12A, and is converted into a binary sequence 0100101010, that is, values of $m_9$ to $m_0$. If two bits that are consecutively output in sequence are 1 and 0, the pilot symbol in the Y polarization direction is A-Aj. If two bits that are consecutively output in sequence are 0 and 0, the pilot symbol in the Y polarization direction is -A-Aj. If two bits that are consecutively output in sequence are 1 and 1, the pilot symbol in the Y polarization direction is A+Aj. If two bits that are consecutively output in sequence are 0 and 1, the pilot symbol in the Y polarization direction is -A+Aj. By analogy, the 96 pilot symbols in the Y polarization direction may be obtained.

Specifically, the 96 pilot symbols in each of the two polarization directions are shown in the following Table 9.

Table 9

| Polarization direction | Pilot symbol |
|---|---|
| X polarization direction | -A-Aj, -A+Aj, -A+Aj, -A-Aj, A-Aj, -A+Aj, -A+Aj, A-Aj, -A-Aj, A-Aj, -A+Aj, -A-Aj, -A-Aj, -A-Aj, A+Aj, -A+Aj, A+Aj, -A+Aj, A+Aj, -A-Aj, A-Aj, A+Aj, -A-Aj, A-Aj, A+Aj, -A+Aj, -A+Aj, -A-Aj, A+Aj, A+Aj, -A+Aj, A+Aj, -A-Aj, -A+Aj, -A-Aj, A+Aj, A+Aj, A+Aj, A+Aj, -A-Aj, A-Aj, A-Aj, -A-Aj, A-Aj, A-Aj, A-Aj, -A-Aj, A-Aj, -A+Aj, -A+Aj, A+Aj, A+Aj, -A+Aj, A+Aj, A-Aj, -A+Aj, -A-Aj, -A-Aj, -A+Aj, -A-Aj, A-Aj, -A+Aj, A+Aj, A-Aj, -A-Aj, -A+Aj, A+Aj, A+Aj, -A+Aj, -A+Aj, A-Aj, -A+Aj, A+Aj, A-Aj, A-Aj, -A+Aj, A+Aj, -A-Aj, A+Aj, A-Aj, A+Aj, -A-Aj, A-Aj, A-Aj, A-Aj, A-Aj, A-Aj, -A+Aj, A-Aj, -A+Aj, -A-Aj, -A-Aj, A-Aj, A+Aj, -A+Aj, and -A-Aj |

(continued)

| Polarization direction | Pilot symbol |
|---|---|
| Y polariza-tion direction | -A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, -A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, -A+Aj, -A+Aj, A-Aj, -A-Aj, -A+Aj, A-Aj, A+Aj, -A+Aj, -A-Aj, and -A+Aj |

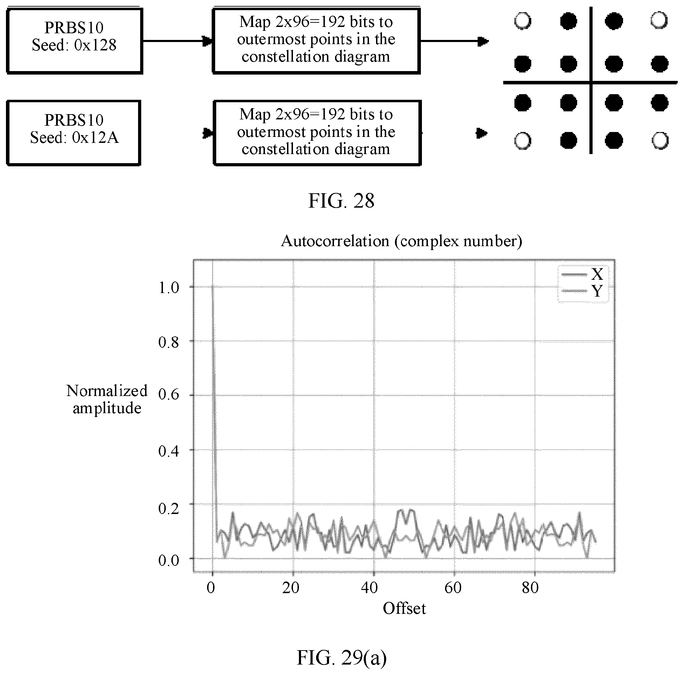

FIG. 28 is a diagram of a fifth implementation procedure of generating pilot symbols based on DP-16QAM modulation according to an embodiment of this application. Considering the DP-16QAM modulation, a manner of generating the pilot symbols in the X polarization direction and the Y polarization direction is specifically shown in FIG. 28, where a degree of a generator polynomial is 10, and a bit sequence generated by using the 10-degree polynomial is referred to as a PRBS10.

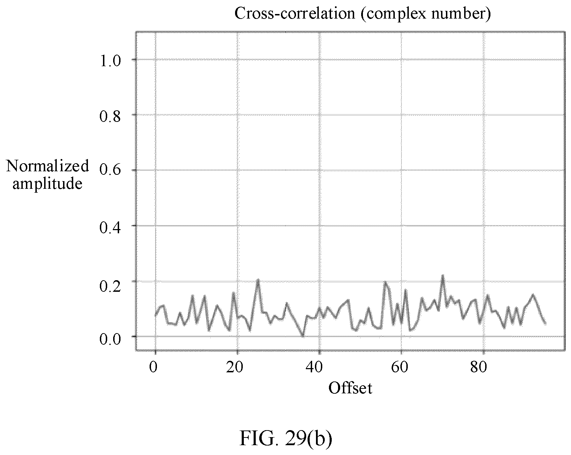

FIG. 29(a) and FIG. 29(b) are other diagrams of a correlation characteristic and a cross-correlation characteristic that correspond to pilot symbols according to an embodiment of this application. FIG. 29(a) shows periodic autocorrelation results obtained by performing differencing on every two adjacent symbols in pilot symbol sequences in the X and Y polarization directions. FIG. 29(b) shows a periodic differential cross-correlation result of the pilot symbol sequences in the X and Y polarization directions. Normalized amplitudes of side lobe values of periodic differential autocorrelation functions of the symbol sequences in the two polarization directions are not greater than 0.178, and a normalized amplitude of a side lobe value of a periodic differential cross-correlation function of the symbol sequences in the two polarization directions is not greater than 0.222.

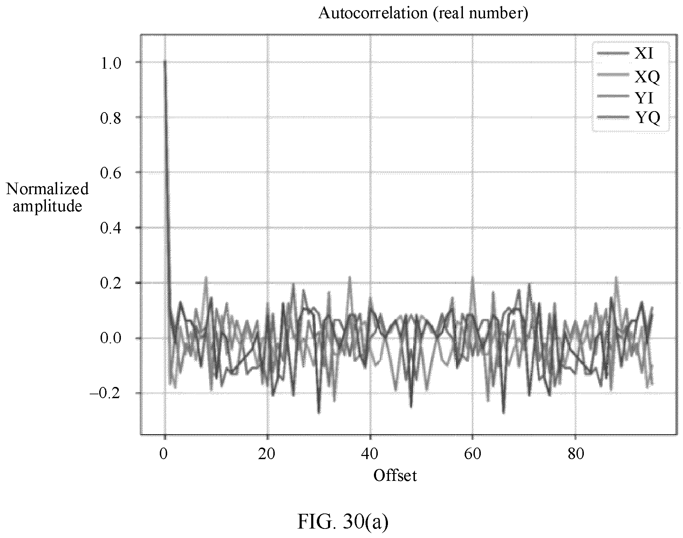

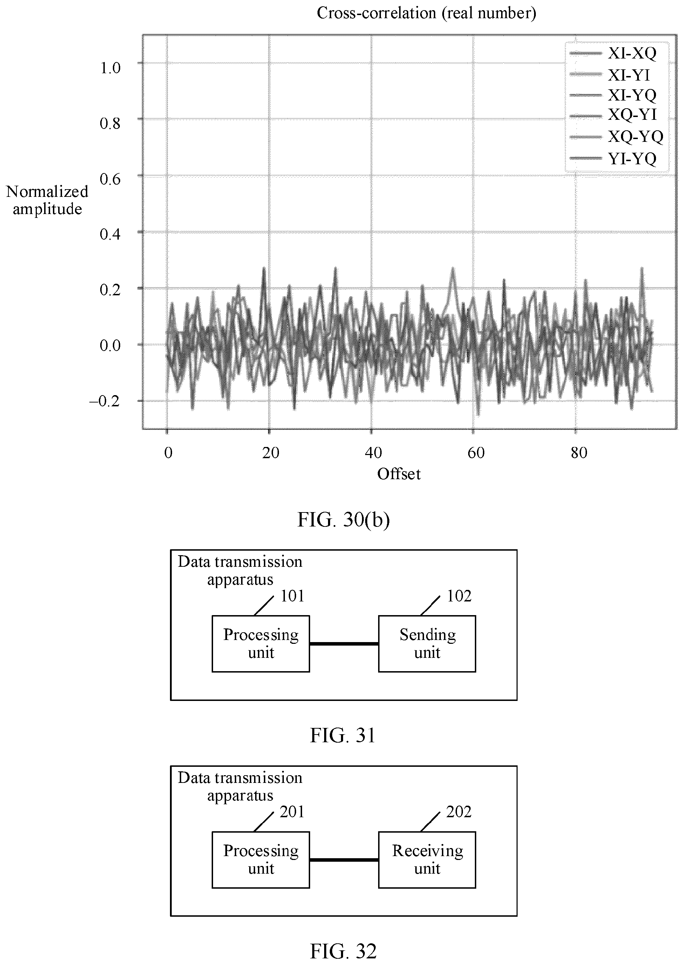

FIG. 30(a) and FIG. 30(b) are other diagrams of reflecting an autocorrelation characteristic and a cross-correlation characteristic according to an embodiment of this application. A real part sequence of the pilot symbol sequence in the X polarization direction is denoted as (X_I), an imaginary part sequence of the pilot symbol sequence in the X polarization direction is denoted as (X_Q), a real part sequence of the pilot symbol sequence in the Y polarization direction is denoted as (Y_I), and an imaginary part sequence of the pilot symbol sequence in the Y polarization direction is denoted as (Y_Q). FIG. 30(a) and FIG. 30(b) show autocorrelation characteristics and cross-correlation characteristics of the four sequences: X_I, X_Q, Y_I, and Y_Q whose lengths are Q bits. FIG. 30(a) shows periodic differential autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). FIG. 30(b) shows periodic differential cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither a side lobe value of a periodic differential autocorrelation function nor a normalized amplitude of a periodic differential cross-correlation function is greater than 0.2709.

Based on received signals in the two polarization directions, the receiving end performs DSP by using a PS pilot sequence, to restore the signals. For example, differential correlation values between the received signals and sequence symbols of the PS pilot sequence in the X polarization and the Y polarization are separately calculated, so that the polarization directions can be distinguished, frame synchronization and alignment can be performed, and carrier phase recovery is performed by using a PS pilot signal. The designed pilot symbol sequence has good differential autocorrelation and differential cross-correlation characteristics, and are direct current balanced. This helps the receiving end improve quality of the restored signals.

The following describes data transmission apparatuses provided in embodiments of this application.

FIG. 31 is a diagram of a structure of a data transmission apparatus used at a transmitting end according to an embodiment of this application. As shown in FIG. 31, the data transmission apparatus includes a processing unit 101 and a sending unit 102. The processing unit 101 is configured to perform the operation in step 401 in the embodiment shown in FIG. 4. The sending unit 102 is configured to perform the operation in step 402 in the embodiment shown in FIG. 4. For specific operations, refer to related descriptions of the embodiment shown in FIG. 4. Details are not described herein again.

FIG. 32 is a diagram of a structure of a data transmission apparatus used at a receiving end according to an embodiment of this application. As shown in FIG. 32, the data transmission apparatus includes a processing unit 201 and a receiving unit 202. The receiving unit 202 is configured to receive data frames transmitted from a transmitting end through a channel. The processing unit 201 is configured to perform dispersion compensation, synchronization, phase recovery, and other operations.

It should be understood that the apparatus provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

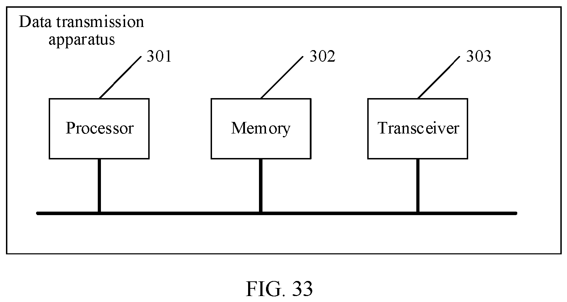

FIG. 33 is a diagram of another structure of a data transmission apparatus according to an embodiment of this application. As shown in FIG. 33, the data transmission apparatus includes a processor 301, a memory 302, and a transceiver 303. The processor 301, the memory 302, and the transceiver 303 are interconnected through lines. The memory 302 is configured to store program instructions and data. Specifically, the transceiver 303 is configured to perform data sending and receiving operations, and the processor 301 is configured to perform other operations than data sending and receiving. In a possible implementation, the processor 301 may include the processing unit 101 shown in FIG. 31, and the transceiver 303 includes the sending unit 102 shown in FIG. 31. In another possible implementation, the processor 301 may include the processing unit 201 shown in FIG. 32, and the transceiver 303 includes the receiving unit 202 shown in FIG. 32.

It should be noted that the processor shown in FIG. 33 may be a general-purpose central processing unit (Central Processing Unit, CPU), a general-purpose processor, a digital signal processor (DSP), an application-specific integrated circuit (ASIC), a field programmable gate array (FPGA) or another programmable logic device, a transistor logic device, a hardware component, or any combination thereof. The memory shown in FIG. 33 may store an operating system and another application program. When the technical solutions provided in embodiments of this application are implemented by using software or firmware, program code used for implementing the technical solutions provided in embodiments of this application is stored in the memory and is executed by the processor. In an embodiment, the processor may include the memory inside. In another embodiment, the processor and the memory are two independent structures.

It may be clearly understood by a person skilled in the art that, for the purpose of convenient and brief description, for detailed working processes of the foregoing described system, apparatus, and unit, refer to corresponding processes in the foregoing method embodiments. Details are not described herein again.

A person of ordinary skill in the art may understand that all or some of the steps in the foregoing embodiments may be implemented by hardware or a program instructing related hardware. The program may be stored in a computer-readable storage medium. The storage medium mentioned above may be a read-only memory, a random access memory, or the like. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

**Claims**

1. A data transmission method, comprising:

generating data frames, wherein in a polarization direction, the data frame comprises N symbols, every M consecutive symbols in the N symbols comprise one pilot sumbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quality of terms of the target polynomial is greater than or equal to 2 and less than or equal to 8; and

sending the data frames.

2. The method according to claim 1, wherein the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^{10}+x^8+x^7+x^6+x^2+x+1;$$

$$x^{10}+x^9+x^7+x^5+x^4+x^2+1;$$

$$x^{10}+x^9+x^8+x^4+x^3+x^2+1;$$

or

$$x^{10}+x^9+x^8+x^7+x^3+x^2+1.$$

3. The method according to claim 1 or 2, wherein each pilot symbol is at a start location of M consecutive symbols in which the pilot symbol is located.

4. The method according to any one of claims 1 to 3, wherein a sequence comprising Q pilot symbols in a first polarization direction is different from a sequence comprising Q pilot symbols in a second polarization direction, and the first polarization direction and the second polarization direction are orthogonal to each other.

5. The method according to any one of claims 1 to 4, wherein N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;
the target polynomial: $x^9+x^4+x^3+x+1$, the seed in the first polarization direction: 0x002, and the seed in the second polarization direction: 0x02B;
the target polynomial: $x^9+x^4+x^3+x+1$, the seed in the first polarization direction: 0x049, and the seed in the second polarization direction: 0x115;
the target polynomial: $x^9+x^4+x^3+x+1$, the seed in the first polarization direction: 0x049, and the seed in the second polarization direction: 0x02B;
the target polynomial: $x^9+x^4+x^3+x+1$, the seed in the first polarization direction: 0x115, and the seed in the second polarization direction: 0x08D;
the target polynomial: $x^9+x^4+x^3+x+1$, the seed in the first polarization direction: 0x08D, and the seed in the second polarization direction: 0x02B;
the target polynomial: $x^9+x^5+x^4+x+1$, the seed in the first polarization direction: 0x098, and the seed in the second polarization direction: 0x0FE;
the target polynomial: $x^9+x^5+x^4+x+1$, the seed in the first polarization direction: 0x098, and the seed in the second polarization direction: 0x0BF;
the target polynomial: $x^9+x^5+x^4+x+1$, the seed in the first polarization direction: 0x098, and the seed in the second polarization direction: 0x17F;
the target polynomial: $x^9+x^5+x^4+x+1$, the seed in the first polarization direction: 0x14C, and the seed in the second polarization direction: 0x0FE;
the target polynomial: $x^9+x^5+x^4+x+1$, the seed in the first polarization direction: 0x14C, and the seed in the second polarization direction: 0x0BF;
the target polynomial: $x^9+x^5+x^4+x+1$, the seed in the first polarization direction: 0x14C, and the seed in the second polarization direction: 0x17F;
the target polynomial: $x^9+x^5+x^4+x+1$, the seed in the first polarization direction: 0x0A6, and the seed in the second polarization direction: 0x0FE;
the target polynomial: $x^9+x^5+x^4+x+1$, the seed in the first polarization direction: 0x0A6, and the seed in the second polarization direction: 0x0BF;
the target polynomial: $x^9+x^5+x^4+x+1$, the seed in the first polarization direction: 0x0A6, and the seed in the second polarization direction: 0x17F;
the target polynomial: $x^9+x^8+x^5+x^4+1$, the seed in the first polarization direction: 0x1D4, and the seed in the second polarization direction: 0x11E;
the target polynomial: $x^9+x^8+x^5+x^4+1$, the seed in the first polarization direction: 0x1D4, and the seed in the second polarization direction: 0x03D;
the target polynomial: $x^9+x^8+x^5+x^4+1$, the seed in the first polarization direction: 0x1D4, and the seed in the second polarization direction: 0x08F;
the target polynomial: $x^9+x^8+x^5+x^4+1$, the seed in the first polarization direction: 0x0EA, and the seed in the second polarization direction: 0x11E;
the target polynomial: $x^9+x^8+x^5+x^4+1$, the seed in the first polarization direction: 0x0EA, and the seed in the second polarization direction: 0x03D;
the target polynomial: $x^9+x^8+x^5+x^4+1$, the seed in the first polarization direction: 0x0EA, and the seed in the second polarization direction: 0x08F;
the target polynomial: $x^9+x^8+x^5+x^4+1$, the seed in the first polarization direction: 0x11E, and the seed in the second polarization direction: 0x175;
the target polynomial: $x^9+x^8+x^5+x^4+1$, the seed in the first polarization direction: 0x175, and the seed in the second polarization direction: 0x03D;
the target polynomial: $x^9+x^8+x^5+x^4+1$, the seed in the first polarization direction: 0x175, and the seed in the second polarization direction: 0x08F;

the target polynomial: x^9+x^8+x^6+x^5+1, the seed in the first polarization direction: 0x16A, and the seed in the second polarization direction: 0x1E1;

the target polynomial: x^9+x^8+x^6+x^5+1, the seed in the first polarization direction: 0x16A, and the seed in the second polarization direction: 0x1C3;

the target polynomial: x^9+x^8+x^6+x^5+1, the seed in the first polarization direction: 0x1E1, and the seed in the second polarization direction: 0x069;

the target polynomial: x^9+x^8+x^6+x^5+1, the seed in the first polarization direction: 0x1E1, and the seed in the second polarization direction: 0x113;

the target polynomial: x^9+x^8+x^6+x^5+1, the seed in the first polarization direction: 0x069, and the seed in the second polarization direction: 0x1C3;

the target polynomial: x^9+x^8+x^6+x^5+1, the seed in the first polarization direction: 0x1C3, and the seed in the second polarization direction: 0x113;

the target polynomial: x^10+x^4+x^3+x+1, the seed in the first polarization direction: 0x0E6, and the seed in the second polarization direction: 0x36E;

the target polynomial: x^10+x^5+x^2+x+1, the seed in the first polarization direction: 0x3DC, and the seed in the second polarization direction: 0x36A;

the target polynomial: x^10+x^5+x^2+x+1, the seed in the first polarization direction: 0x36A, and the seed in the second polarization direction: 0x35E;

the target polynomial: x^10+x^5+x^2+x+1, the seed in the first polarization direction: 0x36A, and the seed in the second polarization direction: 0x1AF;

the target polynomial: x^10+x^8+x^5+x+1, the seed in the first polarization direction: 0x1FD, and the seed in the second polarization direction: 0x3A7;

the target polynomial: x^10+x^9+x^4+x+1, the seed in the first polarization direction: 0x12A, and the seed in the second polarization direction: 0x039;

the target polynomial: x^10+x^9+x^4+x+1, the seed in the first polarization direction: 0x12A, and the seed in the second polarization direction: 0x107;

the target polynomial: x^10+x^9+x^4+x+1, the seed in the first polarization direction: 0x039, and the seed in the second polarization direction: 0x295;

the target polynomial: x^10+x^9+x^4+x+1, the seed in the first polarization direction: 0x295, and the seed in the second polarization direction: 0x107;

the target polynomial: x^10+x^9+x^5+x^2+1, the seed in the first polarization direction: 0x26A, and the seed in the second polarization direction: 0x03A;

the target polynomial: x^10+x^9+x^6+x+1, the seed in the first polarization direction: 0x1A2, and the seed in the second polarization direction: 0x379;

the target polynomial: x^10+x^9+x^6+x+1, the seed in the first polarization direction: 0x1A2, and the seed in the second polarization direction: 0x3EF;

the target polynomial: x^10+x^9+x^6+x+1, the seed in the first polarization direction: 0x2D1, and the seed in the second polarization direction: 0x379;

the target polynomial: x^10+x^9+x^6+x+1, the seed in the first polarization direction: 0x2D1, and the seed in the second polarization direction: 0x3EF;

the target polynomial: x^10+x^9+x^7+x^6+1, the seed in the first polarization direction: 0x3CC, and the seed in the second polarization direction: 0x1E2;

the target polynomial: x^10+x^9+x^8+x^5+1, the seed in the first polarization direction: 0x170, and the seed in the second polarization direction: 0x14D;

the target polynomial: x^10+x^9+x^8+x^5+1, the seed in the first polarization direction: 0x0B8, and the seed in the second polarization direction: 0x14D;

the target polynomial: x^10+x^9+x^8+x^5+1, the seed in the first polarization direction: 0x299, and the seed in the second polarization direction: 0x14D;

the target polynomial: x^10+x^8+x^6+x^5+x^3+x+1, the seed in the first polarization direction: 0x354, and the seed in the second polarization direction: 0x2AD;

the target polynomial: x^10+x^8+x^6+x^5+x^3+x+1, the seed in the first polarization direction: 0x17C, and the seed in the second polarization direction: 0x2AD;

the target polynomial: x^10+x^8+x^6+x^5+x^3+x+1, the seed in the first polarization direction: 0x1AA, and the seed in the second polarization direction: 0x2AD;

the target polynomial: x^10+x^8+x^6+x^5+x^3+x+1, the seed in the first polarization direction: 0x06A, and the seed in the second polarization direction: 0x2AD;

the target polynomial: x^10+x^8+x^6+x^5+x^3+x+1, the seed in the first polarization direction: 0x3E6, and the seed in the second polarization direction: 0x2AD;

the target polynomial: x^10+x^8+x^6+x^5+x^3+x+1, the seed in the first polarization direction: 0x2A9, and the seed in the second polarization direction: 0x2AD;

the target polynomial: x^10+x^8+x^6+x^5+x^3+x+1, the seed in the first polarization direction: 0x2F9, and the seed in the second polarization direction: 0x2AD;

the target polynomial: x^10+x^8+x^6+x^5+x^3+x+1, the seed in the first polarization direction: 0x0D5, and the seed in the second polarization direction: 0x2AD;

the target polynomial: x^10+x^8+x^6+x^5+x^3+x+1, the seed in the first polarization direction: 0x2AD, and the seed in the second polarization direction: 0x1F3;

the target polynomial: x^10+x^8+x^6+x^5+x^3+x+1, the seed in the first polarization direction: 0x2AD, and the seed in the second polarization direction: 0x14B;

the target polynomial: x^10+x^8+x^6+x^5+x^3+x+1, the seed in the first polarization direction: 0x2AD, and the seed in the second polarization direction: 0x297;

the target polynomial: x^10+x^8+x^6+x^5+x^3+x+1, the seed in the first polarization direction: 0x2AD, and the seed in the second polarization direction: 0x12F;

the target polynomial: x^10+x^8+x^7+x^3+x^2+x+1, the seed in the first polarization direction: 0x320, and the seed in the second polarization direction: 0x3AC;

the target polynomial: x^10+x^8+x^7+x^3+x^2+x+1, the seed in the first polarization direction: 0x320, and the seed in the second polarization direction: 0x1D6;

the target polynomial: x^10+x^8+x^7+x^3+x^2+x+1, the seed in the first polarization direction: 0x320, and the seed in the second polarization direction: 0x075;

the target polynomial: x^10+x^8+x^7+x^3+x^2+x+1, the seed in the first polarization direction: 0x320, and the seed in the second polarization direction: 0x0ED;

the target polynomial: x^10+x^8+x^7+x^3+x^2+x+1, the seed in the first polarization direction: 0x320, and the seed in the second polarization direction: 0x0EB;

the target polynomial: x^10+x^8+x^7+x^3+x^2+x+1, the seed in the first polarization direction: 0x0D4, and the seed in the second polarization direction: 0x3AC;

the target polynomial: x^10+x^8+x^7+x^3+x^2+x+1, the seed in the first polarization direction: 0x0D4, and the seed in the second polarization direction: 0x1D6;

the target polynomial: x^10+x^8+x^7+x^3+x^2+x+1, the seed in the first polarization direction: 0x0D4, and the seed in the second polarization direction: 0x075;

the target polynomial: x^10+x^8+x^7+x^3+x^2+x+1, the seed in the first polarization direction: 0x0D4, and the seed in the second polarization direction: 0x0EB;

the target polynomial: x^10+x^8+x^7+x^3+x^2+x+1, the seed in the first polarization direction: 0x3AC, and the seed in the second polarization direction: 0x01A;

the target polynomial: x^10+x^8+x^7+x^3+x^2+x+1, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA;

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA, and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

6. The method according to any one of claims 1 to 5, wherein N=6144, M=64, Q=96, the target polynomial is x^9+x^4+x^3+x+1, the seed in the first polarization direction is 0x049, the seed in the second polarization direction is 0x115, and the first polarization direction and the second polarization direction are orthogonal to each other;

96 pilot symbols in the first polarization direction are sequentially:
A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-

Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj; and

96 pilot symbols in the second polarization direction are sequentially:

A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj.

7. The method according to any one of claims 1 to 5, wherein N=6144, M=64, Q=96, the target polynomial is x^10+x^9+x^4+x+1, the seed in the first polarization direction is 0x12A, the seed in the second polarization direction is 0x039, and the first polarization direction and the second polarization direction are orthogonal to each other;

96 pilot symbols in the first polarization direction are sequentially:

-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj; and

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A- Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

8. The method according to any one of claims 1 to 7, wherein a quantity of data frames is W, W is an integer greater than 1, and the W data frames are carried in a plurality of optical signals for transmission.

9. The method according to claim 8, wherein the W data frames are respectively carried in W optical signals; and

any two of the W optical signals have different wavelengths; or
all of the W optical signals have a same wavelength, and the W optical signals are respectively transmitted through W optical fibers.

10. The method according to claim 8 or 9, wherein the W data frames comprise a first data frame and a second data frame, and the first polarization direction and the second polarization direction are orthogonal to each other;

in the first polarization direction, Q pilot symbols in the first data frame are generated by using a first target polynomial and a first seed; and in the second polarization direction, the Q pilot symbols in the first data frame are generated by using the first target polynomial and a second seed; and
in the first polarization direction, Q pilot symbols in the second data frame are generated by using a second target polynomial and a third seed; and in the second polarization direction, the Q pilot symbols in the second data frame are generated by using the second target polynomial and a fourth seed.

11. The method according to claim 10, wherein a first pilot symbol sequence in the first data frame is the same as a second pilot symbol sequence in the second data frame, the first pilot symbol sequence comprises the Q pilot symbols in the first data frame, and the second pilot symbol sequence comprises the Q pilot symbols in the second data frame.

12. The method according to claim 11, wherein the first target polynomial is the same as the second target polynomial, the first seed is the same as the third seed, the second seed is the same as the fourth seed, the first seed is different from the second seed, and the third seed is different from the fourth seed.

13. The method according to claim 10, wherein a first pilot symbol sequence in the first data frame is different from a second pilot symbol sequence in the second data frame, the first pilot symbol sequence comprises the Q pilot symbols in the first data frame, and the second pilot symbol sequence comprises the Q pilot symbols in the second data frame.

14. The method according to claim 13, wherein the first target polynomial is the same as the second target polynomial, and any two of the first seed, the second seed, the third seed, and the fourth seed are different from each other.

15. The method according to claim 13, wherein the first target polynomial is different from the second target polynomial.

16. The method according to any one of claims 1 to 15, wherein in a polarization direction, a quantity of consecutive identical pilot symbols in the data frame is less than or equal to 4.

17. The method according to any one of claims 1 to 16, wherein in a polarization direction, a modulation format of the symbol in the data frame is 16QAM, and $A=-1, 1, -3, 3, -\sqrt{5}$, or $\sqrt{5}$.

18. The method according to any one of claims 1 to 17, wherein in a polarization direction, the modulation format of the symbol in the data frame is QPSK, and A=-1 or 1.

19. A data transmission method, comprising:

generating data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2; and sending the data frames.

20. The method according to claim 19, wherein in a polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$, or

in a polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$; or

in a polarization direction, in the data frame, the quantity of pilot symbols that are -A-Aj is $\lfloor Q/4 \rfloor +1$, the quantity of pilot symbols that are -A+Aj is $Q/2-\lfloor Q/4 \rfloor -1$, the quantity of pilot symbols that are A-Aj is $Q/2-\lfloor Q/4 \rfloor -1$, and the quantity of pilot symbols that are A+Aj is $\lfloor Q/4 \rfloor +1$; or

in a polarization direction, in the data frame, the quantity of pilot symbols that are -A-Aj is $Q/2-\lfloor Q/4 \rfloor -1$, the quantity of pilot symbols that are -A+Aj is $\lfloor Q/4 \rfloor +1$, the quantity of pilot symbols that are A-Aj is $\lfloor Q/4 \rfloor +1$, and the quantity of pilot symbols that are A+Aj is $Q/2-\lfloor Q/4 \rfloor -1$, wherein

$\lfloor a \rfloor$ represents rounding down a positive real number a to the nearest integer.

21. The method according to claim 19 or 20, wherein N=6144, M=64, Q=96, the target polynomial is x^9+x^8+x^5+x^4+1, a seed in a first polarization direction is 0x175, a seed in a second polarization direction is 0x03D, and the first polarization direction and the second polarization direction are orthogonal to each other.

22. The method according to claim 21, wherein 96 pilot symbols in the first polarization direction are sequentially:
A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj,
-A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj,
A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj,

-A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj; and

96 pilot symbols in the second polarization direction are sequentially:

A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, - A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, - A+Aj, -A-Aj, A-Aj, -A+Aj, -A+Aj, -A+Aj, -A-Aj, A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

23. The method according to claim 20, wherein in a first polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$; and in a second polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is [Q/4], and the quantity of pilot symbols that are A+Aj is $Q/2-\lfloor Q/4 \rfloor$;

or

in a first polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$; and in a second polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is $\lfloor Q/4 \rfloor+1$, and the quantity of pilot symbols that are A+Aj is $Q/2-\lfloor Q/4 \rfloor-1$, wherein

$\lfloor a \rfloor$ represents rounding down the positive real number a to the nearest integer, and the first polarization direction and the second polarization direction are orthogonal to each other.

24. The method according to claim 19, 20, or 23, wherein N=6144, M=64, and Q=96;

96 pilot symbols in the first polarization direction are sequentially:
A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A- Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj; and
96 pilot symbols in the second polarization direction are sequentially:
A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, A-Aj, -A-Aj, A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A- Aj, A+Aj, A+Aj, -A-Aj, -A-Aj, and A+Aj, wherein
the first polarization direction and the second polarization direction are orthogonal to each other.

25. The method according to claim 19, 20, or 23, wherein N=6144, M=64, and Q=96;

96 pilot symbols in the first polarization direction are sequentially:
-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A- Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A- Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj,

A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj; and

96 pilot symbols in the second polarization direction are sequentially:

A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj, wherein

the first polarization direction and the second polarization direction are orthogonal to each other.

26. The method according to any one of claims 19 to 25, wherein a quantity of data frames is W, W is an integer greater than 1, and the W data frames are carried in a plurality of optical signals for transmission.

27. The method according to claim 26, wherein the W data frames are respectively carried in W optical signals; and

any two of the W optical signals have different wavelengths;
or
all of the W optical signals have a same wavelength, and the W optical signals are respectively transmitted through W optical fibers.

28. The method according to claim 26 or 27, wherein the W data frames comprise a first data frame and a second data frame, and the first polarization direction and the second polarization direction are orthogonal to each other;

in the first polarization direction, Q pilot symbols in the first data frame are generated by using a first target polynomial and a first seed; and in the second polarization direction, the Q pilot symbols in the first data frame are generated by using the first target polynomial and a second seed; and
in the first polarization direction, Q pilot symbols in the second data frame are generated by using a second target polynomial and a third seed; and in the second polarization direction, the Q pilot symbols in the second data frame are generated by using the second target polynomial and a fourth seed.

29. The method according to claim 28, wherein a first pilot symbol sequence in the first data frame is the same as a second pilot symbol sequence in the second data frame, the first pilot symbol sequence comprises the Q pilot symbols in the first data frame, and the second pilot symbol sequence comprises the Q pilot symbols in the second data frame.

30. The method according to claim 29, wherein the first target polynomial is the same as the second target polynomial, the first seed is the same as the third seed, the second seed is the same as the fourth seed, the first seed is different from the second seed, and the third seed is different from the fourth seed.

31. The method according to claim 28, wherein a first pilot symbol sequence in the first data frame is different from a second pilot symbol sequence in the second data frame, the first pilot symbol sequence comprises the Q pilot symbols in the first data frame, and the second pilot symbol sequence comprises the Q pilot symbols in the second data frame.

32. The method according to claim 31, wherein the first target polynomial is the same as the second target polynomial, and any two of the first seed, the second seed, the third seed, and the fourth seed are different from each other.

33. The method according to claim 31, wherein the first target polynomial is different from the second target polynomial.

34. The method according to any one of claims 19 to 33, wherein in a polarization direction, a quantity of consecutive identical pilot symbols in the data frame is less than or equal to 4.

35. The method according to any one of claims 19 to 34, wherein in a polarization direction, a modulation format of the symbol in the data frame is 16QAM, and $A = -1, 1, -3, 3, -\sqrt{5}$, or $\sqrt{5}$.

36. The method according to any one of claims 19 to 35, wherein in a polarization direction, the modulation format of the symbol in the data frame is QPSK, and A=-1 or 1.

37. A data transmission method, comprising:

receiving data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8; and processing the data frames.

38. A data transmission method, comprising:

receiving data frames, wherein in one polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2; and processing the data frames.

39. A data transmission apparatus, comprising a processing unit and a sending unit, wherein

the processing unit is configured to generate data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8; and the sending unit is configured to send the data frames.

40. The data transmission apparatus according to claim 39, wherein the target polynomial is one of the following:

$$x^9+x^4+x^3+x+1;$$

$$x^9+x^5+x^4+x+1;$$

$$x^9+x^8+x^5+x^4+1;$$

$$x^9+x^8+x^6+x^5+1;$$

$$x^{10}+x^4+x^3+x+1;$$

$$x^{10}+x^5+x^2+x+1;$$

$$x^{10}+x^8+x^5+x+1;$$

$$x^{10}+x^9+x^4+x+1;$$

$$x^{10}+x^9+x^5+x^2+1;$$

$$x^{10}+x^9+x^6+x+1;$$

$$x^{10}+x^9+x^7+x^6+1;$$

$$x^{10}+x^9+x^8+x^5+1;$$

$$x^{10}+x^8+x^6+x^5+x^3+x+1;$$

$$x^{10}+x^8+x^7+x^3+x^2+x+1;$$

$$x^{10}+x^8+x^7+x^6+x^2+x+1;$$

$$x^{10}+x^9+x^7+x^5+x^4+x^2+1;$$

$$x^{10}+x^9+x^8+x^4+x^3+x^2+1;$$

or

$$x^{10}+x^9+x^8+x^7+x^3+x^2+1.$$

41. The data transmission apparatus according to claim 39 or 40, wherein each pilot symbol is at a start location of M consecutive symbols in which the pilot symbol is located.

42. The data transmission apparatus according to any one of claims 39 to 41, wherein a sequence comprising Q pilot symbols in a first polarization direction is different from a sequence comprising Q pilot symbols in a second polarization direction, and the first polarization direction and the second polarization direction are orthogonal to each other.

43. The data transmission apparatus according to any one of claims 39 to 42, wherein N=6144, M=64, Q=96, and a correspondence between the target polynomial, a seed in the first polarization direction, and a seed in the second polarization direction is one of the following:

the target polynomial: $x^9+x^4+x^3+x+1$, the seed in the first polarization direction: 0x002, and the seed in the second polarization direction: 0x115;
the target polynomial: $x^9+x^4+x^3+x+1$, the seed in the first polarization direction: 0x002, and the seed in the second polarization direction: 0x02B;
the target polynomial: $x^9+x^4+x^3+x+1$, the seed in the first polarization direction: 0x049, and the seed in the second polarization direction: 0x115;
the target polynomial: $x^9+x^4+x^3+x+1$, the seed in the first polarization direction: 0x049, and the seed in the second polarization direction: 0x02B;
the target polynomial: $x^9+x^4+x^3+x+1$, the seed in the first polarization direction: 0x115, and the seed in the second polarization direction: 0x08D;
the target polynomial: $x^9+x^4+x^3+x+1$, the seed in the first polarization direction: 0x08D, and the seed in the second polarization direction: 0x02B;
the target polynomial: $x^9+x^5+x^4+x+1$, the seed in the first polarization direction: 0x098, and the seed in the second polarization direction: 0x0FE;
the target polynomial: $x^9+x^5+x^4+x+1$, the seed in the first polarization direction: 0x098, and the seed in the second polarization direction: 0x0BF;
the target polynomial: $x^9+x^5+x^4+x+1$, the seed in the first polarization direction: 0x098, and the seed in the second polarization direction: 0x17F;
the target polynomial: $x^9+x^5+x^4+x+1$, the seed in the first polarization direction: 0x14C, and the seed in the second polarization direction: 0x0FE;
the target polynomial: $x^9+x^5+x^4+x+1$, the seed in the first polarization direction: 0x14C, and the seed in the second polarization direction: 0x0BF;
the target polynomial: $x^9+x^5+x^4+x+1$, the seed in the first polarization direction: 0x14C, and the seed in the second polarization direction: 0x17F;
the target polynomial: $x^9+x^5+x^4+x+1$, the seed in the first polarization direction: 0x0A6, and the seed in the second polarization direction: 0x0FE;

the target polynomial: $x^9+x^5+x^4+x+1$, the seed in the first polarization direction: 0x0A6, and the seed in the second polarization direction: 0x0BF;

the target polynomial: $x^9+x^5+x^4+x+1$, the seed in the first polarization direction: 0x0A6, and the seed in the second polarization direction: 0x17F;

the target polynomial: $x^9+x^8+x^5+x^4+1$, the seed in the first polarization direction: 0x1D4, and the seed in the second polarization direction: 0x11E;

the target polynomial: $x^9+x^8+x^5+x^4+1$, the seed in the first polarization direction: 0x1D4, and the seed in the second polarization direction: 0x03D;

the target polynomial: $x^9+x^8+x^5+x^4+1$, the seed in the first polarization direction: 0x1D4, and the seed in the second polarization direction: 0x08F;

the target polynomial: $x^9+x^8+x^5+x^4+1$, the seed in the first polarization direction: 0x0EA, and the seed in the second polarization direction: 0x11E;

the target polynomial: $x^9+x^8+x^5+x^4+1$, the seed in the first polarization direction: 0x0EA, and the seed in the second polarization direction: 0x03D;

the target polynomial: $x^9+x^8+x^5+x^4+1$, the seed in the first polarization direction: 0x0EA, and the seed in the second polarization direction: 0x08F;

the target polynomial: $x^9+x^8+x^5+x^4+1$, the seed in the first polarization direction: 0x11E, and the seed in the second polarization direction: 0x175;

the target polynomial: $x^9+x^8+x^5+x^4+1$, the seed in the first polarization direction: 0x175, and the seed in the second polarization direction: 0x03D;

the target polynomial: $x^9+x^8+x^5+x^4+1$, the seed in the first polarization direction: 0x175, and the seed in the second polarization direction: 0x08F;

the target polynomial: $x^9+x^8+x^6+x^5+1$, the seed in the first polarization direction: 0x16A, and the seed in the second polarization direction: 0x1E1;

the target polynomial: $x^9+x^8+x^6+x^5+1$, the seed in the first polarization direction: 0x16A, and the seed in the second polarization direction: 0x1C3;

the target polynomial: $x^9+x^8+x^6+x^5+1$, the seed in the first polarization direction: 0x1E1, and the seed in the second polarization direction: 0x069;

the target polynomial: $x^9+x^8+x^6+x^5+1$, the seed in the first polarization direction: 0x1E1, and the seed in the second polarization direction: 0x113;

the target polynomial: $x^9+x^8+x^6+x^5+1$, the seed in the first polarization direction: 0x069, and the seed in the second polarization direction: 0x1C3;

the target polynomial: $x^9+x^8+x^6+x^5+1$, the seed in the first polarization direction: 0x1C3, and the seed in the second polarization direction: 0x113;

the target polynomial: $x^{10}+x^4+x^3+x+1$, the seed in the first polarization direction: 0x0E6, and the seed in the second polarization direction: 0x36E;

the target polynomial: $x^{10}+x^5+x^2+x+1$, the seed in the first polarization direction: 0x3DC, and the seed in the second polarization direction: 0x36A;

the target polynomial: $x^{10}+x^5+x^2+x+1$, the seed in the first polarization direction: 0x36A, and the seed in the second polarization direction: 0x35E;

the target polynomial: $x^{10}+x^5+x^2+x+1$, the seed in the first polarization direction: 0x36A, and the seed in the second polarization direction: 0x1AF;

the target polynomial: $x^{10}+x^8+x^5+x+1$, the seed in the first polarization direction: 0x1FD, and the seed in the second polarization direction: 0x3A7;

the target polynomial: $x^{10}+x^9+x^4+x+1$, the seed in the first polarization direction: 0x12A, and the seed in the second polarization direction: 0x039;

the target polynomial: $x^{10}+x^9+x^4+x+1$, the seed in the first polarization direction: 0x12A, and the seed in the second polarization direction: 0x107;

the target polynomial: $x^{10}+x^9+x^4+x+1$, the seed in the first polarization direction: 0x039, and the seed in the second polarization direction: 0x295;

the target polynomial: $x^{10}+x^9+x^4+x+1$, the seed in the first polarization direction: 0x295, and the seed in the second polarization direction: 0x107;

the target polynomial: $x^{10}+x^9+x^5+x^2+1$, the seed in the first polarization direction: 0x26A, and the seed in the second polarization direction: 0x03A;

the target polynomial: $x^{10}+x^9+x^6+x+1$, the seed in the first polarization direction: 0x1A2, and the seed in the second polarization direction: 0x379;

the target polynomial: $x^{10}+x^9+x^6+x+1$, the seed in the first polarization direction: 0x1A2, and the seed in the second polarization direction: 0x3EF;

the target polynomial: $x^{10}+x^9+x^6+x+1$, the seed in the first polarization direction: 0x2D1, and the seed in the second polarization direction: 0x379;

the target polynomial: $x^{10}+x^9+x^6+x+1$, the seed in the first polarization direction: 0x2D1, and the seed in the second polarization direction: 0x3EF;

the target polynomial: $x^{10}+x^9+x^7+x^6+1$, the seed in the first polarization direction: 0x3CC, and the seed in the second polarization direction: 0x1E2;

the target polynomial: $x^{10}+x^9+x^8+x^5+1$, the seed in the first polarization direction: 0x170, and the seed in the second polarization direction: 0x14D;

the target polynomial: $x^{10}+x^9+x^8+x^5+1$, the seed in the first polarization direction: 0x0B8, and the seed in the second polarization direction: 0x14D;

the target polynomial: $x^{10}+x^9+x^8+x^5+1$, the seed in the first polarization direction: 0x299, and the seed in the second polarization direction: 0x14D;

the target polynomial: $x^{10}+x^8+x^6+x^5+x^3+x+1$, the seed in the first polarization direction: 0x354, and the seed in the second polarization direction: 0x2AD;

the target polynomial: $x^{10}+x^8+x^6+x^5+x^3+x+1$, the seed in the first polarization direction: 0x17C, and the seed in the second polarization direction: 0x2AD;

the target polynomial: $x^{10}+x^8+x^6+x^5+x^3+x+1$, the seed in the first polarization direction: 0x1AA, and the seed in the second polarization direction: 0x2AD;

the target polynomial: $x^{10}+x^8+x^6+x^5+x^3+x+1$, the seed in the first polarization direction: 0x06A, and the seed in the second polarization direction: 0x2AD;

the target polynomial: $x^{10}+x^8+x^6+x^5+x^3+x+1$, the seed in the first polarization direction: 0x3E6, and the seed in the second polarization direction: 0x2AD;

the target polynomial: $x^{10}+x^8+x^6+x^5+x^3+x+1$, the seed in the first polarization direction: 0x2A9, and the seed in the second polarization direction: 0x2AD;

the target polynomial: $x^{10}+x^8+x^6+x^5+x^3+x+1$, the seed in the first polarization direction: 0x2F9, and the seed in the second polarization direction: 0x2AD;

the target polynomial: $x^{10}+x^8+x^6+x^5+x^3+x+1$, the seed in the first polarization direction: 0x0D5, and the seed in the second polarization direction: 0x2AD;

the target polynomial: $x^{10}+x^8+x^6+x^5+x^3+x+1$, the seed in the first polarization direction: 0x2AD, and the seed in the second polarization direction: 0x1F3;

the target polynomial: $x^{10}+x^8+x^6+x^5+x^3+x+1$, the seed in the first polarization direction: 0x2AD, and the seed in the second polarization direction: 0x14B;

the target polynomial: $x^{10}+x^8+x^6+x^5+x^3+x+1$, the seed in the first polarization direction: 0x2AD, and the seed in the second polarization direction: 0x297;

the target polynomial: $x^{10}+x^8+x^6+x^5+x^3+x+1$, the seed in the first polarization direction: 0x2AD, and the seed in the second polarization direction: 0x12F;

the target polynomial: $x^{10}+x^8+x^7+x^3+x^2+x+1$, the seed in the first polarization direction: 0x320, and the seed in the second polarization direction: 0x3AC;

the target polynomial: $x^{10}+x^8+x^7+x^3+x^2+x+1$, the seed in the first polarization direction: 0x320, and the seed in the second polarization direction: 0x1D6;

the target polynomial: $x^{10}+x^8+x^7+x^3+x^2+x+1$, the seed in the first polarization direction: 0x320, and the seed in the second polarization direction: 0x075;

the target polynomial: $x^{10}+x^8+x^7+x^3+x^2+x+1$, the seed in the first polarization direction: 0x320, and the seed in the second polarization direction: 0x0ED;

the target polynomial: $x^{10}+x^8+x^7+x^3+x^2+x+1$, the seed in the first polarization direction: 0x320, and the seed in the second polarization direction: 0x0EB;

the target polynomial: $x^{10}+x^8+x^7+x^3+x^2+x+1$, the seed in the first polarization direction: 0x0D4, and the seed in the second polarization direction: 0x3AC;

the target polynomial: $x^{10}+x^8+x^7+x^3+x^2+x+1$, the seed in the first polarization direction: 0x0D4, and the seed in the second polarization direction: 0x1D6;

the target polynomial: $x^{10}+x^8+x^7+x^3+x^2+x+1$, the seed in the first polarization direction: 0x0D4, and the seed in the second polarization direction: 0x075;

the target polynomial: $x^{10}+x^8+x^7+x^3+x^2+x+1$, the seed in the first polarization direction: 0x0D4, and the seed in the second polarization direction: 0x0EB;

the target polynomial: $x^{10}+x^8+x^7+x^3+x^2+x+1$, the seed in the first polarization direction: 0x3AC, and the seed in the second polarization direction: 0x01A;

the target polynomial: $x^{10}+x^8+x^7+x^3+x^2+x+1$, the seed in the first polarization direction: 0x01A, and the seed in the second polarization direction: 0x1D6;

the target polynomial: x^10+x^8+x^7+x^3+x^2+x+1, the seed in the first polarization direction: 0x01A, and the seed in the second polarization direction: 0x075;

the target polynomial: x^10+x^8+x^7+x^3+x^2+x+1, the seed in the first polarization direction: 0x01A, and the seed in the second polarization direction: 0x0EB;

the target polynomial: x^10+x^8+x^7+x^6+x^2+x+1, the seed in the first polarization direction: 0x1B0, and the seed in the second polarization direction: 0x3F4;

the target polynomial: x^10+x^8+x^7+x^6+x^2+x+1, the seed in the first polarization direction: 0x1B0, and the seed in the second polarization direction: 0x1FA;

the target polynomial: x^10+x^8+x^7+x^6+x^2+x+1, the seed in the first polarization direction: 0x3F4, and the seed in the second polarization direction: 0x13D;

the target polynomial: x^10+x^8+x^7+x^6+x^2+x+1, the seed in the first polarization direction: 0x1FA, and the seed in the second polarization direction: 0x13D;

the target polynomial: x^10+x^9+x^7+x^5+x^4+x^2+1, the seed in the first polarization direction: 0x35C, and the seed in the second polarization direction: 0x2EE;

the target polynomial: x^10+x^9+x^7+x^5+x^4+x^2+1, the seed in the first polarization direction: 0x0DC, and the seed in the second polarization direction: 0x2EE;

the target polynomial: x^10+x^9+x^7+x^5+x^4+x^2+1, the seed in the first polarization direction: 0x33A, and the seed in the second polarization direction: 0x2EE;

the target polynomial: x^10+x^9+x^7+x^5+x^4+x^2+1, the seed in the first polarization direction: 0x26E, and the seed in the second polarization direction: 0x2EE;

the target polynomial: x^10+x^9+x^7+x^5+x^4+x^2+1, the seed in the first polarization direction: 0x2EE, and the seed in the second polarization direction: 0x2B9;

the target polynomial: x^10+x^9+x^7+x^5+x^4+x^2+1, the seed in the first polarization direction: 0x2EE, and the seed in the second polarization direction: 0x1B9;

the target polynomial: x^10+x^9+x^7+x^5+x^4+x^2+1, the seed in the first polarization direction: 0x2EE, and the seed in the second polarization direction: 0x275;

the target polynomial: x^10+x^9+x^7+x^5+x^4+x^2+1, the seed in the first polarization direction: 0x2EE, and the seed in the second polarization direction: 0x39D;

the target polynomial: x^10+x^9+x^7+x^5+x^4+x^2+1, the seed in the first polarization direction: 0x2EE, and the seed in the second polarization direction: 0x173;

the target polynomial: x^10+x^9+x^7+x^5+x^4+x^2+1, the seed in the first polarization direction: 0x2EE, and the seed in the second polarization direction: 0x0EB;

the target polynomial: x^10+x^9+x^7+x^5+x^4+x^2+1, the seed in the first polarization direction: 0x2EE, and the seed in the second polarization direction: 0x39B;

the target polynomial: x^10+x^9+x^7+x^5+x^4+x^2+1, the seed in the first polarization direction: 0x2EE, and the seed in the second polarization direction: 0x337;

the target polynomial: x^10+x^9+x^8+x^4+x^3+x^2+1, the seed in the first polarization direction: 0x0C6, and the seed in the second polarization direction: 0x157;

the target polynomial: x^10+x^9+x^8+x^4+x^3+x^2+1, the seed in the first polarization direction: 0x0C6, and the seed in the second polarization direction: 0x2D7;

the target polynomial: x^10+x^9+x^8+x^4+x^3+x^2+1, the seed in the first polarization direction: 0x263, and the seed in the second polarization direction: 0x157;

the target polynomial: x^10+x^9+x^8+x^4+x^3+x^2+1, the seed in the first polarization direction: 0x263, and the seed in the second polarization direction: 0x2D7;

the target polynomial: x^10+x^9+x^8+x^7+x^3+x^2+1, the seed in the first polarization direction: 0x350, and the seed in the second polarization direction: 0x130;

the target polynomial: x^10+x^9+x^8+x^7+x^3+x^2+1, the seed in the first polarization direction: 0x350, and the seed in the second polarization direction: 0x298;

the target polynomial: x^10+x^9+x^8+x^7+x^3+x^2+1, the seed in the first polarization direction: 0x350, and the seed in the second polarization direction: 0x34C;

the target polynomial: x^10+x^9+x^8+x^7+x^3+x^2+1, the seed in the first polarization direction: 0x350, and the seed in the second polarization direction: 0x261;

the target polynomial: x^10+x^9+x^8+x^7+x^3+x^2+1, the seed in the first polarization direction: 0x350, and the seed in the second polarization direction: 0x01F;

the target polynomial: x^10+x^9+x^8+x^7+x^3+x^2+1, the seed in the first polarization direction: 0x130, and the seed in the second polarization direction: 0x014;

the target polynomial: x^10+x^9+x^8+x^7+x^3+x^2+1, the seed in the first polarization direction: 0x130, and the seed in the second polarization direction: 0x282;

the target polynomial: x^10+x^9+x^8+x^7+x^3+x^2+1, the seed in the first polarization direction: 0x298, and the seed in the second polarization direction: 0x014;

the target polynomial: x^10+x^9+x^8+x^7+x^3+x^2+1, the seed in the first polarization direction: 0x298, and the seed in the second polarization direction: 0x282;

the target polynomial: x^10+x^9+x^8+x^7+x^3+x^2+1, the seed in the first polarization direction: 0x014, and the seed in the second polarization direction: 0x34C;

the target polynomial: x^10+x^9+x^8+x^7+x^3+x^2+1, the seed in the first polarization direction: 0x014, and the seed in the second polarization direction: 0x261;

the target polynomial: x^10+x^9+x^8+x^7+x^3+x^2+1, the seed in the first polarization direction: 0x34C, and the seed in the second polarization direction: 0x282; or

the target polynomial: x^10+x^9+x^8+x^7+x^3+x^2+1, the seed in the first polarization direction: 0x282, and the seed in the second polarization direction: 0x261.

44. The data transmission apparatus according to any one of claims 39 to 43, wherein N=6144, M=64, Q=96, the target polynomial is x^9+x^4+x^3+x+1, the seed in the first polarization direction is 0x049, the seed in the second polarization direction is 0x115, and the first polarization direction and the second polarization direction are orthogonal to each other;

96 pilot symbols in the first polarization direction are sequentially:
A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj; and
96 pilot symbols in the second polarization direction are sequentially:
A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A-Aj, A+Aj, A+Aj, -A-Aj, -A-Aj, and A+Aj.

45. The data transmission apparatus according to any one of claims 39 to 43, wherein N=6144, M=64, Q=96, the target polynomial is x^10+x^9+x^4+x+1, the seed in the first polarization direction is 0x12A, the seed in the second polarization direction is 0x039, and the first polarization direction and the second polarization direction are orthogonal to each other;

96 pilot symbols in the first polarization direction are sequentially:
-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, -A-Aj, A+Aj, A-Aj, A- Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj; and
96 pilot symbols in the second polarization direction are sequentially:
A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A-Aj, A-Aj, -A+Aj, A+Aj, A-Aj, A+Aj, -A-Aj, -A-Aj, A-Aj, -A-Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj.

46. The data transmission apparatus according to any one of claims 39 to 45, wherein a quantity of data frames is W, W is an integer greater than 1, and the W data frames are carried in a plurality of optical signals for transmission.

47. The data transmission apparatus according to claim 46, wherein the W data frames are respectively carried in W optical signals; and

any two of the W optical signals have different wavelengths;
or
all of the W optical signals have a same wavelength, and the W optical signals are respectively transmitted through W optical fibers.

48. The data transmission apparatus according to claim 46 or 47, wherein the W data frames comprise a first data frame and a second data frame, and the first polarization direction and the second polarization direction are orthogonal to each other;

in the first polarization direction, Q pilot symbols in the first data frame are generated by using a first target polynomial and a first seed; and in the second polarization direction, the Q pilot symbols in the first data frame are generated by using the first target polynomial and a second seed; and
in the first polarization direction, Q pilot symbols in the second data frame are generated by using a second target polynomial and a third seed; and in the second polarization direction, the Q pilot symbols in the second data frame are generated by using the second target polynomial and a fourth seed.

49. The data transmission apparatus according to claim 48, wherein a first pilot symbol sequence in the first data frame is the same as a second pilot symbol sequence in the second data frame, the first pilot symbol sequence comprises the Q pilot symbols in the first data frame, and the second pilot symbol sequence comprises the Q pilot symbols in the second data frame.

50. The data transmission apparatus according to claim 49, wherein the first target polynomial is the same as the second target polynomial, the first seed is the same as the third seed, the second seed is the same as the fourth seed, the first seed is different from the second seed, and the third seed is different from the fourth seed.

51. The data transmission apparatus according to claim 48, wherein a first pilot symbol sequence in the first data frame is different from a second pilot symbol sequence in the second data frame, the first pilot symbol sequence comprises the Q pilot symbols in the first data frame, and the second pilot symbol sequence comprises the Q pilot symbols in the second data frame.

52. The data transmission apparatus according to claim 51, wherein the first target polynomial is the same as the second target polynomial, and any two of the first seed, the second seed, the third seed, and the fourth seed are different from each other.

53. The data transmission apparatus according to claim 51, wherein the first target polynomial is different from the second target polynomial.

54. The data transmission apparatus according to any one of claims 39 to 53, wherein in a polarization direction, a quantity of consecutive identical pilot symbols in the data frame is less than or equal to 4.

55. The data transmission apparatus according to any one of claims 39 to 54, wherein in a polarization direction, a modulation format of the symbol in the data frame is 16QAM, and $A=-1, 1, -3, 3, -\sqrt{5}$, or $\sqrt{5}$.

56. The data transmission apparatus according to any one of claims 39 to 55, wherein in a polarization direction, the modulation format of the symbol in the data frame is QPSK, and A=-1 or 1.

57. A data transmission apparatus, comprising a processing unit and a sending unit, wherein

the processing unit is configured to generate data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2; and
the sending unit is configured to send the data frames.

**58.** The data transmission apparatus according to claim 57, wherein in a polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$;

or

in a polarization direction, in the data frame, the quantity of pilot symbols that are -A-Aj is $Q/2-\lfloor Q/4 \rfloor$, the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$;

or

in a polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$;

or

in a polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the quantity of pilot symbols that are A-Aj is [Q/4]+1, and the quantity of pilot symbols that are A+Aj $Q/2-\lfloor Q/4 \rfloor-1$, wherein

$\lfloor a \rfloor$ represents rounding down a positive real number a to the nearest integer.

**59.** The data transmission apparatus according to claim 57 or 58, wherein N=6144, M=64, Q=96, the target polynomial is x^9+x^8+x^5+x^4+1, a seed in a first polarization direction is 0x175, a seed in a second polarization direction is 0x03D, and the first polarization direction and the second polarization direction are orthogonal to each other.

**60.** The data transmission apparatus according to claim 59, wherein 96 pilot symbols in the first polarization direction are sequentially:
A-Aj, A-Aj, A+Aj, A-Aj, A-Aj, -A-Aj, A+Aj, -A+Aj, -A+Aj, -A+Aj, -A-Aj, -A+Aj, A+Aj, -A+Aj, -A-Aj, A-Aj, -A+Aj, A-Aj, A-Aj, -A-Aj, A-Aj, A-Aj, A+Aj, -A+Aj, -A+Aj, -A-Aj, A+Aj, A+Aj, A+Aj, -A-Aj, -A+Aj, A-Aj, A+Aj, -A+Aj, -A-Aj, -A-Aj, A-Aj, A+Aj, A-Aj, A+Aj, A+Aj, -A+Aj, -A+Aj, -A-Aj, -A-Aj, -A-Aj, A+Aj, -A-Aj, A+Aj, -A-Aj, A-Aj, -A-Aj, A+Aj, -A-Aj, A-Aj, A+Aj, -A-Aj, -A-Aj, A-Aj, -A+Aj, A-Aj, -A+Aj, A+Aj, A-Aj, A-Aj, -A+Aj, A+Aj, -A-Aj, -A+Aj, -A-Aj, A+Aj, A+Aj, -A-Aj, A+Aj, -A+Aj, A-Aj, -A+Aj, A+Aj, -A+Aj, -A+Aj, -A+Aj, A+Aj, A-Aj, A+Aj, -A+Aj, A-Aj, -A-Aj, -A-Aj, A+Aj, -A+Aj, -A-Aj, A-Aj, A-Aj, -A+Aj, A-Aj, and -A-Aj; and
96 pilot symbols in the second polarization direction are sequentially:
A-Aj, A+Aj, A+Aj, -A-Aj, -A+Aj, -A+Aj, -A-Aj, -A+Aj, -A-Aj, A-Aj, -A-Aj, A-Aj, A+Aj, -A-Aj, A+Aj, -A+Aj, -A+Aj, A-Aj, A+Aj, -A+Aj, A+Aj, A+Aj, A-Aj, A+Aj, -A-Aj, -A+Aj, A-Aj, -A-Aj, A-Aj, -A-Aj, -A-Aj, -A-Aj, -A+Aj, A+Aj, A-Aj, -A-Aj, -A+Aj, -A+Aj, -A-Aj, A-Aj, A+Aj, A-Aj, -A-Aj, -A-Aj, -A+Aj, -A+Aj, A-Aj, A-Aj, -A+Aj, A-Aj, A+Aj, A+Aj, -A-Aj, A-Aj, A-Aj, -A-Aj, -A+Aj, A-Aj, -A-Aj, -A+Aj, A+Aj, -A-Aj, -A-Aj, A+Aj, -A+Aj, A+Aj, -A+Aj, A-Aj, -A+Aj, -A-Aj, A-Aj, -A+Aj, -A+Aj, -A+Aj, -A-Aj, A-Aj, -A-Aj, -A+Aj, -A-Aj, -A-Aj, A+Aj, A+Aj, A+Aj, A+Aj, A-Aj, A-Aj, A+Aj, A+Aj, A-Aj, -A+Aj, A+Aj, -A-Aj, A-Aj, A+Aj, A+Aj, and A+Aj.

**61.** The data transmission apparatus according to claim 58, wherein in a first polarization direction, in the data frame, the quantity of pilot symbols that are -A-Aj is $\lfloor Q/4 \rfloor$, the quantity of pilot symbols that are -A+Aj is $Q/2-\lfloor Q/4 \rfloor$, the quantity of pilot symbols that are A-Aj is $Q/2-\lfloor Q/4 \rfloor$, and the quantity of pilot symbols that are A+Aj is $\lfloor Q/4 \rfloor$; and in a second polarization direction, in the data frame, the quantity of pilot symbols that are -A-Aj is Q/2-[Q/4], the quantity of pilot symbols that are -A+Aj is $\lfloor Q/4 \rfloor$, the quantity of pilot symbols that are A-Aj is $\lfloor Q/4 \rfloor$, and the quantity of pilot symbols that are A+Aj is $Q/2-\lfloor Q/4 \rfloor$;

or

in a first polarization direction, in the data frame, the quantity of pilot symbols that are -A-Aj is $\lfloor Q/4 \rfloor+1$, the quantity of pilot symbols that are -A+Aj is $Q/2-\lfloor Q/4 \rfloor-1$, the quantity of pilot symbols that are A-Aj is $Q/2-\lfloor Q/4 \rfloor-1$, and the quantity of pilot symbols that are A+Aj is $\lfloor Q/4 \rfloor+1$; and in a second polarization direction, in the data frame, the quantity of pilot symbols that are -A-Aj is $Q/2-\lfloor Q/4 \rfloor-1$, the quantity of pilot symbols that are -A+Aj is $\lfloor Q/4 \rfloor+1$, the

quantity of pilot symbols that are A-Aj is $\lfloor Q/4 \rfloor + 1$, and the quantity of pilot symbols that are A+Aj is $Q/2 - \lfloor Q/4 \rfloor - 1$, wherein

$\lfloor a \rfloor$ represents rounding down the positive real number a to the nearest integer, and the first polarization direction and the second polarization direction are orthogonal to each other.

62. The data transmission apparatus according to claim 57, 58, or 61, wherein N=6144, M=64, and Q=96;

96 pilot symbols in the first polarization direction are sequentially:
A-Aj, -A+Aj, -A-Aj, A-Aj, -A-Aj, -A-Aj, -A-Aj, A+Aj, -A-Aj, -A+Aj, -A+Aj, A-Aj, -A+Aj, A+Aj, -A+Aj, A+Aj, - A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, -A-Aj, -A+Aj, -A-Aj, -A+Aj, A+Aj, -A+Aj, -A-Aj, -A-Aj, A+Aj, A+Aj, A+Aj, -A-Aj, A-Aj, -A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, -A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, and A+Aj; and
96 pilot symbols in the second polarization direction are sequentially:
A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, -A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, - A+Aj, A+Aj, -A-Aj, -A-Aj, -A-Aj, -A-Aj, A-Aj, -A-Aj, -A+Aj, A-Aj, A+Aj, A-Aj, A-Aj, -A+Aj, -A+Aj, A+Aj, -A-Aj, A+Aj, A-Aj, -A+Aj, A-Aj, -A-Aj, A+Aj, A+Aj, -A-Aj, -A-Aj, and A+Aj, wherein
the first polarization direction and the second polarization direction are orthogonal to each other.

63. The data transmission apparatus according to claim 57, 58, or 61, wherein N=6144, M=64, and Q=96;

96 pilot symbols in the first polarization direction are sequentially:
-A+Aj, -A+Aj, -A+Aj, -A-Aj, A-Aj, A+Aj, -A+Aj, A-Aj, A+Aj, -A-Aj, A-Aj, -A+Aj, -A+Aj, -A+Aj, A+Aj, -A+Aj, - A-Aj, -A-Aj, A-Aj, -A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, - A+Aj, A+Aj, A-Aj, A+Aj, -A+Aj, A+Aj, -A+Aj, -A-Aj, A+Aj, -A+Aj, A-Aj, -A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, -A-Aj, A-Aj, A+Aj, A+Aj, -A-Aj, A+Aj, A+Aj, A+Aj, -A-Aj, A+Aj, -A+Aj, A+Aj, -A-Aj, -A-Aj, A+Aj, -A-Aj, - A+Aj, -A+Aj, A-Aj, -A-Aj, -A+Aj, A-Aj, A+Aj, -A+Aj, -A-Aj, and -A+Aj; and
96 pilot symbols in the second polarization direction are sequentially:
A-Aj, -A+Aj, A+Aj, -A-Aj, -A-Aj, -A+Aj, -A-Aj, -A+Aj, A-Aj, -A-Aj, A+Aj, -A-Aj, A+Aj, A-Aj, -A+Aj, -A-Aj, A-Aj, -A+Aj, -A-Aj, -A+Aj, A+Aj, -A-Aj, A+Aj, -A+Aj, -A-Aj, A+Aj, A+Aj, A-Aj, -A-Aj, A+Aj, -A-Aj, -A-Aj, -A+Aj, A-Aj, -A+Aj, A-Aj, A+Aj, -A+Aj, A+Aj, A-Aj, A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A- Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, and A+Aj, wherein
the first polarization direction and the second polarization direction are orthogonal to each other.

64. The data transmission apparatus according to any one of claims 57 to 63, wherein a quantity of data frames is W, W is an integer greater than 1, and the W data frames are carried in a plurality of optical signals for transmission.

65. The data transmission apparatus according to claim 64, wherein the W data frames are respectively carried in W optical signals; and

any two of the W optical signals have different wavelengths;
or
all of the W optical signals have a same wavelength, and the W optical signals are respectively transmitted through W optical fibers.

66. The data transmission apparatus according to claim 64 or 65, wherein the W data frames comprise a first data frame and a second data frame, and the first polarization direction and the second polarization direction are orthogonal to each other;

in the first polarization direction, Q pilot symbols in the first data frame are generated by using a first target polynomial and a first seed; and in the second polarization direction, the Q pilot symbols in the first data frame are generated by using the first target polynomial and a second seed; and

in the first polarization direction, Q pilot symbols in the second data frame are generated by using a second target polynomial and a third seed; and in the second polarization direction, the Q pilot symbols in the second data frame are generated by using the second target polynomial and a fourth seed.

67. The data transmission apparatus according to claim 66, wherein a first pilot symbol sequence in the first data frame is the same as a second pilot symbol sequence in the second data frame, the first pilot symbol sequence comprises the Q pilot symbols in the first data frame, and the second pilot symbol sequence comprises the Q pilot symbols in the second data frame.

68. The data transmission apparatus according to claim 67, wherein the first target polynomial is the same as the second target polynomial, the first seed is the same as the third seed, the second seed is the same as the fourth seed, the first seed is different from the second seed, and the third seed is different from the fourth seed.

69. The data transmission apparatus according to claim 66, wherein a first pilot symbol sequence in the first data frame is different from a second pilot symbol sequence in the second data frame, the first pilot symbol sequence comprises the Q pilot symbols in the first data frame, and the second pilot symbol sequence comprises the Q pilot symbols in the second data frame.

70. The data transmission apparatus according to claim 69, wherein the first target polynomial is the same as the second target polynomial, and any two of the first seed, the second seed, the third seed, and the fourth seed are different from each other.

71. The data transmission apparatus according to claim 69, wherein the first target polynomial is different from the second target polynomial.

72. The data transmission apparatus according to any one of claims 57 to 71, wherein in a polarization direction, a quantity of consecutive identical pilot symbols in the data frame is less than or equal to 4.

73. The data transmission apparatus according to any one of claims 57 to 72, wherein in a polarization direction, a modulation format of the symbol in the data frame is 16QAM, and $A = -1, 1, -3, 3, -\sqrt{5}$, or $\sqrt{5}$.

74. The data transmission apparatus according to any one of claims 57 to 72, wherein in a polarization direction, a modulation format of the symbol in the data frame is QPSK, and A=-1 or 1.

75. A data transmission apparatus, comprising a receiving unit and a processing unit, wherein

the receiving unit is configured to receive data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, a degree of the target polynomial is less than or equal to 10, and a quantity of terms of the target polynomial is greater than or equal to 2 and less than or equal to 8; and
the processing unit is configured to process the data frames.

76. A data transmission apparatus, comprising a receiving unit and a processing unit, wherein

the receiving unit is configured to receive data frames, wherein in a polarization direction, the data frame comprises N symbols, every M consecutive symbols in the N symbols comprise one pilot symbol at a fixed location and M-1 payload symbols, N=M×Q, Q is an even number, M is an integer greater than or equal to 1, Q pilot symbols are generated by using a target polynomial and a seed, each pilot symbol is one of four complex numbers: -A-Aj, -A+Aj, A-Aj, and A+Aj, A is a real number, the Q pilot symbols are direct current balanced, and a difference between every two of quantities of pilot symbols that are respectively -A-Aj, -A+Aj, A-Aj, and A+Aj in the data frame is less than or equal to 2; and
the processing unit is configured to process the data frames.

FIG. 1

FIG. 2

FIG. 3

Generate data frames 401

↓

Send the data frames 402

FIG. 4

1st pilot symbol

Q pilot symbols
Payload symbol

M–1   M–1   ...   M–1

M symbols   M symbols   M symbols

M × Q = N symbols

FIG. 5

−3+3j        3+3j        −3+3j        3+3j

I        I

−3−3j        3−3j        −3−3j        3−3j

X polarization        Y polarization

FIG. 6

Output bit    Symbol

$b_0$
$b_1$ $\Big\}$ $(2b_0-1)A+(2b_1-1)Aj$

$b_2$
$b_3$ $\Big\}$ $(2b_2-1)A+(2b_3-1)Aj$

$b_4$
$b_5$ $\Big\}$ $(2b_4-1)A+(2b_5-1)Aj$

$b_6$
$b_7$ $\Big\}$ $(2b_6-1)A+(2b_7-1)Aj$

$\vdots$

FIG. 7

Output bit    Symbol

$b_0$
$b_1$ $\Big\}$ $(2b_0-1)A+(2b_1-1)Aj$

$b_2$
$b_3$ $\Big\}$ $(2b_2-1)A+(2b_3-1)Aj$

$b_4$
$b_5$ $\Big\}$ $(2b_4-1)A+(2b_5-1)Aj$

$b_6$
$b_7$ $\Big\}$ $(2b_6-1)A+(2b_7-1)Aj$

$\vdots$

FIG. 8

■ 96 pilot symbols
▨ Payload symbol

$1^{st}$ pilot symbol

64 symbols    64 symbols     64 symbols

$96 \times 64 = 6144$ symbols

FIG. 9

EP 4 607 948 A1

An X-polarization seed is 0x049
A Y-polarization seed is 0x115

0 0 1 0 0 1 0 0 1   Output
1 0 0 0 1 0 1 0 1

Output X polarization
Output Y polarization

1 0 } A–Aj     1 0 } A–Aj
0 1 } –A+Aj    1 0 } A–Aj
0 0 } –A–Aj    1 0 } A–Aj
1 0 } A–Aj     0 0 } –A–Aj
0 0 } –A–Aj    1 0 } A–Aj
0 0 } –A–Aj    0 1 } –A+Aj

⋮               ⋮

FIG. 10

FIG. 11

FIG. 12(a)

FIG. 12(b)

FIG. 12(c)

FIG. 13(a)

FIG. 13(b)

FIG. 14

An X-polarization seed is 0x12A

A Y-polarization seed is 0x039

Output

| Output X polarization | | Output Y polarization | |
|---|---|---|---|
| 0 1 | −A+Aj | 1 0 | A−Aj |
| 0 1 | −A+Aj | 0 1 | −A+Aj |
| 0 1 | −A+Aj | 1 1 | A+Aj |
| 0 0 | −A−Aj | 0 0 | −A−Aj |
| 1 0 | A−Aj | 0 0 | −A−Aj |
| 1 1 | A+Aj | 0 1 | −A+Aj |
| ⋮ | | ⋮ | |

FIG. 15

FIG. 16(a)

FIG. 16(b)

FIG. 16(c)

FIG. 17(a)

FIG. 17(b)

(a)

(b)

FIG. 18

EP 4 607 948 A1

Seed X=0x175
Seed Y=0x03D

Output

FIG. 19

Output X polarization    Output Y polarization

$\left.\begin{array}{c}1\\0\end{array}\right\}$ A−Aj    $\left.\begin{array}{c}1\\0\end{array}\right\}$ A−Aj

$\left.\begin{array}{c}1\\0\end{array}\right\}$ A−Aj    $\left.\begin{array}{c}1\\1\end{array}\right\}$ A+Aj

$\left.\begin{array}{c}1\\1\end{array}\right\}$ A+Aj    $\left.\begin{array}{c}1\\1\end{array}\right\}$ A+Aj

$\left.\begin{array}{c}1\\0\end{array}\right\}$ A−Aj    $\left.\begin{array}{c}0\\0\end{array}\right\}$ −A−Aj

$\left.\begin{array}{c}1\\0\end{array}\right\}$ A−Aj    $\left.\begin{array}{c}0\\1\end{array}\right\}$ −A+Aj

$\left.\begin{array}{c}0\\0\end{array}\right\}$ −A−Aj    $\left.\begin{array}{c}0\\1\end{array}\right\}$ −A+Aj

FIG. 20

FIG. 21(a)

FIG. 21(b)

FIG. 21(c)

FIG. 22(a)

FIG. 22(b)

Output X polarization    Output Y polarization

An X-polarization seed is 0x0B4

A Y-polarization seed is 0x2D1

0  0  1  0  1  1  0  1  0  0   Output

1  0  1  1  0  1  0  0  0  1

$\left.\begin{matrix} 0 \\ 0 \end{matrix}\right\}-A-Aj$   $\left.\begin{matrix} 1 \\ 0 \end{matrix}\right\}A-Aj$

$\left.\begin{matrix} 1 \\ 0 \end{matrix}\right\}A-Aj$   $\left.\begin{matrix} 0 \\ 0 \end{matrix}\right\}-A-Aj$

$\left.\begin{matrix} 1 \\ 1 \end{matrix}\right\}A+Aj$   $\left.\begin{matrix} 1 \\ 0 \end{matrix}\right\}A-Aj$

$\vdots$   $\vdots$

FIG. 23

EP 4 607 948 A1

| PRBS10<br>Seed: 0x0B4 | ▶ | Map 2x96=192 bits to<br>outermost points in the<br>constellation diagram | ▶ | |
| PRBS10<br>Seed: 0x2D1 | ▶ | Map 2x96=192 bits to<br>outermost points in the<br>constellation diagram | ▶ | |

FIG. 24

Autocorrelation (complex number)

FIG. 25(a)

Cross-correlation (complex number)

FIG. 25(b)

Autocorrelation (real number)

FIG. 26(a)

Cross-correlation (real number)

FIG. 26(b)

Output X
polarization

Output Y
polarization

An X-polarization
seed is 0x128

A Y-polarization
seed is 0x12A

$0$ $1$ $0$ $0$ $1$ $0$ $1$ $0$ $0$ $0$ Output

$0$ $1$ $0$ $0$ $1$ $0$ $1$ $0$ $1$ $0$

$\left.\begin{matrix} 0 \\ 0 \end{matrix}\right\}$ $-A-Aj$  $\left.\begin{matrix} 0 \\ 1 \end{matrix}\right\}$ $-A+Aj$

$\left.\begin{matrix} 0 \\ 1 \end{matrix}\right\}$ $-A+Aj$  $\left.\begin{matrix} 0 \\ 1 \end{matrix}\right\}$ $-A+Aj$

$\left.\begin{matrix} 0 \\ 1 \end{matrix}\right\}$ $-A+Aj$  $\left.\begin{matrix} 0 \\ 1 \end{matrix}\right\}$ $-A+Aj$

$\vdots$ $\vdots$

FIG. 27

FIG. 28

FIG. 29(a)

Cross-correlation (complex number)

FIG. 29(b)

Autocorrelation (real number)

FIG. 30(a)

Cross-correlation (real number)

FIG. 30(b)

FIG. 31

FIG. 32

Data transmission
apparatus

301                  302                   303

| Processor | Memory | Transceiver |

FIG. 33

## INTERNATIONAL SEARCH REPORT

| International application No. |
| --- |
| **PCT/CN2023/116034** |

**A. CLASSIFICATION OF SUBJECT MATTER**

H04Q11/00(2006.01)i

According to International Patent Classification (IPC) or to both national classification and IPC

**B. FIELDS SEARCHED**

Minimum documentation searched (classification system followed by classification symbols)

IPC:H04Q

Documentation searched other than minimum documentation to the extent that such documents are included in the fields searched

Electronic data base consulted during the international search (name of data base and, where practicable, search terms used)

CNTXT, CNABS, DWPI, VEN, WOTXT, USTXT, EPTXT, CJFD, CNKI, IEEE: 偏振, 导频, 种子, 多项式, 符号, 光, 帧, polarization, pilot, seed, polynomial, symbol, optical, frame

**C. DOCUMENTS CONSIDERED TO BE RELEVANT**

| Category* | Citation of document, with indication, where appropriate, of the relevant passages | Relevant to claim No. |
| --- | --- | --- |
| X | CN 114978337 A (HUAWEI TECHNOLOGIES CO., LTD.) 30 August 2022 (2022-08-30) description, paragraphs [0143]-[0988], and figures 1-44 | 1-76 |
| A | CN 105553560 A (WUHAN RESEARCH INSTITUTE OF POST AND TELECOMMUNICATION) 04 May 2016 (2016-05-04) entire document | 1-76 |
| A | CN 110247712 A (NOKIA SOLUTIONS AND NETWORKS OY) 17 September 2019 (2019-09-17) entire document | 1-76 |
| A | CN 112204902 A (CABLE TELEVISION LABORATORIES, INC.) 08 January 2021 (2021-01-08) entire document | 1-76 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 October 2023** | **26 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116034**

| Patent document cited in search report | | | Publication date (day/month/year) | Patent family member(s) | | | Publication date (day/month/year) |
|---|---|---|---|---|---|---|---|
| CN | 114978337 | A | 30 August 2022 | None | | | |
| CN | 105553560 | A | 04 May 2016 | CN | 105553560 | B | 02 January 2018 |
| CN | 110247712 | A | 17 September 2019 | US | 2019280778 | A1 | 12 September 2019 |
| | | | | US | 10594406 | B2 | 17 March 2020 |
| CN | 112204902 | A | 08 January 2021 | JP | 2021520090 | A | 12 August 2021 |
| | | | | WO | 2019191730 | A1 | 03 October 2019 |
| | | | | CA | 3095153 | A1 | 03 October 2019 |
| | | | | EP | 3776921 | A1 | 17 February 2021 |
| | | | | US | 2023040543 | A1 | 09 February 2023 |
| | | | | US | 2019305854 | A1 | 03 October 2019 |
| | | | | US | 11476949 | B2 | 18 October 2022 |

Form PCT/ISA/210 (patent family annex) (July 2022)

**REFERENCES CITED IN THE DESCRIPTION**

**Patent documents cited in the description**

- CN 202211495134

- CN 202310668432